(19) Europäisches Patentamt
European Patent Office
Office européen des brevets

(11) **EP 4 554 131 A1**

(12) **EUROPEAN PATENT APPLICATION**

(43) Date of publication:
**14.05.2025 Bulletin 2025/20**

(21) Application number: **24211777.8**

(22) Date of filing: **08.11.2024**

(51) International Patent Classification (IPC):
*H04L 5/00* (2006.01)   *H04L 27/26* (2006.01)

(52) Cooperative Patent Classification (CPC):
**H04L 5/0051; H04L 5/0023; H04L 25/0224;**
**H04L 27/2613;** H04B 7/0408

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.11.2023 US 202363597247 P**

(71) Applicant: **INTEL Corporation**
**Santa Clara, CA 95054 (US)**

(72) Inventors:
• **HEWAVITHANA, Thushara**
**Chandler, 1695 (US)**
• **CHERVYAKOV, Andrey**
**Maynooth, W23 XN36 (IE)**
• **SERGEEV, Viktor**
**Lucan, Co. Dublin, K78 F8X5 (IE)**
• **MONDAL, Bishwarup**
**San Ramon, 94583 (US)**

(74) Representative: **Viering, Jentschura & Partner**
**mbB**
**Patent- und Rechtsanwälte**
**Am Brauhaus 8**
**01099 Dresden (DE)**

(54) **REMOTE UNIT (RU) AND DISTRIBUTED UNIT (DU) ALIGNMENT FOR PERFORMANCE INTEROPERABILITY**

(57) One or more computer readable media including instructions, wherein execution of the instructions by processor circuitry of a distributed unit, DU, of a disaggregated radio access network, RAN, is to cause the processor circuitry to: determine a boundary representative of a number of consecutive physical resource blocks and a number of consecutive OFDM symbols not exceeding a slot boundary; instruct the DU to send information representing the boundary to a radio unit, RU, of the disaggregated RAN; and perform a channel estimation based on a demodulation reference signal, DMRS, received from the RU via a fronthaul interface within the boundary.

Figure 2

**Description**

BACKGROUND

A DU in a disaggregated radio access network can control radio resources, such as time and frequency bands, locally in real time, and can allocate resources to one or more UEs. The DU can be a network (logical) node hosting middle and/or lower layers of the network protocol functional split. For example, in the 3GPP NG-RAN and/or O-RAN architectures, the DU can host the radio link control (RLC), medium access control (MAC), and high-physical (PHY) layers of the gNB or en-gNB. A RU can be a transmission/reception point (TRP) or other physical node that can handle radiofrequency (RF) processing functions. The RU can be a network (logical) node hosting lower layers based on a lower layer functional split. For example, in 3GPP NG-RAN and/or O-RAN architectures, the RU can host low-PHY layer functions and RF processing of the radio interface based on a lower layer functional split. The RU can be similar to 3GPP's transmission/reception point (TRP) or RRH, but may specifically include the Low-PHY layer..
.

DETAILED DESCRIPTION

The present disclosure is generally related to wireless communication, cellular networks, cloud computing, artificial intelligence (AI)/maching learning (ML) technologies, edge computing, Open RAN Alliance (O-RAN) implementations, data centers, network topologies, communication system implementations, and in particular, to RU-DU alignment for performance and interoperability.

**1. RU-DU ALIGNMENT ASPECTS**

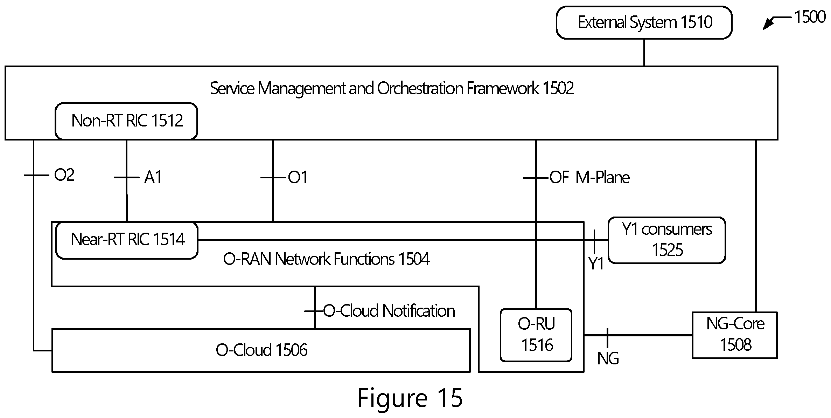

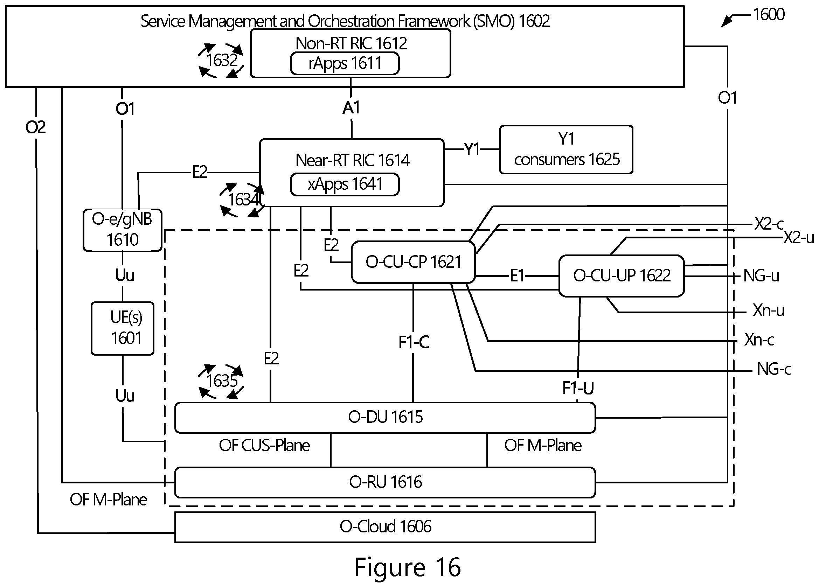

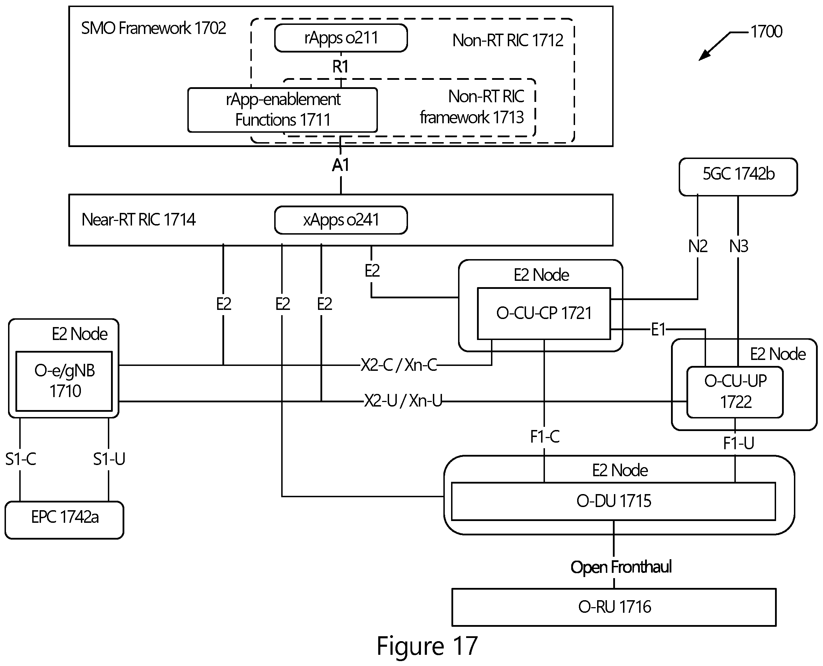

The present disclosure is related to the uplink performance improvement (ULPI) work item of O-RAN working group 4 (WG4). In particular, the present disclosure describes technologies and techniques to achieve alignment of time-frequency resource between a Radio Unit (RU) and a Distributed Unit (DU) for the purposes of channel estimation. In this case, non-port reduced demodulation reference signal (DMRS) based channel estimation occurs at the RU, followed by port reduction and sending port reduced DMRS to the DU followed by port reduced DMRS based channel estimation at the DU.
The present disclosure defines the continuity of certain properties within a continuity boundary that allows certain DU processing (continuity); defines the preservation of certain channel properties across continuity boundaries that allows certain DU processing (consistency); provides definition(s) of continuity boundary in terms of time and frequency resource; provides applicability of continuity boundaries; specifies the ability for an O-RAN RU (O-RU) (e.g., O-RU 1516, 1616, 1716 of Figures 15, 16, 17) to advertise support of one or more options of continuity boundary; specifies the signalling for an O-RAN DU (O-DU) (e.g., O-DU 1615, 1715 of Figures 16, 17) to indicate the choice of certain continuity boundaries; and specifies the signalling for an O-DU to inform timing offset (TO)/frequency offset (FO) per UE to the O-RU (optionally). The various aspects discussed herein allow for interoperability of RUs capable of DMRS based beamforming and DUs performing port reduced DMRS based channel estimation, which may provide network resource usage efficiencies and/or improve network functionality through reduced resource overhead.
In various embodiments, the continuity of certain properties within a continuity boundary allows certain DU processing (continuity). Additionally or alternatively, the preservation of certain channel properties across continuity boundaries that allows certain DU processing (consistency). With respect to (w.r.t) continuity and consistency, an O-DU may assume, for the purposes of (PUSCH-DMRS based) channel estimation, interference estimation for MIMO detection, frequency-offset, timing-offset, phase-error estimation that within a continuity boundary, resource elements (Res) are treated uniformly or smoothly interpolated based on O-RU implementation choice. An O-DU may assume consistency of long-term channel properties across continuity boundaries such as frequency-offset, timing-offset.
In various embodiments, continuity boundaries are defined in time and frequency. Here, continuity boundaries are defined in frequency (physical resource block (PRB) group) and in time (symbol group). A PRB group is a physically consecutive set of PRBs within the system bandwidth. In time, a symbol group is a consecutive set of OFDM symbols not exceeding a slot boundary.
In various embodiments, applicability of continuity boundaries are also defined. Here, a continuity boundary is applicable to both PUSCH-DMRS and PUSCH. In some examples, the same continuity boundary is applicable to all PUSCH spatial layers in a multi user (MU) group. Additionally or alternatively, the continuity boundary is applicable for DMRS based beamforming (BF) without equalization (DMRS-BF-NEQ) operation mode and for DMRS based BF with equalization (DMRS-BF-EQ) operation mode when port-reduced DMRS is sent to the O-DU (EQ in DU).
In various embodiments, O-RUs are enhanced, adapted, and/or configured to advertise support of one or more options of continuity boundary. In these embodiments, an O-RU may advertise one or multiple supported values of processing continuity boundaries.
In various embodiments, O-DUs are enhanced, adapted, and/or configured to signal or otherwise indicate the choice of certain continuity boundaries. In these embodiments, an O-DU may indicate to an O-RU dynamically (e.g., using C-plane message) an applicable processing continuity boundary. In some examples, a default processing continuity boundary may be configured by O-DU via M-plane that is applicable without dynamic (C-plane) indication. In various embodiments, O-DUs are enhanced, adapted, and/or configured to signal or otherwise inform TO/FO per UE to the O-RU (optionally).

In various embodiments, any of the aforementioned embodiments and/or any other embodiment(s) discussed herein can be combined in any manner unless explicitly stated otherwise.

## 1.1. EXAMPLE REQUIREMENTS

In some implementations, the options for continuity boundaries can be defined as $N_{PRB} \times N_{symbol}$, wherein $N_{PRB}$ is a number of PRBs in frequency, and $N_{symbol}$ is a number of symbols (numSymbol) as specified section description. If section is not a multiple of $N$ PRB (e.g., N = 1, 2, 4, and so forth), then methodology should be specified, for example, 7PRB section, N=4 → 1 PRB, 1 PRB, 1 PRB, 4 PRB continuity boundaries.

In some examples, the lower bound for numSymbol covers some or all of the DMRS symbols and data symbols based on DMRS processing in a given section. For example, a 1+1 DMRS configuration is for using channel from 2 DMRS to interpolate channel and estimate FO, and the like, and use those to process some or all of the symbols. Hence, the continuity boundary in time should covers the entire slot (e.g., all symbols).

In some implementations, the RU is expected to maintain consistency. Here, the RU should ensure consistency of UE group properties, such as TO (see e.g., section 1.2.2, infra), between continuity boundaries of the same section (UE group). Additionally or alternatively, the RU should ensure consistency of UE properties, such as FO, TO (see e.g., section 1.2.3, infra), across the entire RB/symbol span of the UE.

In some implementations, DU to RU signalling of continuity boundary choice per section description can be part of C-plane signalling of ULPI, for example, section type (ST) 5 + section extension (SE) 10 + SE "X".

In some implementations, the RU can mandatorily support 1 PRB continuity boundary. In some cases, if the RU only supports 1 option, signalling may not be needed.

In some examples, once the definition of section is clear, the above description can be updated. Additionally or alternatively, the section can be used interchangeabley with UE group (e.g., contiguous block of RBs with the same set of UEs in MU-MIMO configuration).

## 1.2. DU CONCEPTUAL CHANNEL ESTIMATE PROCESSING

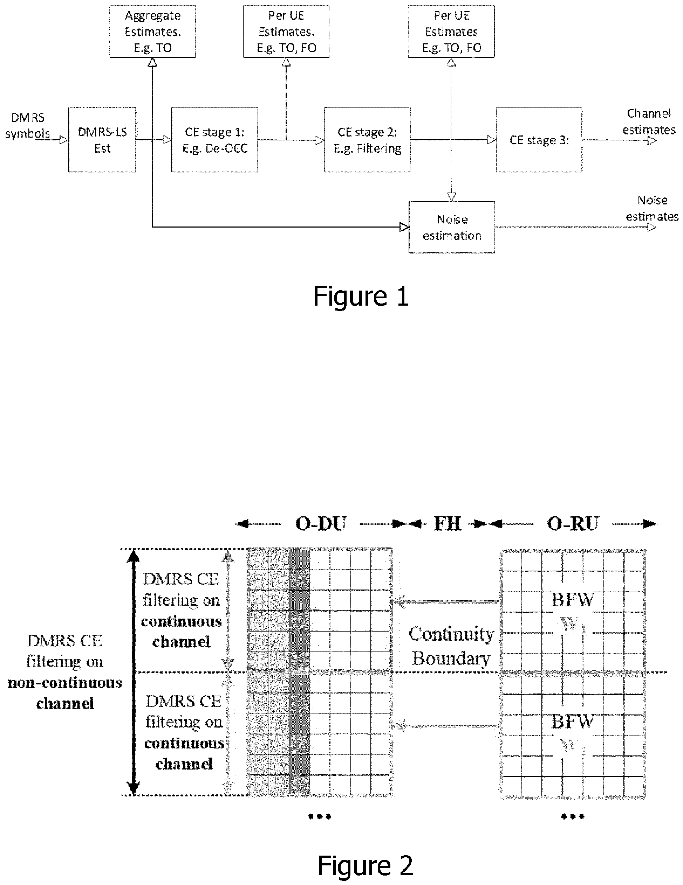

Figure 1 depicts an example DU conceptual channel estimation processing. Examples of the RU-DU alignment requirements include: DMRS channel estimation filtering (Denoise) at O-DU (see e.g., section 1.2.1, infra); aggregate timing offset (TO) estimation at O-DU (see e.g., section 1.2.2, infra); per UE frequency offset (FO) estimation at O-DU (see e.g., section 1.2.3, infra); and DU based tracking of per UE properties and sharing with RU (see e.g., section 1.2.4, infra).

## 1.2.1. DMRS CHANNEL ESTIMATION FILTERING AT O-DU

Figure 2 depicts an example of DMRS channel estimation filtering at a O-DU. In some examples, it is assumed that port reduced DMRS is requested by the O-DU for channel estimation and subsequent equalization. Either DMRS-BF-NEQ or DMRS-BF-EQ case.

In various implementations, in order to perform DMRS channel estimation, the O-DU applies filtering (in time or frequency domain) on DMRS (e.g., within a given set of symbols or PRBs). In some examples, within a continuity boundary, a single set of filter coefficients are used. Additionally or alternatively, within a continuity boundary port, reduced channel parameters are not expected to change abruptly (e.g., due to DMRS-BF). In some examples, the O-DU may prefer certain continuity boundary sizes. Additionally or alternatively, additional DMRS symbols in time are included in high speed or low SINR scenarios. Additionally or alternatively, MU-group size continuity boundary is determined by scheduler. Whether continuity boundary sizes can be smaller than the continuity boundary implied by MU-group size. CE performance may be better and/or optimized with larger continuity boundary sizes.

In various implementations, in order to perform interference estimation, the O-DU subtracts DMRS REs within a given set of PRBs. In some examples, within a continuity boundary interference statistics is not expected to change abruptly due to DMRS BF, In some examples, the O-DU may prefer certain continuity boundary sizes such as, for example, 8 Layers Two DMRS (2+2) - 48 REs to estimate $R_{64x64}$ per PRB per slot; and/or 4 Layers One DMRS (1) - 12 REs to estimate $R_{64x64}$ per PRB per slot.

## 1.2.2. RESIDUAL AGGREGATE TIMING OFFSET (TO) DETERMINATION AT O-DU

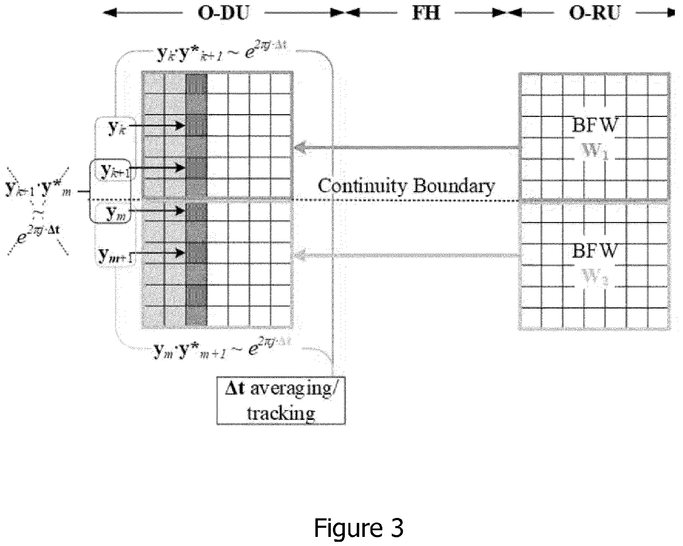

Figure 3 depicts an example of residual aggregate TO estimation/determination an an O-DU. In some examples, it is assumed that port reduced DMRS is requested by O-DU for channel estimation and subsequent equalization. Either DMRS-BF-NEQ or DMRS-BF-EQ case.

In some examples, the O-DU assumes that residual TO is present in the port-reduced DMRS and consistent with PUSCH. In some implementations, residual TO determination occurs as part of channel estimation module (or channel estimation RANF) in the O-DU.

Additionally or alternatively, residual TO may be determined from correlation of adjacent DMRS REs for the same comb: $y_k y_{k+1}^*$. In some examples, correlation is performed within a continuity boundary. Additionally or alternatively, the O-RU BF should not introduce a significant error term due to BF difference between REs for $y_{k+1}$ and $y_k$. Additionally or alternatively, across a continuity boundary residual TO estimates can be improved by combining. In some examples, the O-RU should not add delay affecting TO across continuity boundaries.

### 1.2.3. RESIDUAL PER UE FREQUENCY OFFSET (FO) DETERMINATION AT O-DU

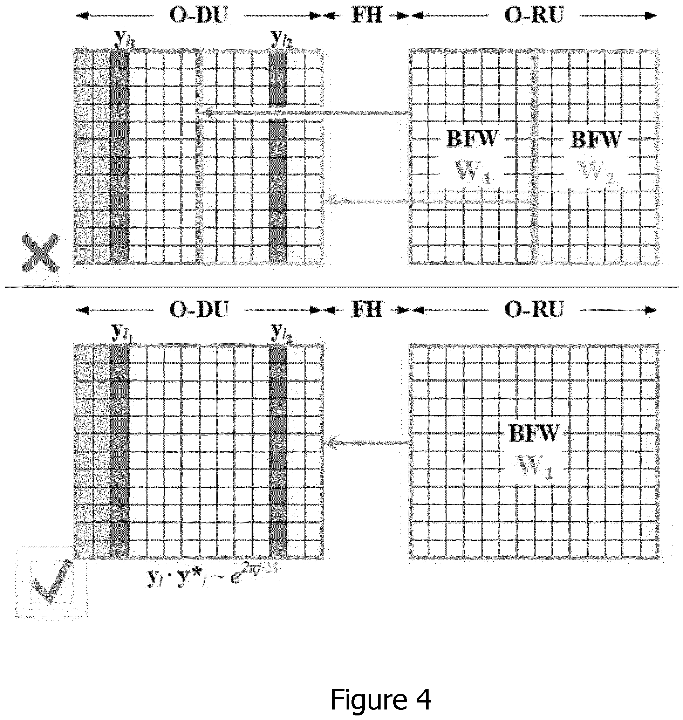

Figure 4 depicts an example residual Per UE FO estimation/determination at an O-DU. In some examples, it is assumed that port reduced DMRS is requested by O-DU for channel estimation and subsequent equalization. Either DMRS-BF-NEQ or DMRS-BF-EQ case.

In some examples, the O-DU assumes that residual FO is present in the port-reduced DMRS and is consistent with PUSCH. In some implementations, residual FO estimation occurs as part of channel estimation module (or channel estimation RANF) in O-DU.

In some examples, residual FO may be determined from correlation of DMRS RE of different DMRS symbols $y_{l_1} y_{l_2}^*$. In some examples, correlation is performed within a continuity boundary. Additionally or alternatively, the O-RU BF should not introduce a significant error term due to BF difference between REs for $y_{l_1}$, and $y_{l_2}$. Additionally or alternatively, across a continuity boundary FO estimates can be improved by combining. Additionally or alternatively, the O-RU should not add delay affecting FO across continuity boundaries.

### 1.2.4. CLOSED LOOP APPROACH TO TIMING OFFSET (TO) AND FREQUENCY OFFSET (FO)

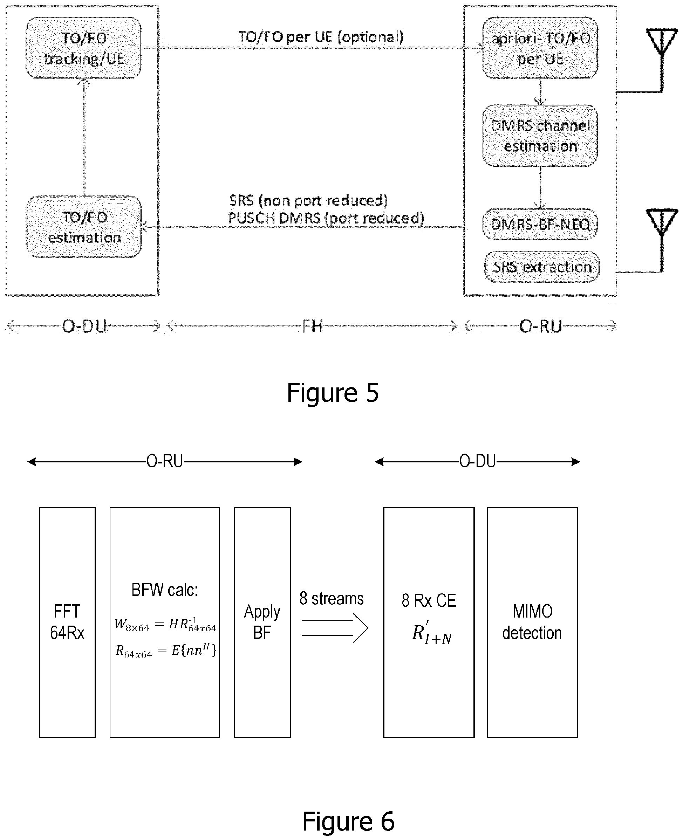

Figure 5 depicts an example of DU-based Tracking of Per UE Properties and Sharing with RU. In some examples, it is assumed that port reduced DMRS is requested by O-DU for the purposes of channel estimation and subsequent equalization. Either DMRS-BF-NEQ or DMRS-BF-EQ case.

In some examples, the O-DU is able to better track TO/FO on a per UE basis, for example, due to long-term information available from multiple PUSCHs; due to up to date knowledge of UE status (e.g., TO tracking need to account for TA adjustments); and/or due to access to other channels like SRS.

In some examples, an O-RU may benefit from *a priori* information of TO/FO, for example, FO in case of no additional DMRS symbols (Time Domain Orthogonal Cover Code (TD-OCC) is affected by FO) and/or to improve the performance of TO/FO estimation. Therefore, it may be beneficial to have O-DU sharing of TO/FO per UE to O-RU.

### 1.3. ALIGNMENT OF RU BF WITH DU EQ

In some DMRS-BF-NEQ examples, RU and DU align on DMRS beamforming (BF) granularity and continuity regions. Here, the DU needs to know the continuity boundaries of DMRS to do the DMRS channel estimation (DMRS-CE) and interference plus noise (I+N) covariance calculation for MIMO detection.

In some DMRS-BF-EQ examples, the RU and DU are similarly aligned when port reduced DMRS is passed on to DU (EQ in DU).

The aforementioned alignment may be on, for example, BF weight calculation granularity; BF weight continuity boundaries (time and frequency); BF weight properties (e.g., unit amplitude); and/or full set of parameters/conditions to be determined in normative phase.

In either of these examples, DU-RU alignment may ensure relatively good wireless performance, and misalignment can lead to loss in performance.

### 1.4. PUSCH BEAMFORMING FLOW

Figure 6 depicts an example DU/RU functional split and/or flow that can be used for PUSCH beamforming, wherein:

$$y_{64\times1} = H_{64\times8} x_{8\times1} + n_{64\times1}$$

$$W_{8\times64} y_{64\times1} = W_{8\times64} H_{64\times8} x_{8\times1} + W_{8\times64} n_{64\times1}$$

$$y'_{8\times1} = H'_{8\times8} x_{8\times1} + n'_{8\times1}$$

$$R'_{I+N} = E\{n' n'^H\} = W_{8\times64} E\{n n^H\} W_{8\times64}^H$$

In some examples, BF for port reduction changes the I+N covariance $R_{64x64}$ to $R'_{I+N}$. If $R_{64x64}$ = I (white) then DFT-BF preserves whiteness, $R'_{I+N}$ is white. If $R_{64x64}$ = I (white) then ( $H^H R_{64x64}^{-1}$ ) - BF introduces colored noise, $R'_{I+N}$ is colored.

In some examples, ( $H^H R_{64x64}^{-1}$ ) - BF continuity boundary is determined by continuity of both $R_{64x64}$ and $H.$ Additionally or alternatively, $(H^H R_{64x64}^{-1})$ - BF continuity boundary impacts both the CE quality of $H'_{8\times8}$ and I+N estimation quality of $R'_{I+N}$ at the O-DU. Additionally or alternatively, CE and I+N estimation boundary at the O-DU is contained within the BF continuity boundary at O-RU.

### 1.5. PUSCH CONTINUITY BOUNDARIES

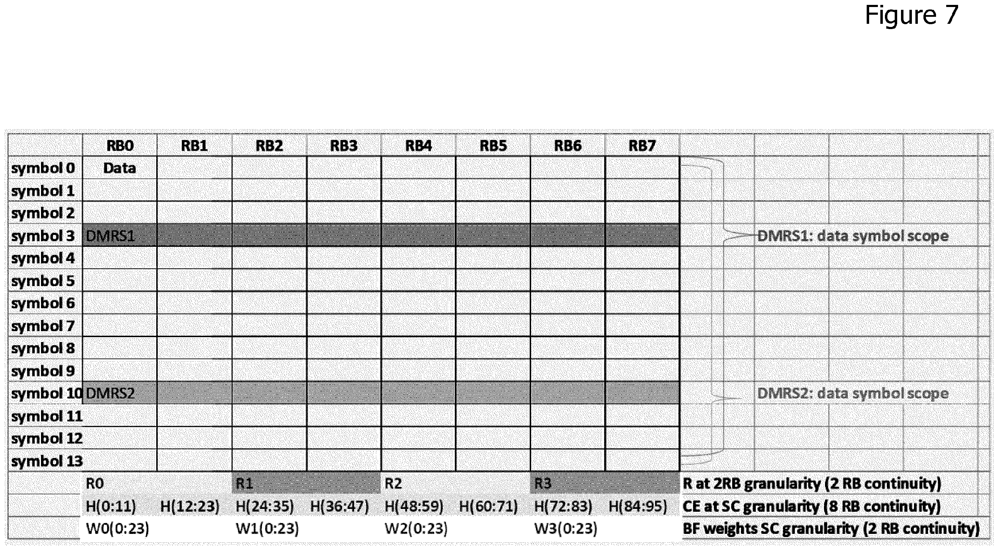

Figure 7 shows example PUSCH continuity boundaries. In some examples, alignment on continuity boundaries is for both time (symbol direction) and frequency (resource block (RB) direction). In some cases, RU-DU misalignment could lead to CE, FO, and/or other estimation errors that will result in loss of performance.

In some examples, alignment on continuity boundaries is in both time (symbol) and frequency (RE) direction.

Additionally or alternatively overall continuity boundary is determined by continuity boundaries of bandwidth (BW) weights applied to symbols (data and DMRS). Hence, continuity boundaries are determined by intersection of continuity boundaries of all contributing variables (e.g., channel estimation (H) and noise covariance estimation (R) above) to BF weight calculation.

In some examples, time direction continuity boundary must cover all data symbols relying on the DMRS symbols. For example, to be able to do FO estimation with the phase difference between two DMRS symbols (and to correct FO for all symbols).

In some examples, channel estimation at subcarrier (SC) granularity and with continuity boundary spanning all 8 RBs as shown. N+I covariance, R, estimation at 2 RB granularity. R continuity boundaries same as granularity. If pre-whitened matched filter BF weights, calculated at SC granularity, is applied (W = $H^H R_{64x64}^{-1}$ ) then the overall continuity boundaries are as shown (aligned with R continuity boundaries). Given that DU does not know what BF weight calculation algorithm is used in RU, continuity boundaries need to be explicitly aligned between RU and DU (through control plane). In some examples, the DU does not need to know how RU achieves stated continuity boundaries, but DU uses the knowledge of continuity boundaries to reliably estimate channel (CE), frequency offsets (FO), timing offsets (TO), and/or the like (all these are required for equalization). In some cases, RU-DU misalignment could lead to CE, FO, and/or other estimation errors that will result in loss of wireless performance.

In order to resolve the issues mentioned here, a definition of range and rules for parameters to align between RU and DU can be defined in relevant standards/specification and/or may be up to implementation. For example, BF granularity and continuity boundaries (e.g., using this to describe the rest of the proposal).

In some implementations, the RU can announce capabilities related to supported BF frequency/time granularity and continuity boundaries. Additionally or alternatively, the DU can instruct RU what level of granularity and continuity boundaries to use (e.g., based on one or more selected capabilities from among the supported capabilities indicated by the RU).

Additionally or alternatively, the RU performs BF based on DU request. Here, BF refers to BMRS-BF-NEQ or DMRS-BF-EQ, where port reduced DMRS is passed on to the DU.

In some cases, different settings may be required for different scenarios. In one example, 8 Layers Two DMRS (2+2) - 48 REs to estimate $R_{64x64}$ per PRB per slot. In another example, 4 Layers One DMRS (1) -12 REs to estimate $R_{64x64}$ per PRB per slot.

## 1.6. DM-RS FOR CP-OFDM WAVEFORM - DM-RS TYPES

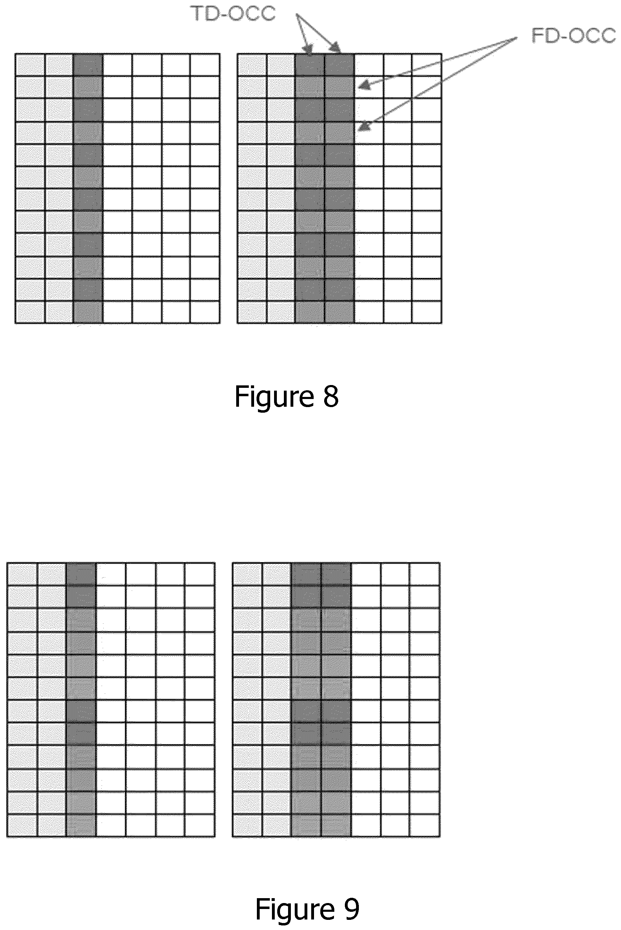

Figure 8 shows an example DM-RS type 1. Here, 1 symbol (e.g., left side of Figure 8) includes 2 Combs, FD-OCC {11,1-1}, 4 antenna ports, and 2 symbol (e.g., right side of Figure 8) includes 2 Combs, FD-OCC {11,1-1}, TD-OCC ({11,1-1}, 8 antenna ports.

In some examples, DMRS starting positions include 3rd or 4th OFDM symbol in slot (e.g., PDSCH/PUSCH Mapping Type A) or 1st symbol in slot (PDSCH/PUSCH for Mapping Type B). Additional DMRS symbol(s) can be configured in the later part of the slot. Additionally or alternatively, interference + noise (I+N) samples can be obtained on the DMRS symbols from the DMRS REs or unoccupied DMRS REs.

Figure 9 shows an example DM-RS type 2. Here, 1 symbol (e.g., left side of Figure 9) includes FD-OCC, FDM, 6 antenna ports, and 2 symbol (e.g., right side of Figure 9) includes FD-OCC, FDM, TD-OCC, 12 antenna ports.

In some examples, DMRS starting positions include 3rd and 4th OFDM symbol in slot (PDSCH/PUSCH Mapping Type A) or 1st symbol in slot (PDSCH/PUSCH Mapping Type B). Additional DMRS symbol(s) can be configured for the later part of slot. In some examples, 12 I+N samples or 24 I+N samples (each sample is an outer product) obtained from 1 or 2 symbol DMRS respectively within 1 PRB.

## 1.7. PORT REDUCED DMRS FROM RU TO DU

With the two new optional DMRS-BF methods, there can be 6 possible BF techniques to chose from.

In some examples, port reduced DMRS are sent from RU to DU for a given PRB, If DMRS-BF-EQ is used, and the DU indicates to the RU to send port reduced DMRS to the DU and/or if any other BF technique is used.

In some examples, this is taken into account in following: symbol re-ordering (motivates PRB level symbol re-ordering); granularity of port reduced DMRS transfer; and/or granularity of EQ bypass in DU.

## 1.8. RADIO RESOURCE MANAGEMENT (RRM) ASPECTS

In some examples, the DU and RU have the same interpretation of RRM measurements. The RRM requirements can be specified/defined in relevant standards/specifications and/or may be up to implementation.

## 1.9. PUSCH SYMBOL REPRESENTATION OVER FRONTHAUL (FH)

In the case of DMRS-BF-EQ where EQ bypass is applied by the O-DU (e.g., port reduced DMRS is not passed from RU to DU), PUSCH data symbols can be sent across FH (e.g., for a given layer) may be represented by $s + n + I$, where $s$ is constellation point (spec-/standard should clearly define the constellation grid for RU and DU to use the same definition and/or it may be up to implementation), and corresponding SINR represented by $\frac{E|s|^2}{E|n+I|^2}$.

In the case of DMRS-BF-NEQ, it is recognized that unit-energy BF weight is applied at the O-RU, it is expected DMRS symbols faithfully represent channel and N+I impacting data symbols, and/or the same conditions met for the case of DMRS-BF-EQ when EQ bypass is not applied at the O-DU (port reduced DMRS is passed from RU to DU).

The manner in which a PUSCH data symbol is sent across FH (e.g., for a given layer/stream) may be defined in relevant standards/specification and/or may be up to implementation.

## 1.10. FRAMEWORK FOR CURRENT WORKING VIEW (CVW)

The manner in which a a PUSCH data symbol (e.g., for a given layer/stream) and RRM are sent across FH may be defined in relevant standards/specification and/or may be up to implementation. In some cases, the DU need to be able to interpret the data unambiguously.

The ranges and rules for parameters to align between RU and DU may be defined in relevant standards/specification and/or may be up to implementation (e.g., BF continuity boundaries and/or the like).

A definition of continuity boundaries and other related concepts may be defined in relevant standards/-specification and/or may be up to implementation. For example, the properties to maintain continuity within continuity boundaries and/or the properties maintain consistency across continuity boundaries may be defined in the relevant standards/specification and/or may be up to implementation.

In some examples, the DU has access to information that RU may not have access to. Here, the relevant standards/specifications can enable DU control/recommendation of key parameters for RU DMRS-BF. In some examples, the RU announces its capabilities related to supported BF frequency/time granularity and continuity boundaries and the DU indicates to the RU what level of granularity and continuity boundaries to use based on the RU capabilties. In case of no indication from the DU, the RU will perform beamforming and signal continuity boundaries to the DU.

## 1.11. CONTINUITY BOUNDARIES AND RELATED CONCEPTS (CVW)

The definition of continuity boundaries and other related concepts may be defined in relevant standards/specification and/or may be up to implementation.

For example, the properties to maintain continuity within continuity boundaries can include, for example, time/frequency variation of channel response, including the impact of impairments such as frequency offset, timing offset, phase noise, and/or the like.

Additionally or alternatively, estimation and mitigation (compensation) algorithms for these impairments at DU require may be defined in relevant standards/specification and/or may be up to implementation. For example, the RU using the appropriate time and frequency span for continuity boundaries to encapsulate necessary pilots (e.g., DMRS) needed for the estimation, and hence, the DU can use those pilots for estimation. Additionally or alternatively, the RU using the appropriate time and frequency span for continuity boundaries to encapsulate all the REs that needed to be compensated for these impairments, and hence, the DU can compensate for those impairments using the estimated values.

The properties to maintain consistency across continuity boundaries, and in which case how to interpret these properties can include, for example, the DU estimating long term channel properties by averaging across continuity boundaries (e.g., frequency offset, time offset, delay spread, and/or the like).

## 2. CELLULAR NETWORK ASPECTS

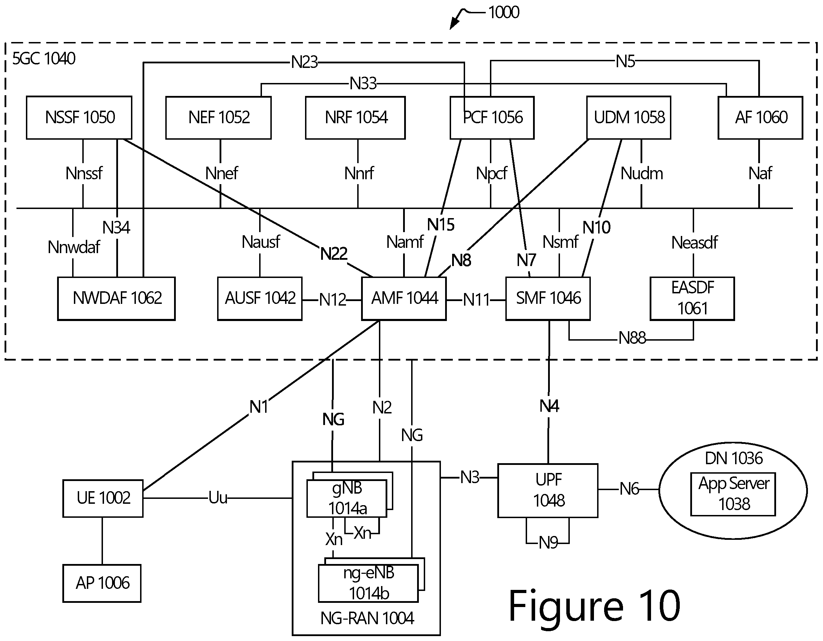

Figure 10 depicts an example network architecture 1000. The network 1000 may operate in a manner consistent with 3GPP technical specifications for LTE or 5G/NR systems. However, the example embodiments are not limited in this regard and the described examples may apply to other networks that benefit from the principles described herein, such as future 3GPP systems, or the like.

The network 1000 includes a UE 1002, which is any mobile or non-mobile computing device designed to communicate with a RAN 1004 via an over-the-air connection. The UE 1002 is communicatively coupled with the RAN 1004 by a Uu interface, which may be applicable to both LTE and NR systems. Examples of the UE 1002 include, but are not limited to, a smartphone, tablet computer, wearable device (e.g., smart watch, fitness tracker, smart glasses, smart clothing/fabrics, head-mounted displays, smart shows, and/or the like), desktop computer, workstation, laptop computer, in-vehicle infotainment system, in-car entertainment system, instrument cluster, head-up display (HUD) device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, machine-to-machine (M2M), device-to-device (D2D), machine-type communication (MTC) device, Internet of Things (IoT) device, smart appliance, flying drone or unmanned aerial vehicle (UAV), terrestrial drone or autonomous vehicle, robot, electronic signage, single-board computer (SBC) (e.g., Raspberry Pi, Arduino, Intel Edison, and the like), plug computers, and/or any type of computing device such as any of those discussed herein.

The network 1000 may include a set of UEs 1002 coupled directly with one another via a D2D, ProSe, PC5, and/or sidelink (SL) interface, and/or any other suitable interface such as any of those discussed herein. In 3GPP systems, SL communication involves communication between two or more UEs 1002 using 3GPP technology without traversing a network node. These UEs 1002 may be M2M/D2D/MTC/IoT devices and/or vehicular systems that communicate using an SL interface, which includes, for example, one or more SL logical channels (e.g., Sidelink Broadcast Control Channel (SBCCH), Sidelink Control Channel (SCCH), and Sidelink Traffic Channel (STCH)); one or more SL transport channels (e.g., Sidelink Shared Channel (SL-SCH) and Sidelink Broadcast Channel (SL-BCH)); and one or more SL physical channels (e.g., Physical Sidelink Shared Channel (PSSCH), Physical Sidelink Control Channel (PSCCH), Physical Sidelink Feedback Channel (PSFCH), Physical Sidelink Broadcast Channel (PSBCH), and/or the like). The UE 1002 may perform blind decoding attempts of SL channels/links according to the various examples herein.

In some examples, the UE 1002 may additionally communicate with an AP 1006 via an over-the-air (OTA) connection. The AP 1006 manages a WLAN connection, which may serve to offload some/all network traffic from the RAN 1004. The connection between the UE 1002 and the AP 1006 may be consistent with any IEEE 802 protocol (e.g., [IEEE80211] and/or the like). Additionally, the UE 1002, RAN 1004, and AP 1006 may utilize cellular-WLAN aggregation/integration (e.g., LWA/LWIP). Cellular-WLAN aggregation may involve the UE 1002 being configured by the RAN 1004 to utilize both cellular radio resources and WLAN resources.

The RAN 1004 includes one or more network access nodes (NANs) 1014 (also referred to as "access network nodes" or the like). The NANs 1014 terminate air-interface(s) for the UE 1002 by providing access stratum protocols including RRC, PDCP, RLC, MAC, and PHY/L1 protocols. In this manner, the NAN 1014 enables data/-voice connectivity between CN 1020 and the UE 1002. The NANs 1014 may be a macrocell base station or a low power base station for providing femtocells, picocells or other like cells having smaller coverage areas, smaller user capacity, or higher bandwidth compared to macrocells; or some combination thereof. In these implementations, an NAN 1014 be referred to as a BS, gNB, RAN node, eNB, ng-eNB, NodeB, RSU, TRP, and the like.

One example implementation is a "CU/DU split" architecture where the NANs 1014 are embodied as a gNB-Central Unit (CU) that is communicatively coupled with one or more gNB-Distributed Units (DUs), where each DU may be communicatively coupled with one or more Radio Units (RUs) (also referred to as RRHs, RRUs, or the like). In some implementations, the one or more RUs may be individual RSUs. In some implementations, the CU/DU split may include an ng-eNB-CU and one or more ng-eNB-DUs instead of, or in addition to, the gNB-CU and gNB-DUs, respectively. The NANs 1014 employed as the CU may be implemented in a discrete device or as one or more software entities running on server computers as part of, for example, a virtual network including a virtual Base Band Unit (BBU) or BBU pool, cloud RAN (CRAN), Radio Equipment Controller (REC), Radio Cloud Center (RCC), centralized RAN (C-RAN), virtualized RAN (vRAN), and/or the like (although these terms may refer to different implementation concepts). Any other type of architectures, arrangements, and/or configurations can be used.

The set of NANs 1014 are coupled with one another via respective X2 interfaces if the RAN 1004 is an LTE RAN or Evolved Universal Terrestrial Radio Access Network (E-UTRAN) 1010, or respective Xn interfaces if the RAN 1004 is a NG-RAN 1004. The X2/Xn interfaces, which may be separated into control/user plane interfaces in some examples, may allow the NANs to communicate information related to handovers, data/context transfers, mobility, load management, interference coordination, and the like.

The NANs of the RAN 1004 may each manage one or more cells, cell groups, component carriers, and the like to provide the UE 1002 with an air interface for network access. The UE 1002 may be simultaneously connected with a set of cells provided by the same or different NANs 1014 of the RAN 1004. For example, the UE 1002 and RAN 1004 may use carrier aggregation to allow the UE 1002 to connect with a set of component carriers, each corresponding to a Pcell or Scell. In dual connectivity scenarios, a first NAN 1014 may be a master node that provides an MCG and a second NAN 1014 may be secondary node that provides an SCG. The first/-second NANs 1014 may be any combination of eNB, gNB, ng-eNB, and the like. The NG-RAN 1004 supports multi-radio DC (MR-DC) operation where a UE 1002 is configured to utilize radio resources provided by two distinct schedulers, located in at least two different NG-RAN nodes 1014 connected via a non-ideal backhaul, one NG-RAN node 1014 providing NR access and the other NG-RAN node 1014 providing either E-UTRA or NR access. One node acts as a master node and the other as a secondary node, and the master node and secondary node are connected via a network interface and at least the MN is connected to the core network (e.g., CN 1040). In some implementations, the MN and/or the SN can be operated with shared spectrum channel access. Further details of MR-DC operation, including conditional PSCell addition (CPA) and conditional PSCell change (CPC), can be found in 3GPP TS 36.300 ("[TS36300]"), [TS38300], and 3GPP TS 37.340.

The RAN 1004 (or individual NANs 1014) may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

Additionally or alternatively, individual UEs 1002 provide radio information to one or more NANs 1014 and/or one or more edge compute nodes (e.g., edge servers/hosts, and the like). The radio information may be in the form of one or more measurement reports, and/or may include, for example, signal strength measurements, signal quality measurements, and/or the like. Each measurement report is tagged with a timestamp and the location of the measurement (e.g., the UEs 1002 current location). As examples, the measurements collected by the UEs 1002 and/or included in the measurement reports may include one or more of the following: bandwidth (BW), network or cell load, latency, jitter, round trip time (RTT), number of interrupts, out-of-order delivery of data packets, transmission power, bit error rate, bit error ratio (BER), Block Error Rate (BLER), packet error ratio (PER), packet loss rate, packet reception rate (PRR), data rate, peak data rate, end-to-end (e2e) delay, signal-to-noise ratio (SNR), signal-to-noise and interference ratio (SINR), signal-plus-noise-plus-distortion to noise-plus-distortion (SINAD) ratio, carrier-to-interference plus noise ratio (CINR), Additive White Gaussian Noise (AWGN), energy per bit to noise power density ratio (Eb/N0), energy per chip to interference power density ratio (Ec/I0), energy per chip to noise power density ratio (Ec/N0), peak-to-average power ratio (PAPR), reference signal received power (RSRP), reference signal received quality

(RSRQ), received signal strength indicator (RSSI), received channel power indicator (RCPI), received signal to noise indicator (RSNI), Received Signal Code Power (RSCP), average noise plus interference (ANPI), GNSS timing of cell frames for UE positioning for E-UTRAN or 5G/NR (e.g., a timing between an AP 1006 or RAN node 1008 reference time and a GNSS-specific reference time for a given GNSS), GNSS code measurements (e.g., the GNSS code phase (integer and fractional parts) of the spreading code of the ith GNSS satellite signal), GNSS carrier phase measurements (e.g., the number of carrier-phase cycles (integer and fractional parts) of the ith GNSS satellite signal, measured since locking onto the signal; also called Accumulated Delta Range (ADR)), channel interference measurements, thermal noise power measurements, received interference power measurements, power histogram measurements, channel load measurements, STA statistics, and/or other like measurements. The RSRP, RSSI, and/or RSRQ measurements may include RSRP, RSSI, and/or RSRQ measurements of cell-specific reference signals, channel state information reference signals (CSI-RS), and/or synchronization signals (SS) or SS blocks for 3GPP networks (e.g., LTE or 5G/NR), and RSRP, RSSI, RSRQ, RCPI, RSNI, and/or ANPI measurements of various beacon, Fast Initial Link Setup (FILS) discovery frames, or probe response frames for WLAN/WiFi (e.g., [IEEE80211]) networks. Other measurements may be additionally or alternatively used, such as those discussed in 3GPP TS 36.214 ("[TS36214]"), 3GPP TS 38.215 ("[TS38215]"), 3GPP TS 38.314 ("[TS38314]"), 3GPP TS 28.552 ("[TS28552]"), 3GPP TS 32.425 ("[TS32425]"), and/or the like [IEEE80211], and/or the like. Additionally or alternatively, any of the aforementioned measurements (or combination of measurements) may be collected by one or more NANs 1014 and provided to the edge compute node(s).

The radio information may be reported in response to a trigger event and/or on a periodic basis. Additionally or alternatively, individual UEs 1002 report radio information either at a low periodicity or a high periodicity depending on a data transfer that is to take place, and/or other information about the data transfer. Additionally or alternatively, the edge compute node(s) may request the measurements from the NANs 1014 at low or high periodicity, or the NANs 1014 may provide the measurements to the edge compute node(s) at low or high periodicity. Additionally or alternatively, the edge compute node(s) may obtain other relevant data from other edge compute node(s), core network functions (NFs), application functions (AFs), and/or other UEs 1002 such as Key Performance Indicators (KPIs), with the measurement reports or separately from the measurement reports.

Additionally or alternatively, in cases where is discrepancy in the observation data from one or more UEs, one or more RAN nodes, and/or core network NFs (e.g., missing reports, erroneous data, and the like) simple imputations may be performed to supplement the obtained observation data such as, for example, substituting values from previous reports and/or historical data, apply an extrapolation filter, and/or the like. Additionally or alternatively, acceptable bounds for the observation data may be predetermined or configured. For example, CQI and MCS measurements may be configured to only be within ranges defined by suitable 3GPP standards. In cases where a reported data value does not make sense (e.g., the value exceeds an acceptable range/bounds, or the like), such values may be dropped for the current learning/training episode or epoch. For example, on packet delivery delay bounds may be defined or configured, and packets determined to have been received after the packet delivery delay bound may be dropped.

The UE 1002 can also perform determine reference signal (RS) measurement and reporting procedures to provide the network with information about the quality of one or more wireless channels and/or the communication media in general, and this information can be used to optimize various aspects of the communication system. As examples, the measurement and reporting procedures performed by the UE 1002 can include those discussed in 3GPP TS 38.211 ("[TS38211]"), 3GPP TS 38.212 ("[TS38212]"), 3GPP TS 38.213 ("[TS38213]"), 3GPP TS 38.214 ("[TS38214]"), [TS38215], 3GPP TS 38.101-1 ("[TS38101-1]"), 3GPP TS 38.104 ("[TS38104]"), 3GPP TS 38.133 ("[TS38133]"), [TS38331], and/or other the like. The physical signals and/or reference signals can include demodulation reference signals (DM-RS), phase-tracking reference signals (PT-RS), positioning reference signal (PRS), channel-state information reference signal (CSI-RS), synchronization signal block (SSB), primary synchronization signal (PSS), secondary synchronization signal (SSS), sounding reference signal (SRS), and/or the like.

In any of the examples discussed herein, any suitable data collection and/or measurement mechanism(s) may be used to collect the observation data. For example, data marking (e.g., sequence numbering, and the like), packet tracing, signal measurement, data sampling, and/or timestamping techniques may be used to determine any of the aforementioned metrics/observations. The collection of data may be based on occurrence of events that trigger collection of the data. Additionally or alternatively, data collection may take place at the initiation or termination of an event. The data collection can be continuous, discontinuous, and/or have start and stop times. The data collection techniques/mechanisms may be specific to a HW configuration/implementation or non-HW-specific, or may be based on various software parameters (e.g., OS type and version, and the like). Various configurations may be used to define any of the aforementioned data collection parameters. Such configurations may be defined by suitable specifications/standards, such as 3GPP (e.g., [5GEdge]), ETSI (e.g., [MEC]), O-RAN (e.g., [O-RAN]), Intel® Smart Edge Open (formerly OpenNESS) (e.g., [ISEO]), IETF (e.g., MAMS [RFC8743]), IEEE/WiFi (e.g., [IEEE80211], [WiMAX], [IEEE16090]), and the like), and/or any other like standards such as those discussed herein.

In V2X scenarios the UE 1002 or NAN 1014 may be or act as a roadside unit (RSU), which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network. Furthermore, one or more V2X RATs may be employed, which allow V2X nodes to communicate directly with one another, with infrastructure equipment (e.g., NAN 1014), and/or other devices/nodes. In some implementations, at least two distinct V2X RATs may be used including WLAN V2X (W-V2X) RATs based on IEEE V2X technologies (e.g., DSRC for the U.S. and ITS-G5 for Europe) and cellular V2X (C-V2X) RATs based on 3GPP V2X technologies (e.g., LTE V2X, 5G/NR V2X, and beyond). In one example, the C-V2X RAT may utilize a C-V2X air interface and the WLAN V2X RAT may utilize an W-V2X air interface.

The W-V2X RATs include, for example, *IEEE Guide for Wireless Access in Vehicular Environments (WAVE) Architecture,* IEEE STANDARDS ASSOCIATION, IEEE 1609.0-2019 (10 Apr. 2019) ("[IEEE16090]"), *V2X Communications Message Set Dictionary,* SAE INT'L (23 Jul. 2020) ("[J2735_202007]"), Intelligent Transport Systems in the 5 GHz frequency band (ITS-G5), the [IEEE80211p] (which is the layer 1 (L1) and layer 2 (L2) part of WAVE, DSRC, and ITS-G5), and/or *IEEE Standard for Air Interface for Broadband Wireless Access Systems, IEEE Std 802.16-2017,* pp.1-2726 (02 Mar. 2018) ("[WiMAX]"). The term "DSRC" refers to vehicular communications in the 5.9 GHz frequency band that is generally used in the United States, while "ITS-G5" refers to vehicular communications in the 5.9 GHz frequency band in Europe. Since any number of different RATs are applicable (including [IEEE80211p] RATs) that may be used in any geographic or political region, the terms "DSRC" (used, among other regions, in the U.S) and "ITS-G5" (used, among other regions, in Europe) may be used interchangeably throughout this disclosure. The access layer for the ITS-G5 interface is outlined in ETSI EN 302 663 V1.3.1 (2020-01) (hereinafter "[EN302663]") and describes the access layer of the ITS-S reference architecture. The ITS-G5 access layer comprises [IEEE80211] (which now incorporates [IEEE80211p]), as well as features for Decentralized Congestion Control (DCC) methods discussed in ETSI TS 102 687 V1.2.1 (2018-04) ("[TS102687]"). The access layer for 3GPP LTE-V2X based interface(s) is outlined in, inter alia, ETSI EN 303 613 V1.1.1 (2020-01), 3GPP TS 23.285 v16.2.0 (2019-12); and 3GPP 5G/NR-V2X is outlined in, inter alia, 3GPP TR 23.786 v16.1.0 (2019-06) and 3GPP TS 23.287 v18.0.0 (2023-03-31) ("[TS23287]").

In examples where the RAN 1004 is an E-UTRAN 1010 with one or more eNBs 1012, the E-UTRAN 1010 provides an LTE air interface (Uu) with the parameters and characteristics at least as discussed in 3GPP TS 36.300 v17.2.0 (2022-09-30) ("[TS36300]"). In examples where the RAN 1004 is an next generation (NG)-RAN 1014 with a set of gNBs 1016. Each gNB 1016 connects with 5G-enabled UEs 1002 using a 5G-NR air interface (which may also be referred to as a Uu interface) with parameters and characteristics as discussed in [TS38300], among many other 3GPP standards. Where the NG-RAN 1014 includes a set of ng-eNBs 1018, the one or more ng-eNBs 1018 connect with a UE 1002 via the 5G Uu and/or LTE Uu interface. The gNBs 1016 and the ng-eNBs 1018 connect with the 5GC 1040 through respective NG interfaces, which include an N2 interface, an N3 interface, and/or other interfaces. The gNB 1016 and the ng-eNB 1018 are connected with each other over an Xn interface. Additionally, individual gNBs 1016 are connected to one another via respective Xn interfaces, and individual ng-eNBs 1018 are connected to one another via respective Xn interfaces. In some examples, the NG interface may be split into two parts, an NG user plane (NG-U) interface, which carries traffic data between the nodes of the NG-RAN 1014 and a UPF 1048 (e.g., N3 interface), and an NG control plane (NG-C) interface, which is a signaling interface between the nodes of the NG-RAN 1014 and an AMF 1044 (e.g., N2 interface).

The NG-RAN 1014 may provide a 5G-NR air interface (e.g., Uu interface) with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

Downlink (DL), uplink (UL), and sidelink (SL) transmissions are organized into frames with $T_f = (\Delta f_{max} N_f/100) \cdot T_c = 10$ms duration, each including ten subframes of $T_{sf} = (\Delta f_{max} N_f/1000) \cdot T_c = 1$ms duration. The number of consecutive OFDM symbols per subframe is $N_{symb}^{subframe,\mu} = N_{symb}^{slot} N_{slot}^{subframe,\mu}$. Each frame is divided into two equally-sized half-frames of five subframes each with half-frame 0 including subframes 0 - 4 and half-frame 1 including subframes 5-9. There is one set of frames in the uplink and one set of frames in the downlink on a carrier. UL frame number $i$ for transmission from the UE shall start $T_{TA} = \left(N_{TA} + N_{TA,offset} + N_{TA,adj}^{common} + N_{TA,adj}^{UE}\right)T_c$ before the start of the corresponding downlink frame at the UE where $N_{TA}$ and $N_{TA,offset}$ are given by [TS38213] § 4.2, except for msgA transmission on PUSCH where $N_{TA} = 0$ is used; $N_{TA,adj}^{common}$ given by [TS38213] § 4.2 is derived from the higher-layer parameters *ta-Common, ta-CommonDrift,* and *ta-CommonDriftVariant* if configured, otherwise $N_{TA,adj}^{common} = 0$; and $N_{TA,adj}^{UE}$ given by [TS38213] § 4.2 is computed by the UE based on UE position and serving-satellite-ephemeris-related higher-layers parameters if configured, otherwise $N_{TA,adj}^{UE} = 0$.

For subcarrier spacing (SCS) configuration $\mu$, slots are numbered $n_s^\mu \in \left\{0, ..., N_{slot}^{subframe,\mu} - 1\right\}$ in increasing order within a subframe and $n_{s,f}^\mu \in \left\{0, ..., N_{slot}^{frame,\mu} - 1\right\}$ in increasing order within a frame. There are $N_{symb}^{slot}$ consecutive OFDM symbols in a slot where $N_{symb}^{slot}$ depends on the cyclic prefix as given by Tables 4.3.2-1 and 4.3.2-2 of [TS38211]. The start of slot $n_s^\mu$ in a subframe is aligned in time with the start of OFDM symbol $n_s^\mu N_{symb}^{slot}$ in the same subframe. OFDM symbols in a slot in a DL or UL frame can be classified as 'downlink', 'flexible', or 'uplink'. Signaling of slot formats is described in [TS38213] § 11.1. In a slot in a DL frame, the UE 1002 assume that downlink transmissions only occur in 'downlink' or 'flexible' symbols. In a slot in an UL frame, the UE 1002 only transmits in 'uplink' or 'flexible' symbols.

A UE 1002 not capable of full-duplex communication and not supporting simultaneous transmission and reception as defined by parameter *simultaneousRxTxInterBandENDC, simultaneousRxTxInterBandCA or simultaneousRxTxSUL* [10, TS 38.306] among all cells within a group of cells is not expected to transmit in the uplink in one cell within the group of cells earlier than $N_{Rx-Tx} T_c$ after the end of the last received downlink symbol in the same or different cell within the group of cells where $N_{Rx-Tx}$ is given by Table 4.3.2-3 of [TS38211]. A UE 1002 not capable of full-duplex communication and not supporting simultaneous transmission and reception as defined by parameter *simultaneousRxTxInterBandENDC, simultaneousRxTxInterBandCA or simultaneousRxTxSUL* (see e.g., 3GPP TS 38.306) among all cells within a group of cells is not expected to receive in the downlink in one cell within the group of cells earlier than $N_{Tx-Rx} T_c$ after the end of the last transmitted uplink symbol in the same or different cell within the group of cells where $N_{Tx-Rx}$ is given by Table 4.3.2-3 of [TS38211].

For DAPS handover operation, a UE 1002 not capable of full-duplex communication is not expected to transmit in the uplink to a cell earlier than $N_{Rx-Tx} T_c$ after the end of the last received downlink symbol in the different cell where $N_{Rx-Tx}$ is given by Table 4.3.2-3.

For DAPS handover operation, a UE 1002 not capable of full-duplex communication is not expected to receive in the downlink from a cell earlier than $N_{\text{Tx-Rx}}T_c$ after the end of the last transmitted uplink symbol in the different cell where $N_{\text{Tx-Rx}}$ is given by Table 4.3.2-3 of [TS38211].

A UE 1002 not capable of full-duplex communication is not expected to transmit in the uplink earlier than $N_{\text{Rx-Tx}}T_c$ after the end of the last received downlink symbol in the same cell where $N_{\text{Rx-Tx}}$ is given by Table 4.3.2-3 of [TS38211]. A UE 1002 not capable of full-duplex communication is not expected to receive in the downlink earlier than $N_{\text{Tx-Rx}}T_c$ after the end of the last transmitted uplink symbol in the same cell where $N_{\text{Tx-Rx}}$ is given by Table 4.3.2-3 of [TS38211].

An antenna port is defined such that the channel over which a symbol on the antenna port is conveyed can be inferred from the channel over which another symbol on the same antenna port is conveyed. Two antenna ports are said to be quasi co-located if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, average delay, and spatial Rx parameters.

For each numerology and carrier, a resource grid of $N_{\text{grid},x}^{\text{size},\mu} N_{\text{sc}}^{\text{RE}}$ subcarriers and $N_{\text{symb}}^{\text{subframe},\mu}$ OFDM symbols is defined, starting at common resource block $N_{\text{grid}}^{\text{start},\mu}$ indicated by higher-layer signalling. There is one set of resource grids per transmission direction (UL, DL, or SL) with the subscript $x$ set to DL, UL, and SL for downlink, uplink, and sidelink, respectively. When there is no risk for confusion, the subscript $x$ may be dropped. There is one resource grid for a given antenna port $p$, SCS configuration $\mu$, and transmission direction (UL, DL, or SL).

For UL and DL, the carrier bandwidth $N_{\text{grid}}^{\text{size},\mu}$ for SCS configuration $\mu$ is given by the higher-layer parameter *carrierBandwidth* in the *SCS-SpecificCarrier* IE. The starting position $N_{\text{grid}}^{\text{start},\mu}$ for SCS configuration $\mu$ is given by the higher-layer parameter *offsetToCarrier* in the *SCS-SpecificCarrier* IE.

The frequency location of a subcarrier refers to the center frequency of that subcarrier. For the DL, the higher-layer parameter *txDirectCurrentLocation* in the *SCS-SpecificCarrier* IE indicates the location of the transmitter DC subcarrier in the downlink for each of the numerologies configured in the downlink. Values in the range 0 - 3299 represent the number of the DC subcarrier and the value 3300 indicates that the DC subcarrier is located outside the resource grid. For the UL, the higher-layer parameter *txDirectCurrentLocation* in the *UplinkTxDirectCurrentBWP* IE indicates the location of the transmitter DC subcarrier in the uplink for each of the configured bandwidth parts (BWPs), including whether the DC subcarrier location is offset by 7.5 kHz relative to the center of the indicated subcarrier or not. Values in the range 0 - 3299 represent the number of the DC subcarrier, the value 3300 indicates that the DC subcarrier is located outside the resource grid, and the value 3301 indicates that the position of the DC subcarrier in the uplink is undetermined.

Each element in the resource grid for antenna port $p$ and SCS configuration $\mu$ is called a resource element and is uniquely identified by $(k,l)_{p,\mu}$ where $k$ is the index in the frequency domain and $l$ refers to the symbol position in the time domain relative to some reference point. Resource element $(k,l)_{p,\mu}$ corresponds to a physical resource and the complex value $a_{k,l}^{(p,\mu)}$. When there is no risk for confusion, or no particular antenna port or SCS is specified, the indices $p$ and $\mu$ may be dropped, resulting in $a_{k,l}^{(p)}$ or $a_{k,l}$.

A resource block is defined as $N_{\text{sc}}^{\text{RB}} = 12$ consecutive subcarriers in the frequency domain. Point A serves as a common reference point for resource block grids and is obtained from: *offsetToPointA* for a PCell downlink where *offsetToPointA* represents the frequency offset between point A and the lowest subcarrier of the lowest resource block, which overlaps with the SS/PBCH block used by the UE 1002 for initial cell selection, expressed in units of resource blocks assuming 15 kHz SCS for FR1 and 60 kHz SCS for FR2; for operation without shared spectrum channel access in FR1 and FR2-1, the lowest resource block has the SCS provided by the higher layer parameter *subCarrierSpacingCommon*; for operation with shared spectrum channel access in FR1 or FR2, and for operation without shared spectrum channel access in FR2-2, the lowest resource block has the SCS same as the SS/PBCH block used by the UE 1002 for initial cell selection; *absoluteFrequencyPointA* for all other cases where *absoluteFrequencyPointA* represents the frequency-location of point A expressed as in ARFCN.

Common resource blocks are numbered from 0 and upwards in the frequency domain for SCS configuration $\mu$. The center of subcarrier 0 of common resource block 0 for SCS configuration $\mu$ coincides with 'point A'. The relation between the common resource block number $n_{\text{CRB}}^{\mu}$ in the frequency domain and resource elements $(k,l)$ for SCS configuration $\mu$ is given by $n_{\text{CRB}}^{\mu} = \left\lfloor \frac{k}{N_{\text{sc}}^{\text{RB}}} \right\rfloor$, where $k$ is defined relative to point A such that $k = 0$ corresponds to the subcarrier centered around point A.

Physical resource blocks (PRBs) for SCS configuration $\mu$ are defined within a bandwidth part (BWP) and numbered from 0 to $N_{\text{BWP},i}^{\text{size},\mu} - 1$ where $i$ is the number of the BWP. The relation between the physical resource block $n_{\text{PRB}}^{\mu}$ in BWP $i$ and the common resource block $n_{\text{CRB}}^{\mu}$ is given by $n_{\text{CRB}}^{\mu} = n_{\text{PRB}}^{\mu} + N_{\text{BWP},i}^{\text{start},\mu}$ where $N_{\text{BWP},i}^{\text{start},\mu}$ is the common resource block where BWP $i$ starts relative to common resource block 0. When there is no risk for confusion the index $\mu$ may be dropped. Virtual resource blocks (VRBs) are defined within a BWP and numbered from 0 to $N_{\text{BWP},i}^{\text{size}} - 1$ where i is the number of the BWP.

Multiple interlaces of resource blocks are defined where interlace $m \in \{0,1, \ldots , M - 1\}$ consists of common resource blocks $\{m, M + m, 2M + m, 3M + m, \ldots 1,$ with $M$ being the number of interlaces given by Table 4.4.4.6-1. The relation between the interlaced resource block $n_{\text{IRB},m}^{\mu} \in \{0,1,\ldots\}$ in BWP $i$ and interlace $m$ and the common resource block $n_{\text{CRB}}^{\mu}$ is given by:

$$n_{\text{CRB}}^{\mu} = M n_{\text{IRB},m}^{\mu} + N_{\text{BWP},i}^{\text{start},\mu} + \left( \left( m - N_{\text{BWP},i}^{\text{start},\mu} \right) \bmod M \right)$$

where $N_{\text{BWP},i}^{\text{start},\mu}$ is the common resource block where BWP starts relative to common resource block 0. When there is no risk for confusion the index $\mu$ may be dropped. The UE 1002 expects that the number of common resource blocks in an interlace contained within BWP $i$ is no less than 10.

The 5G-NR air interface may utilize BWPs for various purposes. For example, BWP can be used for dynamic adaptation of the SCS. For example, the UE 1002 can be configured with multiple BWPs where each BWP configuration has a different SCS. When a BWP change is indicated to the UE 1002, the SCS of the transmission is changed as well. Another use case example of BWP is related to power saving. In particular, multiple BWPs can be configured for the UE 1002 with different amount of frequency resources (e.g., PRBs) to support data transmission under different traffic loading scenarios. A BWP containing a smaller number of PRBs can be used for data transmission with small traffic load while allowing power saving at the UE 1002 and in some cases at the gNB 1016. A BWP containing a larger number of PRBs can be used for scenarios with higher traffic load.

A BWP is a subset of contiguous common resource blocks defined in [TS38211] § 4.4.4.3 for a given numerology $\mu_i$ in BWP $i$ on a given carrier. The starting position $N_{\text{BWP},i}^{\text{start},\mu}$ and the number of resource blocks $N_{\text{BWP},i}^{\text{size},\mu}$ in a BWP shall fulfil $N_{\text{grid},x}^{\text{start},\mu} \leq N_{\text{BWP},i}^{\text{start},\mu} < N_{\text{grid},x}^{\text{start},\mu} + N_{\text{grid},x}^{\text{size},\mu}$ and

$N_{\text{grid},x}^{\text{start},\mu} < N_{\text{BWP},i}^{\text{start},\mu} + N_{\text{BWP},i}^{\text{size},\mu} \leq N_{\text{grid},x}^{\text{start},\mu} + N_{\text{grid},x}^{\text{size},\mu}$, respectively. Configuration of a BWP is described in [TS38213] § 12. A UE 1002 can be configured with up to four BWPs in the DL with a single downlink BWP being active at a given time. The UE 1002 is not expected to receive PDSCH, PDCCH, or CSI-RS (except for RRM) outside an active BWP. A UE 1002 can be configured with up to four BWPs in the UL with a single uplink BWP being active at a given time. If a UE 1002 is configured with a supplementary uplink, the UE can in addition be configured with up to four BWPs in the supplementary uplink with a single supplementary uplink BWP being active at a given time. The UE shall not transmit PUSCH or PUCCH outside an active BWP. For an active cell, the UE 1002 does not transmit SRS outside an active BWP. Unless otherwise noted, the description in this specification applies to each of the BWPs. When there is no risk of confusion, the index $\mu$ may be dropped from $N_{\text{BWP},i}^{\text{start},\mu}, N_{\text{BWP},i}^{\text{size},\mu}, N_{\text{grid},x}^{\text{start},\mu}$, and $N_{\text{grid},x}^{\text{size},\mu}$.

A common MBS frequency resource is a contiguous subset of common resource blocks within a BWP. The starting position $N_{\text{MBS},i}^{\text{start},\mu}$ of the common MBS frequency resource $i$ is defined relative to point A and the size of the common MBS frequency resource is given by $N_{\text{MBS},i}^{\text{size},\mu}$. Resource blocks in a common MBS frequency resource are numbered in the same way as resource blocks in [TS38211] § 4.4.4.4 with $N_{\text{BWP},i}^{\text{start},\mu}$ and $N_{\text{BWP},i}^{\text{size},\mu}$ replaced by $N_{\text{MBS},i}^{\text{start},\mu}$ and $N_{\text{MBS},i}^{\text{size},\mu}$, respectively. A UE 1002 is not expected to receive PDSCH or PDCCH associated with MBS transmissions scheduled with G-RNTI, G-CS-RNTI or MCCH-RNTI outside the common MBS frequency resource.

W.r.t carrier aggregation (CA), transmissions in multiple cells can be aggregated. Unless otherwise noted, the description in this specification applies to each of the serving cells. For CA of cells with unaligned frame boundaries, the slot offset $N_{\text{slot, offset}}^{\text{CA}}$ between a PCell/PScell and an SCell is determined by higher-layer parameter *ca-SlotOffset* for the SCell. The quantity $\mu_{\text{offset}}$ is defined as the maximum of the lowest SCS configuration among the SCSs given by the higher-layer parameters *scs-SpecificCarrierList* configured for PCell/PSCell and the SCell, respectively. The slot offset $N_{\text{slot, offset}}^{\text{CA}}$ fulfills when the lowest SCS configuration among the SCSs configured for the cell is $\mu = 2$ for both cells or $\mu = 3$ for both cells, the start of slot 0 for the cell whose point A has a lower frequency coincides with the start of slot $q N_{\text{slot, offset}}^{\text{CA}} \bmod N_{\text{slot}}^{\text{frame},\mu_{\text{offset}}}$ for the other cell where $q = -1$ if point A of the PCell/PSCell has a frequency lower than the frequency of point A for the SCell, otherwise $q = 1$; otherwise, the start of slot 0 for the cell with the lower SCS of the lowest SCS given by the higher-layer parameters *scs-SpecificCarrierList* configured for the two cells, or the Pcell/PSCell if both cells have the same lowest SCS given by the higher-layer parameters *scs-SpecificCarrierList* configured for the two cells, coincides with the start of slot

$$qN_{\text{slot, offset}}^{\text{CA}} \bmod N_{\text{slot}}^{\text{frame,}\mu_{\text{offset}}}$$

for the other cell where $q = -1$ if the lowest subcarreier spacing configuration given by *scs-SpecificCarrierList* of the PCell/PSCell is smaller than or equal to the lowest SCS given by *scs-SpecificCarrierList* for the SCell, otherwise $q = 1$.

In some implementations, individual gNBs 1016 can include a gNB-CU and a set of gNB-DUs. Additionally or alternatively, gNBs 1016 can include one or more RUs. In these implementations, the gNB-CU may be connected to each gNB-DU via respective F1 interfaces. In case of network sharing with multiple cell ID broadcast(s), each cell identity associated with a subset of PLMNs corresponds to a gNB-DU and the gNB-CU it is connected to, share the same physical layer cell resources. For resiliency, a gNB-DU may be connected to multiple gNB-CUs by appropriate implementation. Additionally, a gNB-CU can be separated into gNB-CU control plane (gNB-CU-CP) and gNB-CU user plane (gNB-CU-UP) functions. The gNB-CU-CP is connected to a gNB-DU through an F1 control plane interface (F1-C), the gNB-CU-UP is connected to the gNB-DU through an F1 user plane interface (F1-U), and the gNB-CU-UP is connected to the gNB-CU-CP through an E1 interface. In some implementations, one gNB-DU is connected to only one gNB-CU-CP, and one gNB-CU-UP is connected to only one gNB-CU-CP. For resiliency, a gNB-DU and/or a gNB-CU-UP may be connected to multiple gNB-CU-CPs by appropriate implementation. One gNB-DU can be connected to multiple gNB-CU-UPs under the control of the same gNB-CU-CP, and one gNB-CU-UP can be connected to multiple DUs under the control of the same gNB-CU-CP. Data forwarding between gNB-CU-UPs during intra-gNB-CU-CP handover within a gNB may be supported by Xn-U.

Similarly, individual ng-eNBs 1018 can include an ng-eNB-CU and a set of ng-eNB-DUs. In these implementations, the ng-eNB-CU and each ng-eNB-DU are connected to one another via respective W1 interface. An ng-eNB can include an ng-eNB-CU-CP, one or more ng-eNB-CU-UP(s), and one or more ng-eNB-DU(s). An ng-eNB-CU-CP and an ng-eNB-CU-UP is connected via the E1 interface. An ng-eNB-DU is connected to an ng-eNB-CU-CP via the W1-C interface, and to an ng-eNB-CU-UP via the W1-U interface. The general principle described herein w.r.t gNB aspects also applies to ng-eNB aspects and corresponding E1 and W1 interfaces, if not explicitly specified otherwise.

The node hosting user plane part of the PDCP protocol layer (e.g., gNB-CU, gNB-CU-UP, and for EN-DC, MeNB or SgNB depending on the bearer split) performs user inactivity monitoring and further informs its inactivity or (re)activation to the node having control plane connection towards the core network (e.g., over E1, X2, or the like). The node hosting the RLC protocol layer (e.g., gNB-DU) may perform user inactivity monitoring and further inform its inactivity or (re)activation to the node hosting the control plane (e.g., gNB-CU or gNB-CU-CP).

In these implementations, the NG-RAN 1014, is layered into a Radio Network Layer (RNL) and a Transport Network Layer (TNL). The NG-RAN 1014 architecture (e.g., the NG-RAN logical nodes and interfaces between them) is part of the RNL. For each NG-RAN interface (e.g., NG, Xn, F1, and the like) the related TNL protocol and the functionality are specified. The TNL provides services for user plane transport and/or signalling transport. In NG-Flex configurations, each NG-RAN node is connected to all AMFs 1044 of AMF sets within an AMF region supporting at least one slice also supported by the NG-RAN node. The AMF Set and the AMF Region are defined in [TS23501].

The RAN 1004 is communicatively coupled to CN 1020 that includes network elements and/or network functions (NFs) to provide various functions to support data and telecommunications services to customers/-subscribers (e.g., UE 1002). The components of the CN 1020 may be implemented in one physical node or separate physical nodes. In some examples, NFV may be utilized to virtualize any or all of the functions provided by the network elements of the CN 1020 onto physical compute/storage resources in servers, switches, and the like. A logical instantiation of the CN 1020 may be referred to as a network slice, and a logical instantiation of a portion of the CN 1020 may be referred to as a network sub-slice. In some examples, the CN yx20 may be the same or similar as the NG-Core 1508 of Figure 15.

In the example of Figure 10, the CN 1040 is a 5GC 1040 including an Authentication Server Function (AUSF) 1042, Access and Mobility Management Function (AMF) 1044, Session Management Function (SMF) 1046, User Plane Function (UPF) 1048, Network Slice Selection Function (NSSF) 1050, Network Exposure Function (NEF) 1052, Network Repository Function (NRF) 1054, Policy Control Function (PCF) 1056, Unified Data Management (UDM) 1058, Unified Data Repository (UDR), Application Function (AF) 1060, and Network Data Analytics Function (NWDAF) 1062 coupled with one another over various interfaces as shown. The NFs in the 5GC 1040 are briefly introduced as follows.

The NWDAF 1062 includes one or more of the following functionalities: support data collection from NFs and AFs 1060; support data collection from OAM; NWDAF service registration and metadata exposure to NFs and AFs 1060; support analytics information provisioning to NFs and AFs 1060; support machine learning (ML) model training and provisioning to NWDAF(s) 1062 (e.g., those containing analytics logical function). Some or all of the NWDAF functionalities can be supported in a single instance of an NWDAF 1062. The NWDAF 1062 also includes an analytics reporting capability, which comprises means that allow discovery of the type of analytics that can be consumed by an external party and/or the request for consumption of analytics information generated by the NWDAF 1062.

The NWDAF 1062 interacts with different entities for different purposes, such as one or more of the following: data collection based on subscription to events provided by AMF 1044, SMF 1046, PCF 1056, UDM 1058, NSACF, AF 1060 (directly or via NEF 1052) and OAM (not shown); analytics and data collection using the Data Collection Coordination Function (DCCF); retrieval of information from data repositories (e.g. UDR via UDM 1058 for subscriber-related information); data collection of location information from LCS system; storage and retrieval of information from an Analytics Data Repository Function (ADRF); analytics and data collection from a Messaging Framework Adaptor Function (MFAF); retrieval of information about NFs (e.g. from NRF 1054 for NF-related information); on-demand provision of analytics to consumers, as specified in clause 6 of [TS23288]; and/or provision of bulked data related to analytics ID(s). NWDAF discovery and selection procedures are discussed in clause 6.3.13 in [TS23501] and clause 5.2 of [TS23288].

A single instance or multiple instances of NWDAF 1062 may be deployed in a PLMN. If multiple NWDAF 1062 instances are deployed, the architecture supports deploying the NWDAF 1062 as a central NF, as a collection of distributed NFs, or as a combination of both. If multiple NWDAF 1062 instances are deployed, an NWDAF 1062 can act as an aggregate point (e.g., aggregator NWDAF 1062) and collect analytics information from other NWDAFs 1062, which may have different serving areas, to produce the aggregated analytics (e.g., per analytics ID), possibly with analytics generated by itself. When multiple NWDAFs 1062 exist, not all of them need to be able to provide the same type of analytics results. For example, some of the NWDAFs 1062 can be specialized in providing certain types of analytics. An analytics ID information element is used to identify the type of supported analytics that NWDAF 1062 can generate. In some implementations, NWDAF 1062 instance(s) can be collocated with a 5GS NF. Additional aspects of NWDAF 1062 functionality are defined in 3GPP TS 23.288 v18.2.0 (2023-06-21) ("[TS23288]").

Different NWDAF 1062 instances may be present in the 5GC 1040, with possible specializations per type of analytics. The capabilities of an NWDAF 1062 instance are described in the NWDAF profile stored in the NRF 1054. The NWDAF architecture allows for arranging multiple NWDAF 1062 instances in a hierarchy/tree with a flexible number of layers/branches. The number and organisation of the hierarchy layers, as well as the capabilities of each NWDAF 1062 instance remain deployment choices and may vary depending on implementation and/or use case. In a hierarchical deployment, NWDAFs 1062 may provide data collection exposure capability for generating analytics based on the data collected by other NWDAFs 1062, when DCCFs 1063 and/or MFAFs 1065 are not present in the network.

The AUSF 1042 stores data for authentication of UE 1002 and handle authentication-related functionality. The AUSF 1042 may facilitate a common authentication framework for various access types.

The AMF 1044 allows other functions of the 5GC 1040 to communicate with the UE 1002 and the RAN 1004 and to subscribe to notifications about mobility events w.r.t the UE 1002. The AMF 1044 is also responsible for registration management (e.g., for registering UE 1002), connection management, reachability management, mobility management, lawful interception of AMF-related events, and access authentication and authorization. The AMF 1044 provides transport for SM messages between the UE 1002 and the SMF 1046, and acts as a transparent proxy for routing SM messages. AMF 1044 also provides transport for SMS messages between UE 1002 and an SMSF. AMF 1044 interacts with the AUSF 1042 and the UE 1002 to perform various security anchor and context management functions. Furthermore, AMF 1044 is a termination point of a RAN-CP interface, which includes the N2 reference point between the RAN 1004 and the AMF 1044. The AMF 1044 is also a termination point of NAS (N1) signaling, and performs NAS ciphering and integrity protection.

The AMF 1044 also supports NAS signaling with the UE 1002 over an N3IWF interface. The N3IWF provides access to untrusted entities. N3IWF may be a termination point for the N2 interface between the (R)AN 1004 and the AMF 1044 for the control plane, and may be a termination point for the N3 reference point between the (R)AN 1004 and the 1048 for the user plane. As such, the AMF 1044 handles N2 signaling from the SMF 1046 and the AMF 1044 for PDU sessions and QoS, encapsulate/de-encapsulate packets for IPSec and N3 tunneling, marks N3 user-plane packets in the UL, and enforces QoS corresponding to N3 packet marking taking into account QoS requirements associated with such marking received over N2. N3IWF may also relay UL and DL control-plane NAS signaling between the UE 1002 and AMF 1044 via an N1 reference point between the UE 1002and the AMF 1044, and relay UL and DL user-plane packets between the UE 1002 and UPF 1048. The N3IWF also provides mechanisms for IPsec tunnel establishment with the UE 1002. The AMF 1044 may exhibit an Namf service-based interface, and may be a termination point for an N14 reference point between two AMFs 1044 and an N17 reference point between the AMF 1044 and a 5G-EIR (not shown by Figure 10). In addition to the functionality of the AMF 1044 described herein, the AMF 1044 may provide support for Network Slice restriction and Network Slice instance restriction based on NWDAF analytics.

The SMF 1046 is responsible for SM (e.g., session establishment, tunnel management between UPF 1048 and NAN 1014); UE IP address allocation and management (including optional authorization); selection and control of UP function; configuring traffic steering at UPF 1048 to route traffic to proper destination; termination of interfaces toward policy control functions; controlling part of policy enforcement, charging, and QoS; lawful intercept (for SM events and interface to LI system); termination of SM parts of NAS messages; DL data notification; initiating AN specific SM information, sent via AMF 1044 over N2 to NAN 1014; and determining SSC mode of a session. SM refers to management of a PDU session, and a PDU session or "session" refers to a PDU connectivity service that provides or enables the exchange of PDUs between the UE 1002 and the DN 1036. The SMF 1046 may also include the following functionalities to support edge computing enhancements (see e.g., [TS23548]): selection of EASDF 1061 and provision of its address to the UE as the DNS server for the PDU session; usage of EASDF 1061 services as defined in [TS23548]; and for supporting the application layer architecture defined in [TS23558], provision and updates of ECS address configuration information to the UE. Discovery and selection procedures for EASDFs 1061 is discussed in [TS23501] § 6.3.23.

The UPF 1048 acts as an anchor point for intra-RAT and inter-RAT mobility, an external PDU session point of interconnect to data network 1036, and a branching point to support multi-homed PDU session. The UPF 1048 also performs packet routing and forwarding, packet inspection, enforces user plane part of policy rules, lawfully intercept packets (UP collection), performs traffic usage reporting, perform QoS handling for a user plane (e.g., packet filtering, gating, UL/DL rate enforcement), performs UL traffic verification (e.g., SDF-to-QoS flow mapping), transport level packet marking in the UL and DL, and performs DL packet buffering and DL data notification triggering. UPF 1048 may include an UL classifier to support routing traffic flows to a data network.

The NSSF 1050 selects a set of network slice instances serving the UE 1002. The NSSF 1050 also determines allowed NSSAI and the mapping to the subscribed S-NSSAIs, if needed. The NSSF 1050 also determines an AMF set to be used to serve the UE 1002, or a list of candidate AMFs 1044 based on a suitable configuration and possibly by querying the NRF 1054. The selection of a set of network slice instances for the UE 1002 may be triggered by the AMF 1044 with which the UE 1002 is registered by interacting with the NSSF 1050; this may lead to a change of AMF 1044. The NSSF 1050 interacts with the AMF 1044 via an N22 reference point; and may communicate with another NSSF in a visited network via an N31 reference point (not shown).

The NEF 1052 securely exposes services and capabilities provided by 3GPP NFs for third party, internal exposure/re-exposure, AFs 1060, edge computing networks/frameworks, and the like. In such examples, the NEF 1052 may authenticate, authorize, or throttle the AFs 1060. The NEF 1052 stores/retrieves information as structured data using the Nudr interface to a Unified Data Repository (UDR). The NEF 1052 also translates information exchanged with the AF 1060 and information exchanged with internal NFs. For example, the NEF 1052 may translate between an AF-Service-Identifier and an internal 5GC information, such as DNN, S-NSSAI, as described in clause 5.6.7 of [TS23501]. In particular, the NEF 1052 handles masking of network and user sensitive information to external AF's 1060 according to the network policy. The NEF 1052 also receives information from other NFs based on exposed capabilities of other NFs. This information may be stored at the NEF 1052 as structured data, or at a data storage NF using standardized interfaces. The stored information can then be re-exposed by the NEF 1052 to other NFs and AFs, or used for other purposes such as analytics. For example, NWDAF analytics may be securely exposed by the NEF 1052 for external party, as specified in [TS23288]. Furthermore, data provided by an external party may be collected by the NWDAF 1062 via the NEF 1052 for analytics generation purpose. The NEF 1052 handles and forwards requests and notifications between the NWDAF 1062 and AF(s) 1060, as specified in [TS23288]. In some examples, the NEF 1052 can provide an interface to edge compute nodes 1038, which can be used to process wireless connections with the RAN 1014, task/workload offloading, and/or to provide any other suitable services, such as any of those discussed herein.

The NRF 1054 supports service discovery functions, receives NF discovery requests from NF instances, and provides information of the discovered NF instances to the requesting NF instances. The NRF 1054 also maintains NF profiles of available NF instances and their supported services. The NF profile of NF instance maintained in the NRF 1054 includes the following information: NF instance ID; NF type; PLMN ID in the case of PLMN, PLMN ID + NID in the case of SNPN; Network Slice related Identifier(s) (e.g., S-NSSAI, NSI ID); an NF's network address(es) (e.g., FQDN, IP address, and/or the like), NF capacity information, NF priority information (e.g., for AMF selection), NF set ID, NF service set ID of the NF service instance; NF specific service authorization information; names of supported services, if applicable; endpoint address(es) of instance(s) of each supported service; identification of stored data/information (e.g., for UDR profile and/or other NF profiles); other service parameter(s) (e.g., DNN or DNN list, LADN DNN or LADN DNN list, notification endpoint for each type of notification that the NF service is interested in receiving, and/or the like); location information for the NF instance (e.g., geographical location, data center, and/or the like); TAI(s); NF load information; Routing Indicator, Home Network Public Key identifier, for UDM 1058 and AUSF 1042; for UDM 1058, AUSF 1042, and NSSAAF in the case of access to an SNPN using credentials owned by a Credentials Holder with AAA Server, identification of Credentials Holder (e.g., the realm of the Network Specific Identifier based SUPI); for UDM 1058 and AUSF 1042, and if UDM 1058/AUSF 1042 is used for access to an SNPN using credentials owned by a Credentials Holder, identification of Credentials Holder (e.g., the realm if network specific identifier based SUPI is used or the MCC and MNC if IMSI based SUPI is used); for AUSF 1042 and NSSAAF in the case of SNPN Onboarding using a DCS with AAA server, identification of DCS (e.g., the realm of the Network Specific Identifier based SUPI); for UDM 1058 and AUSF 1042, and if UDM 1058/AUSF 1042is used as DCS in the case of SNPN Onboarding, identification of DCS ((e.g., the realm if Network Specific Identifier based SUPI, or the MCC and MNC if IMSI based SUPI); one or more GUAMI(s), in the case of AMF 1044; for the UPF 1048, see clause 5.2.7.2.2 of [TS23502]; UDM Group ID, range(s) of SUPIs, range(s) of GPSIs, range(s) of internal group identifiers, range(s) of external group identifiers for UDM 1058; UDR Group ID, range(s) of SUPIs, range(s) of GPSIs, range(s) of external group identifiers for UDR; AUSF Group ID, range(s) of SUPIs for AUSF 1042; PCF Group ID, range(s) of SUPIs for PCF 1056; HSS Group ID, set(s) of IMPIs, set(s) of IMPU, set(s) of IMSIs, set(s) of PSIs, set(s) of MSISDN for HSS; event ID(s) supported by AFs 1060, in the case of NEF 1052; event Exposure service supported event ID(s) by UPF 1048; application identifier(s) supported by AFs 1060, in the case of NEF 1052; range(s) of external identifiers, or range(s) of external group identifiers, or the domain names served by the NEF, in the case of NEF 1052 (e.g., used when the NEF 1052 exposes AF information for analytics purpose as detailed in [TS23288]; additionally the NRF 1054 may store a mapping between UDM Group ID and SUPI(s), UDR Group ID and SUPI(s), AUSF Group ID and SUPI(s) and PCF Group ID and SUPI(s), to enable discovery of UDM 1058, UDR, AUSF 1042 and PCF 1056 using SUPI, SUPI ranges as specified in clause 6.3 of [TS23501], and/or interact with UDR to resolve the UDM Group ID/UDR Group ID/AUSF Group ID/PCF Group ID based on UE identity (e.g., SUPI)); IP domain list as described in clause 6.1.6.2.21 of 3GPP TS 29.510 v18.2.0 (2023-03-29) ("[TS29510]"), Range(s) of (UE) IPv4 addresses or Range(s) of (UE) IPv6 prefixes, Range(s) of SUPIs or Range(s) of GPSIs or a BSF Group ID, in the case of BSF; SCP Domain the NF belongs to; DCCF Serving Area information, NF types of the data sources, NF Set IDs of the data sources, if available, in the case of DCCF 1063; supported DNAI list, in the case of SMF 1046; for SNPN, capability to support SNPN Onboarding in the case of AMF and capability to support User Plane Remote Provisioning in the case of SMF 1046; IP address range, DNAI for UPF 1048; additional V2X related NF profile parameters are defined in 3GPP TS 23.287; additional ProSe related NF profile parameters are defined in 3GPP TS 23.304; additional MBS related NF profile parameters are defined in 3GPP TS 23.247; additional UAS related NF profile parameters are defined in TS 23.256; among many others discussed in [TS23501]. In some examples, service authorization information provided by an OAM system is also included in the NF profile in the case that, for example, an NF instance has an exceptional service authorization information.

For NWDAF 1062, the NF profile includes: supported analytics ID(s), possibly per service, NWDAF serving area information (e.g., a list of TAIs for which the NWDAF can provide services and/or data), Supported Analytics Delay per Analytics ID (if available), NF types of the NF data sources, NF Set IDs of the NF data sources, if available, analytics aggregation capability (if available), analytics metadata provisioning capability (if available), ML model filter information parameters S-NSSAI(s) and area(s) of interest for the trained ML model(s) per analytics ID(s) (if available), federated learning (FL) capability type (e.g., FL server or FL client, if available), Time interval supporting FL (if available). The NWDAF's 1062 Serving Area information is common to all its supported analytics IDs. The analytics IDs supported by the NWDAF 1062 may be associated with a supported analytics delay, for example, the analytics report can be generated with a time (including data collection delay and inference delay) in less than or equal to the supported analytics delay. The determination of supported analytics delay, and how the NWDAF 1062 avoid updating its Supported Analytics Delay in NRF frequently may be NWDAF-implementation specific.

The PCF 1056 provides policy rules to control plane functions to enforce them, and may also support unified policy framework to govern network behavior. The PCF 1056 may also implement a front end to access subscription information relevant for policy decisions in a UDR 1059 of the UDM 1058. In addition to communicating with functions over reference points as shown, the PCF 1056 exhibit an Npcf service-based interface.

The UDM 1058 handles subscription-related information to support the network entities' handling of communication sessions, and stores subscription data of UE 1002. For example, subscription data may be communicated via an N8 reference point between the UDM 1058 and the AMF 1044. The UDM 1058 may include two parts, an application front end and a UDR. The UDR may store subscription data and policy data for the UDM 1058 and the PCF 1056, and/or structured data for exposure and application data (including PFDs for application detection, application request information for multiple UEs 1002) for the NEF 1052. The Nudr service-based interface may be exhibited by the UDR to allow the UDM 1058, PCF 1056, and NEF 1052 to access a particular set of the stored data, as well as to read, update (e.g., add, modify), delete, and subscribe to notification of relevant data changes in the UDR. The UDM 1058 may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 1058 may exhibit the Nudm service-based interface.

Edge Application Server Discovery Function (EASDF) 1061 exhibits an Neasdf service-based interface, and is connected to the SMF 1046 via an N88 interface. One or multiple EASDF instances may be deployed within a PLMN, and interactions between 5GC NF(s) and the EASDF 1061 take place within a PLMN. The EASDF 1061 includes one or more of the following functionalities: registering to NRF 1054 for EASDF 1061 discovery and selection; handling the DNS messages according to the instruction from the SMF 1046; and/or terminating DNS security, if used. Handling the DNS messages according to the instruction from the SMF 1046 includes one or more of the following functionalities: receiving DNS message handling rules and/or BaselineDNSPattern from the SMF 1046; exchanging DNS messages from/with the UE 1002; forwarding DNS messages to C-DNS or L-DNS for DNS query; adding EDNS client subnet (ECS) option into DNS query for an FQDN; reporting to the SMF 1046 the information related to the received DNS messages; and/or buffering/discarding DNS messages from the UE 1002 or DNS Server. The EASDF has direct user plane connectivity (e.g., without any NAT) with the PSA UPF over N6 for the transmission of DNS signaling exchanged with the UE. The deployment of a NAT between EASDF 1061 and PSA UPF 1048 may or may not be supported. Additional aspects of the EASDF 1061 are discussed in [TS23548].

AF 1060 provides application influence on traffic routing, provide access to NEF 1052, and interact with the policy framework for policy control. The AF 1060 may influence UPF 1048 (re)selection and traffic routing. Based on operator deployment, when AF 1060 is considered to be a trusted entity, the network operator may permit AF 1060 to interact directly with relevant NFs. In some implementations, the AF 1060 is used for edge computing implementations.

An NF that needs to collect data from an AF 1060 may subscribe/unsubscribe to notifications regarding data collected from an AF 1060, either directly from the AF 1060 or via NEF 1052. The data collected from an AF 1060 is used as input for analytics by the NWDAF 1062. The details for the data collected from an AF 1060 as well as interactions between NEF 1052, AF 1060 and NWDAF 1062 are described in [TS23288].

The 5GC 1040 may enable edge computing by selecting operator/3rd party services to be geographically close to a point that the UE 1002 is attached to the network. This may reduce latency and load on the network. In edge computing implementations, the 5GC 1040 may select a UPF 1048 close to the UE 1002 and execute traffic steering from the UPF 1048 to DN 1036 via the N6 interface. This may be based on the UE subscription data, UE location, and information provided by the AF 1060, which allows the AF 1060 to influence UPF (re) selection and traffic routing.

The data network (DN) 1036 may represent various network operator services, Internet access, or third party services that may be provided by one or more servers including, for example, application (app)/content server 1038. The DN 1036 may be an operator external public, a private PDN, or an intra-operator packet data network, for example, for provision of IMS services. In this example, the app server 1038 can be coupled to an IMS via an S-CSCF or the I-CSCF. In some implementations, the DN 1036 may represent one or more local area DNs (LADNs), which are DNs 1036 (or DN names (DNNs)) that is/are accessible by a UE 1002 in one or more specific areas. Outside of these specific areas, the UE 1002 is not able to access the LADN/DN 1036.

Additionally or alternatively, the DN 1036 may be an edge DN 1036, which is a (local) DN that supports the architecture for enabling edge applications. In these examples, the app server 1038 may represent the physical hardware systems/devices providing app server functionality and/or the application software resident in the cloud or at an edge compute node that performs server function(s). In some examples, the app/content server 1038 provides an edge hosting environment that provides support required for Edge Application Server's execution.

In some examples, the 5GS can use one or more edge compute nodes to provide an interface and offload processing of wireless communication traffic. In these examples, the edge compute nodes may be included in, or co-located with one or more RANs 1004 or RAN nodes 1014. For example, the edge compute nodes can provide a connection between the RAN 1004 and UPF 1048 in the 5GC 1040. The edge compute nodes can use one or more NFV instances instantiated on virtualization infrastructure within the edge compute nodes to process wireless connections to and from the RAN 1014 and UPF 1048.

In some implementations, the edge compute nodes provide a distributed computing environment for application and service hosting, and also provide storage and processing resources so that data and/or content can be processed in close proximity to subscribers (e.g., users of UEs 1002) for faster response times. The edge compute nodes also support multitenancy run-time and hosting environment(s) for applications, including virtual appliance applications that may be delivered as packaged virtual machine (VM) images, middleware application and infrastructure services, content delivery services including content caching, mobile big data analytics, and computational offloading, among others. Computational offloading involves offloading computational tasks, workloads, applications, and/or services to the edge compute nodes from the UEs 1002, CN 1040, DN 1036, and/or server(s) 1038, or vice versa. For example, a device application or client application operating in a UE 1002 may offload application tasks or workloads to one or more edge compute nodes. In another example, an edge compute node may offload application tasks or workloads to a set of UEs 1002 (e.g., for distributed machine learning computation and/or the like).

The edge compute nodes may include or be part of an edge system that employs one or more edge computing technologies (ECTs) (also referred to as an "edge computing framework" or the like). The edge compute nodes may also be referred to as "edge hosts" or "edge servers." The edge system includes a collection of edge servers and edge management systems (not shown) necessary to run edge computing applications within an operator network or a subset of an operator network. The edge servers are physical computer systems that may include an edge platform and/or virtualization infrastructure, and provide compute, storage, and network resources to edge computing applications. Each of the edge servers are disposed at an edge of a corresponding access network, and are arranged to provide computing resources and/or various services (e.g., computational task and/or workload offloading, cloud-computing capabilities, IT services, and other like resources and/or services as discussed herein) in relatively close proximity to UEs 1002. The VI of the edge compute nodes provide virtualized environments and virtualized resources for the edge hosts, and the edge computing applications may run as VMs and/or application containers on top of the VI.

In one example implementation, the ECT is and/or operates according to the MEC framework, as discussed in ETSI GR MEC 001, ETSI GS MEC 003, ETSI GS MEC 009, ETSI GS MEC 010-1, ETSI GS MEC 010-2, ETSI GS MEC 011, ETSI GS MEC 012, ETSI GS MEC 013, ETSI GS MEC 014, ETSI GS MEC 015, ETSI GS MEC 016, ETSI GR MEC 017, ETSI GS MEC 021, ETSI GR MEC 024, ETSI GS MEC 028, ETSI GS MEC 029, ETSI GS MEC 030, and ETSI GR MEC 031 (collectively referred to herein as "[MEC]"). This example implementation (and/or in any other example implementation discussed herein) may also include NFV and/or other like virtualization technologies such as those discussed in ETSI GR NFV 001, ETSI GS NFV 002, ETSI GR NFV 003, ETSI GS NFV 003, ETSI GS NFV 006, ETSI GS NFV-INF 001, ETSI GS NFV-INF 003, ETSI GS NFV-INF 004, ETSI GS NFV-MAN 001, and/or Israel et al., OSM Release FIVE Technical Overview, ETSI OPEN SOURCE MANO, OSM White Paper, 1st ed. (Jan. 2019), https://osm.etsi.org/images/OSM-Whitepaper-TechContent-ReleaseFIVE-FINAL.pdf (collectively referred to as "[ETSINFV]"). Other virtualization technologies and/or service orchestration and automation platforms may be used such as, for example, those discussed in E2E Network Slicing Architecture, GSMA, Official Doc. NG.127, v1.0 (03 Jun. 2021), https://www.gsma.com/newsroom/wp-content/uploads//NG.127-v1.0-2.pdf, Open Network Automation Platform (ONAP) documentation, Release Istanbul, v9.0.1 (17 Feb. 2022), https://docs.onap.org/en/latest/index.html ("[ONAP]"), 3GPP Service Based Management Architecture (SBMA) as discussed in 3GPP TS 28.533 ("[TS28533]").

In another example implementation, the ECT is and/or operates according to the O-RAN framework, as discussed in O-RAN Working Group 1 (Use Cases and Overall Architecture): O-RAN Architecture Description, O-RAN ALLIANCE WG1, O-RAN Architecture Description v10.00, R003 (Oct. 2023) ("[ORAN.OAD]"); O-RAN Working Group 1 Slicing Architecture, O-RAN ALLIANCE WG1, Slicing Architecture Technical Specification v11.00, R003 (Oct. 2023); O-RAN Working Group 1 Use Cases Detailed Specification Architecture, v12.00, R003 (Oct. 2023) ("[ORAN.UseCases]"); O-RAN Working Group 2 (Non-RT RIC and A1 interface WG) A1 interface: Application Protocol, v04.00, R003 (Mar. 2023) ("[ORAN.A1AP]"); O-RAN Working Group 2 (Non-RT RIC and A1 interface WG) A1 interface: General Aspects and Principles, v03.01, R003 (Mar. 2023) ("[ORAN.A1-GAP]"); O-RAN Working Group 2 (Non-RT RIC and A1 interface WG) A1 interface: Type Definitions, v06.00, R003 (Oct. 2023) ("[ORAN.A1TD]"); O-RAN Working Group 2 (Non-RT RIC and A1 interface WG) A1 interface: Transport Protocol, v03.0, R003 (Oct. 2023); O-RAN Working Group 2 AI/ML workflow description and requirements v01.03 O-RAN ALLIANCE WG2 (Oct. 2021) ("[ORAN.AIML]"); O-RAN Working Group 2 (Non-RT RIC and A1 interface WG): R1 interface: General Aspects and Principles, v06.00, R003 (Oct. 2023); O-RAN Working Group 2 (Non-RT RIC and A1 interface WG): R1 interface: Use Cases and Requirements, v05.00, R003 (Oct. 2023); O-RAN Working Group 2 (Non-RT RIC and A1 interface WG) Non-RT RIC Architecture, v04.00, R003 (Oct. 2023) ("[O-RAN.Non-RT-RIC-ARCH]"); O-RAN Working Group 2 (Non-RT RIC and A1 interface WG): Use Cases and Requirements, v08.00, R003 (Oct. 2023) ("[ORAN.UseCaseReq]"); O-RAN Working Group 3 Near-Real-time RAN Intelligent Controller Architecture & E2 General Aspects and Principles, v04.01, R003 (Oct. 2023) ("[ORAN.E2GAP]"); O-RAN Working Group 3, Near-Real-time Intelligent Controller, E2 Application Protocol (E2AP), v04.00, R003 (Oct. 2023) ("[ORAN.E2AP]"); O-RAN Working Group 3 Near-Real-time Intelligent Controller E2 Service Model (E2SM), v04.00, R003 (Oct. 2023) ("[ORAN.E2SM]"); O-RAN Working Group 3 Near-Real-time Intelligent Controller E2 Service Model (E2SM) KPM, v04.00, R003 (Oct. 2023) ("[ORAN.E2SM-KPM]"); O-RAN Working Group 3 Near-Real-time Intelligent Controller E2 Service Model (E2SM), Cell Configuration and Control, v02.00, R003 (Oct. 2023) ("[ORAN.E2SM-CCC]"); O-RAN Working Group 3 Near-Real-time Intelligent Controller E2 Service Model (E2SM) RAN Function Network Interface (NI) v01.00 (Feb. 2020) ("[ORAN.E2SM-NI]"); O-RAN Working Group 3 Near-Real-time Intelligent Controller E2 Service Model (E2SM) RAN Control v04.00, R003 (Oct. 2023) ("[ORAN.E2SM-RC]"); O-RAN Working Group 3 (Near-Real-time RAN Intelligent Controller and E2 Interface Working Group): Near-RT RIC Architecture, v05.00, R003 (Oct. 2023) ("[ORAN.RICARCH]");

O-RAN Working Group 4 (Open Fronthaul Interfaces WG) Control, User and Synchronization Plane Specification, v13.00, R003 (Oct. 2023) ("[ORAN.CUS]"); O-RAN Fronthaul Working Group 4 Cooperative Transport Interface Transport Control Plane Specification, v04.00, R003 (Jun. 2023); O-RAN Fronthaul Working Group 4 Cooperative Transport Interface Transport Management Procedures Specification, v04.00, R003 (Jun. 2023); O-RAN Working Group 4 (Open Fronthaul Interfaces WG) Management Plane Specification, v13.00, R003 (Oct. 2023) ("[ORAN.MP]"); O-RAN Alliance Working Group 5 (Open F1/W1/E1/X2/Xn interface Workgroup): O1 Interface specification for O-CU-UP and O-CU-CP v06.00, R003 (Oct. 2023); O-RAN Alliance Working Group 5 (Open F1/W1/E1/X2/Xn interface Workgroup): O1 Interface specification for O-DU, v08.00, R003 (Oct. 2023); O-RAN Working Group 6, O2 Interface General Aspects and Principles v05.00, R003 (Oct. 2023); O-RAN Working Group 6 (Cloudification and Orchestration) Cloud Architecture and Deployment Scenarios for O-RAN Virtualized RAN v05.00 (Oct. 2023) ("[ORAN.CADS]"); O-RAN Working Group 6 (Cloudification and Orchestration Work Group): O-RAN Acceleration Abstraction Layer General Aspects and Principles, v07.00, R003 (Oct. 2023); O-RAN Working Group 6: O-Cloud Notification API Specification for Event Consumers, v03.00 (Oct. 2022) ("[ORAN.O-CloudNotificationAPI]"); O-RAN White Box Hardware Working Group Hardware Reference Design Specification for Indoor Pico Cell with Fronthaul Split Option 6 v02.00, O-RAN ALLIANCE WG7 (Oct. 2021) ("[ORAN.IPC-HRD-Opt6]"); O-RAN WG7 Hardware Reference Design Specification for Indoor Picocell (FR1) with Split Architecture Option 7-2 v03.00, O-RAN ALLIANCE WG7 (Oct. 2021) ("[ORAN.IPC-HRD-Opt7-2]"); O-RAN WG7 Hardware Reference Design Specification for Indoor Picocell (FR1) with Split Architecture Option 8 v03.00 (Oct. 2021) ("[ORAN.IPC-HRD-Opt8]"); O-RAN White Box Hardware Working Group Hardware Reference Design Specification for Outdoor Micro Cell with Split Architecture Option 7.2 v04.00, O-RAN ALLIANCE WG7 (Jun. 2023) ("[ORAN.OMC-HRD-Opt7-2]"); O-RAN White Box Hardware Working Group Hardware Reference Design Specification for Outdoor Macrocell with Split Architecture Option 7.2, v03.00, R003 (Jun. 2023) ("[ORAN.OMAC-HRD]"); O-RAN Open X-haul Transport Working Group Management interfaces for Transport Network Elements, v07.00, R003 (Oct. 2023); O-RAN Open Transport Working Group 9 Xhaul Packet Switched Architectures and Solutions, v06.00, R003 (Oct. 2023) ("[ORAN.XPSAAS]"); O-RAN Open X-haul Transport Working Group Synchronization Architecture and Solution Specification, v04.00 (Oct. 2023); O-RAN Open Xhaul Transport WG9 WDM-based Fronthaul Transport, v03.00, R003 (Mar. 2023); O-RAN Operations and Maintenance Architecture, v10.00, R003 (Oct. 2023) ("[ORAN.OAM-Arch]"); O-RAN Work Group 10 Topology Exposure and Inventory Management Services Use Cases and Requirement Specification v1.00, R003 (Jun. 2023); O-RAN Work Group 10 (OAM for O-RAN): O-RAN Operations and Maintenance Interface Specification, v11.00, R003 (Oct. 2023) ("[ORAN.OI-Interface]"); and O-RAN Work Group 10 (DAM for O-RAN): O-RAN Information Model and Data Models Specification v06.00, R003 (Oct. 2023) (collectively referred to as "[O-RAN]").

In another example implementation, the ECT is and/or operates according to the 3rd Generation Partnership Project (3GPP) System Aspects Working Group 6 (SA6) Architecture for enabling Edge Applications (referred to as "3GPP edge computing") as discussed in 3GPP TS 28.104, 3GPP TS 28.105, 3GPP TS 23.222 ("[TS23222]"), 3GPP TS 23.401, 3GPP TS 23.434 ("[TS23434]"), 3GPP TS 23.501 ("[TS23501]"), 3GPP TS 23.502 ("[TS23502]"), 3GPP TS 23.548 ("[TS23548]"), 3GPP TS 23.558 ("[TS23558]"), 3GPP TS 23.682 ("[TS23682]"), 3GPP TR 23.700-98 ("[TR23700-98]"), 3GPP TS 28.532 ("[TS28532]"), 3GPP TS 28.533 ("[TS28533]"), 3GPP TS 28.535 ("[TS28535]"), 3GPP TS 28.536 ("[TS28536]"), 3GPP TS 28.538 ("[TS28538]"), 3GPP TS 28.541 ("[TS28541]"), 3GPP TS 28.545 ("[TS28545]"), 3GPP TS 28.550 ("[TS28550]"), 3GPP TS 28.554 ("[TS28554]"), 3GPP TS 28.622 ("[TS28622]"), 3GPP TS 29.122 ("[TS29122]"), 3GPP TS 29.222 ("[TS29222]"), 3GPP TS 29.522 ("[TS29522]"), and 3GPP TS 33.122 ("[TS33122]") (collectively referred to as "[5GEdge]").

In another example implementation, the ECT is and/or operates according to the Intel® Smart Edge Open framework (formerly known as OpenNESS) as discussed in Intel® Smart Edge Open Developer Guide, version 21.09 (30 Sep. 2021), available at: https://smart-edge-open.github.io/ ("[ISEO]"), the contents of which is hereby incorporated by reference in its entirety.

In another example implementation, the ECT operates according to the Multi-Access Management Services (MAMS) framework as discussed in Kanugovi et al., Multi-Access Management Services (MAMS), INTERNET ENGINEERING TasK FORCE (IETF), Request for Comments (RFC) 8743 (Mar. 2020) ("[RFC8743]"), Ford etal., TCP Extensions for Multipath Operation with Multiple Addresses, IETF RFC 8684, (Mar. 2020), De Coninck et al., Multipath Extensions for QUIC (MP-QUIC), IETF DRAFT-DECONINCK-QUIC-MULTIPATH-07, IETA, QUIC Working Group (03-May-2021), Zhu et al., User-Plane Protocols for Multiple Access Management Service, IETF DRAFT-ZHU-INTAREA-MAMS-USER-PROTOCOL-09, IETA, INTAREA (04-Mar-2020), Zhu et al., Generic Multi-Access (GMA) Convergence Encapsulation Protocols, IETF RFC 9188 (Feb. 2022), and Zhu et al., UDP-based Generic Multi-Access (GMA) Control Protocol, IETF DRAFT-ZHU-INTAREA-GMA-CONTROL-04 (24 Aug. 2023) (collectively referred to as "[MAMS]").

It should be understood that the aforementioned edge computing frameworks/ECTs and services deployment examples are only illustrative examples of ECTs, and that the present disclosure may be applicable to many other or additional edge computing/networking technologies in various combinations and layouts of devices located at the edge of a network including the various edge computing networks/systems described herein. Further, the techniques disclosed herein may relate to other IoT edge network systems and configurations, and other intermediate processing entities and architectures may also be applicable to the present disclosure. Examples of such edge computing/networking technologies include [MEC]; [O-RAN]; [ISEO]; [5GEdge]; Content Delivery Networks (CDNs) (also referred to as "Content Distribution Networks" or the like); Mobility Service Provider (MSP) edge computing and/or Mobility as a Service (MaaS) provider systems (e.g., used in AECC architectures); Nebula edge-cloud systems; Fog computing systems; Cloudlet edge-cloud systems; Mobile Cloud Computing (MCC) systems; Central Office Re-architected as a Datacenter (CORD), mobile CORD (M-CORD) and/or Converged Multi-Access and Core (COMAC) systems; and/or the like. Further, the techniques disclosed herein may relate to other IoT edge network systems and configurations, and other intermediate processing entities and architectures may also be used for purposes of the present disclosure.

The interfaces of the 5GC 1040 include reference points and service-based interfaces. A reference point, at least in some examples, is a point at the conjunction of two non-overlapping functional groups, elements, or entities. The reference points in the 5GC 1040 include: N1 (between the UE 1002 and the AMF 1044), N2 (between RAN 1014 and AMF 1044), N3 (between RAN 1014 and UPF 1048), N4 (between the SMF 1046 and UPF 1048), N5 (between PCF 1056 and AF 1060), N6 (between UPF 1048 and DN 1036), N7 (between SMF 1046 and PCF 1056), N8 (between UDM 1058 and AMF 1044), N9 (between two UPFs 1048), N10 (between the UDM 1058 and the SMF 1046), N11 (between the AMF 1044 and the SMF 1046), N12 (between AUSF 1042 and AMF 1044), N13 (between AUSF 1042 and UDM 1058), N14 (between two AMFs 1044; not shown), N15 (between PCF 1056 and AMF 1044 in case of a non-roaming scenario, or between the PCF 1056 in a visited network and AMF 1044 in case of a roaming scenario), N16 (between two SMFs 1046; not shown), and N22 (between AMF 1044 and NSSF 1050). Other reference points not shown in Figure 10 can also be used, such as any of those discussed in [TS23501].

The service-based representation of Figure 10 represents NFs within the control plane that enable other authorized NFs to access their services. A service-based interface (SBI), at least in some examples, is an interface over which an NF can access the services of one or more other NFs. In some implementations, the service-based interfaces are API-based interfaces (e.g., HTTP/2, RESTful, SOAP, and/or any other API or web service) that can be used by an NF to call or invoke a particular service or service operation. The SBIs in the 5GC 1040 include: Namf (SBI exhibited by AMF 1044), Nsmf (SBI exhibited by SMF 1046), Nnef (SBI exhibited by NEF 1052), Npcf (SBI exhibited by PCF 1056), Nudm (SBI exhibited by the UDM 1058), Naf (SBI exhibited by AF 1060), Nnrf (SBI exhibited by NRF 1054), Nnssf (SBI exhibited by NSSF 1050), Nausf (SBI exhibited by AUSF 1042). Other service-based interfaces (e.g., Nudr, N5g-eir, and Nudsf) not shown in Figure 10 can also be used, such as any of those discussed in [TS23501].

Although not shown by Figure 10, the system 1000 may also include NFs that are not shown such as, for example, UDR, Unstructured Data Storage Function (UDSF), Network Slice Admission Control Function (NSACF), Network Slice-specific and Stand-alone Non-Public Network (SNPN) Authentication and Authorization Function (NSSAAF), UE radio Capability Management Function (UCMF), 5G-Equipment Identity Register (5G-EIR), CHarging Function (CHF), Time Sensitive Networking (TSN) AF 1060, Time Sensitive Communication and Time Synchronization Function (TSCTSF), Data Collection Coordination Function (DCCF), Analytics Data Repository Function (ADRF), Messaging Framework Adaptor Function (MFAF), Binding Support Function (BSF), Non-Seamless WLAN Offload Function (NSWOF), Service Communication Proxy (SCP), Security Edge Protection Proxy (SEPP), Non-3GPP InterWorking Function (N3IWF), Trusted Non-3GPP Gateway Function (TNGF), Wireline Access Gateway Function (W-AGF), and/or Trusted WLAN Interworking Function (TWIF) as discussed in [TS23501].

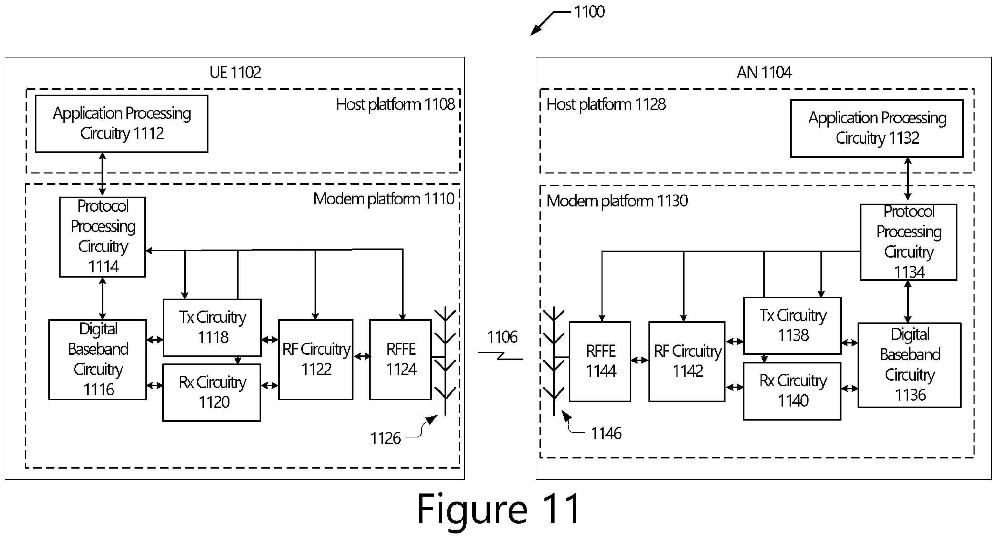

Figure 11 schematically illustrates a wireless network 1100. The wireless network 1100 includes a UE 1102 in wireless communication with an AN 1104. The UE 1102 and AN 1104 may be similar to, and substantially interchangeable with, like-named components described elsewhere herein.

The UE 1102 may be communicatively coupled with the AN 1104 via connection 1106. The connection YY06 is illustrated as an air interface to enable communicative coupling, and can be consistent with cellular communications protocols such as an LTE protocol or a 5G NR protocol operating at mmWave or sub-6GHz frequencies.

The UE 1102 includes a host platform 1108 coupled with a modem platform 1110. The host platform 1108 includes application processing circuitry 1112, which may be coupled with protocol processing circuitry 1114 of the modem platform 1110. The application processing circuitry 1112 may run various applications for the UE 1102 that source/sink application data. The application processing circuitry 1112 may further implement one or more layer operations to transmit/receive application data to/from a data network. These layer operations includes transport (for example UDP) and Internet (for example, IP) operations

The protocol processing circuitry 1114 may implement one or more of layer operations to facilitate transmission or reception of data over the connection 1106. The layer operations implemented by the protocol processing circuitry 1114 includes, for example, MAC, RLC, PDCP, RRC and NAS operations.

The modem platform 1110 may further include digital baseband circuitry 1116 that may implement one or more layer operations that are "below" layer operations performed by the protocol processing circuitry 1114 in a network protocol stack. These operations includes, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which includes one or more of space-time, space-frequency or spatial coding, reference signal generation/detection, preamble sequence generation and/or decoding, synchronization sequence generation/detection, control channel signal blind decoding, and other related functions.

The modem platform 1110 may further include transmit circuitry 1118, receive circuitry 1120, RF circuitry 1122, and RF front end (RFFE) 1124, which includes or connect to one or more antenna panels 1126. Briefly, the transmit circuitry 1118 includes a digital-to-analog converter, mixer, intermediate frequency (IF) components, and/or the like; the receive circuitry 1120 includes an analog-to-digital converter, mixer, IF components, and/or the like; the RF circuitry 1122 includes a low-noise amplifier, a power amplifier, power tracking components, and/or the like; RFFE 1124 includes filters (for example, surface/bulk acoustic wave filters), switches, antenna tuners, beamforming components (for example, phasearray antenna components), and/or the like. The selection and arrangement of the components of the transmit circuitry 1118, receive circuitry 1120, RF circuitry 1122, RFFE 1124, and antenna panels 1126 (referred generically as "transmit/receive components") may be specific to details of a specific implementation such as, for example, whether communication is TDM or FDM, in mmWave or sub-6 gHz frequencies, and/or the like. In some examples, the transmit/receive components may be arranged in multiple parallel transmit/receive chains, may be disposed in the same or different chips/modules, and/or the like.

In some examples, the protocol processing circuitry 1114 includes one or more instances of control circuitry (not shown) to provide control functions for the transmit/receive components.

A UE reception may be established by and via the antenna panels 1126, RFFE 1124, RF circuitry 1122, receive circuitry 1120, digital baseband circuitry 1116, and protocol processing circuitry 1114. In some examples, the antenna panels 1126 may receive a transmission from the AN 1104 by receive-beamforming signals received by a set of antennas/antenna elements of the one or more antenna panels 1126.

A UE transmission may be established by and via the protocol processing circuitry 1114, digital baseband circuitry 1116, transmit circuitry 1118, RF circuitry 1122, RFFE 1124, and antenna panels 1126. In some examples, the transmit components of the UE 1104 may apply a spatial filter to the data to be transmitted to form a transmit beam emitted by the antenna elements of the antenna panels 1126.

Similar to the UE 1102, the AN 1104 includes a host platform 1128 coupled with a modem platform 1130. The host platform 1128 includes application processing circuitry 1132 coupled with protocol processing circuitry 1134 of the modem platform 1130. The modem platform may further include digital baseband circuitry 1136, transmit circuitry 1138, receive circuitry 1140, RF circuitry 1142, RFFE circuitry 1144, and antenna panels 1146. The components of the AN 1104 may be similar to and substantially interchangeable with like-named components of the UE 1102. In addition to performing data transmission/reception as described above, the components of the AN 1108 may perform various logical functions that include, for example, RNC functions such as radio bearer management, uplink and downlink dynamic radio resource management, and data packet scheduling.

Examples of the antenna elements of the antenna panels 1126 and/or the antenna elements of the antenna panels 1146 include planar inverted-F antennas (PIFAs), monopole antennas, dipole antennas, loop antennas, patch antennas, Yagi antennas, parabolic dish antennas, omni-directional antennas, and/or the like.

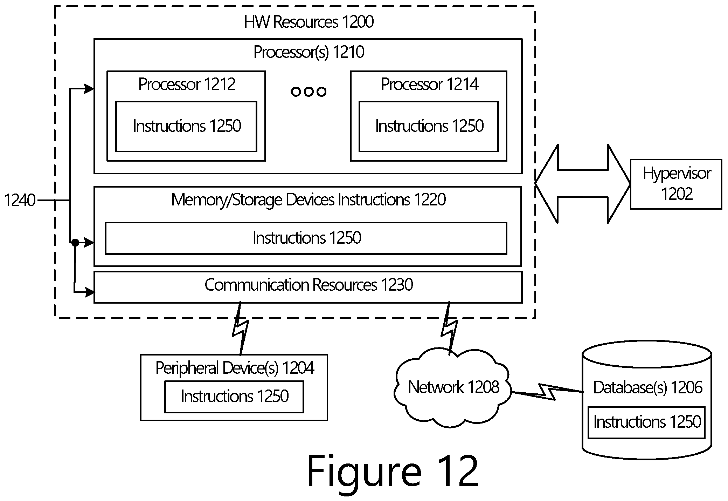

Figure 12 illustrates components capable of reading instructions from a machine-readable or computer-readable medium (e.g., a non-transitory machine-readable storage medium) and perform any one or more of the methodologies discussed herein. Specifically, Figure 12 shows hardware resources 1200 including one or more processors (or processor cores) 1210, one or more memory/storage devices 1220, and one or more communication resources 1230, each of which may be communicatively coupled via a bus 1240 or other interface circuitry. For examples where node virtualization (e.g., NFV) is utilized, a hypervisor 1202 may be executed to provide an execution environment for one or more network slices/sub-slices to utilize the hardware resources 1200. In some examples, the hardware resources 1200 may be implemented in or by an individual compute node, which may be housed in an enclosure of various form factors. In other examples, the hardware resources 1200 may be implemented by multiple compute nodes that may be deployed in one or more data centers and/or distributed across one or more geographic regions.

The processors 1210 may include, for example, a processor 1212 and a processor 1214. The processors 1210 may be or include, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), a microprocessor or controller, a multi-core processor, a multithreaded processor, an ultra-low voltage processor, an embedded processor, an xPU, a data processing unit (DPU), an Infrastructure Processing Unit (IPU), a network processing unit (NPU), another processor (including any of those discussed herein), and/or any suitable combination thereof.

The memory/storage devices 1220 may include main memory, disk storage, or any suitable combination thereof. The memory/storage devices 1220 may include, but are not limited to, any type of volatile, non-volatile, semi-volatile memory, and/or any combination thereof. As examples, the memory/storage devices 1220 can be or include random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, dual inline memory modules (DIMMs), micro-DIMMs, MiniDIMMs, block addressable memory device(s) (e.g., those based on NAND or NOR technologies (e.g., single-level cell (SLC), Multi-Level Cell (MLC), Quad-Level Cell (QLC), Tri-Level Cell (TLC), or some other NAND), read-only memory (ROM), programmable ROM (PROM), erasable PROM (EPROM), electrically EPROM (EEPROM), flash memory, non-volatile RAM (NVRAM), solid-state storage, magnetic disk storage mediums, optical storage mediums, memory devices that use chalcogenide glass, multi-threshold level NAND flash memory, NOR flash memory, single or multi-level Phase Change Memory (PCM) and/or phase change memory with a switch (PCMS), NVM devices that use chalcogenide phase change material (e.g., chalcogenide glass), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, and/or a combination of any of the aforementioned memory devices, and/or other memory.

The communication resources 1230 may include interconnection or network interface controllers, components, or other suitable devices to communicate with one or more peripheral devices 1204 or one or more databases 1206 or other network elements via a network 1208. For example, the communication resources 1230 may include wired communication components (e.g., for coupling via USB, Ethernet, and/or the like), cellular communication components, NFC components, Bluetooth® (or Bluetooth® Low Energy) components, Wi-Fi® components, and other communication components.

Instructions 1250 comprise software, program code, application(s), applet(s), an app(s), firmware, microcode, machine code, and/or other executable code for causing at least any of the processors 1210 to perform any one or more of the methodologies and/or techniques discussed herein. The instructions 1250 may reside, completely or partially, within at least one of the processors 1210 (e.g., within the processor's cache memory), the memory/storage devices 1220, or any suitable combination thereof. Furthermore, any portion of the instructions 1250 may be transferred to the hardware resources 1200 from any combination of the peripheral devices 1204 or the databases 1206. Accordingly, the memory of processors 1210, the memory/storage devices 1220, the peripheral devices 1204, and the databases 1206 are examples of computer-readable and machine-readable media.

In some examples, the peripheral devices 1204 may represent one or more sensors (also referred to as "sensor circuitry"). The sensor circuitry includes devices, modules, or subsystems whose purpose is to detect events or changes in its environment and send the information (sensor data) about the detected events to some other a device, module, subsystem, and/or the like. Individual sensors may be exteroceptive sensors (e.g., sensors that capture and/or measure environmental phenomena and/ external states), proprioceptive sensors (e.g., sensors that capture and/or measure internal states of a compute node or platform and/or individual components of a compute node or platform), and/or exproprioceptive sensors (e.g., sensors that capture, measure, or correlate internal states and external states). Examples of such sensors include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors, including sensors for measuring the temperature of internal components and sensors for measuring temperature external to the compute node or platform); pressure sensors; barometric pressure sensors; gravimeters; altimeters; image capture devices (e.g., cameras); light detection and ranging (LiDAR) sensors; proximity sensors (e.g., infrared radiation detector and the like); depth sensors, ambient light sensors; optical light sensors; ultrasonic transceivers; microphones; and the like.

Additionally or alternatively, the peripheral devices 1204 may represent one or more actuators, which allow a compute node, platform, machine, device, mechanism, system, or other object to change its state, position, and/or orientation, or move or control a compute node, platform, machine, device, mechanism, system, or other object. The actuators comprise electrical and/or mechanical devices for moving or controlling a mechanism or system, and converts energy (e.g., electric current or moving air and/or liquid) into some kind of motion. As examples, the actuators can be or include any number and combination of the following: soft actuators (e.g., actuators that changes its shape in response to a stimuli such as, for example, mechanical, thermal, magnetic, and/or electrical stimuli), hydraulic actuators, pneumatic actuators, mechanical actuators, electromechanical actuators (EMAs), microelectromechanical actuators, electrohydraulic actuators, linear actuators, linear motors, rotary motors, DC motors, stepper motors, servomechanisms, electromechanical switches, electromechanical relays (EMRs), power switches, valve actuators, piezoelectric actuators and/or biomorphs, thermal biomorphs, solid state actuators, solid state relays (SSRs), shape-memory alloy-based actuators, electroactive polymer-based actuators, relay driver integrated circuits (ICs), solenoids, impactive actuators/mechanisms (e.g., jaws, claws, tweezers, clamps, hooks, mechanical fingers, humaniform dexterous robotic hands, and/or other gripper mechanisms that physically grasp by direct impact upon an object), propulsion actuators/mechanisms (e.g., wheels, axles, thrusters, propellers, engines, motors (e.g., those discussed previously), clutches, and the like), projectile actuators/mechanisms (e.g., mechanisms that shoot or propel objects or elements), and/or audible sound generators, visual warning devices, and/or other like electromechanical components. Additionally or alternatively, the actuators can include virtual instrumentation and/or virtualized actuator devices. Additionally or alternatively, the actuators can include various controller and/or components of the compute node or platform (or components thereof) such as, for example, host controllers, cooling element controllers, baseboard management controller (BMC), platform controller hub (PCH), uncore components (e.g., shared last level cache (LLC) cache, caching agent (Cbo), integrated memory controller (IMC), home agent (HA), power control unit (PCU), configuration agent (Ubox), integrated I/O controller (IIO), and interconnect (IX) link interfaces and/or controllers), and/or any other components such as any of those discussed herein. The compute node or platform may be configured to operate one or more actuators based on one or more captured events, instructions, control signals, and/or configurations received from a service provider, client device, and/or other components of a compute node or platform. Additionally or alternatively, the actuators are used to change the operational state (e.g., on/off, zoom or focus, and/or the like), position, and/or orientation of the sensors.

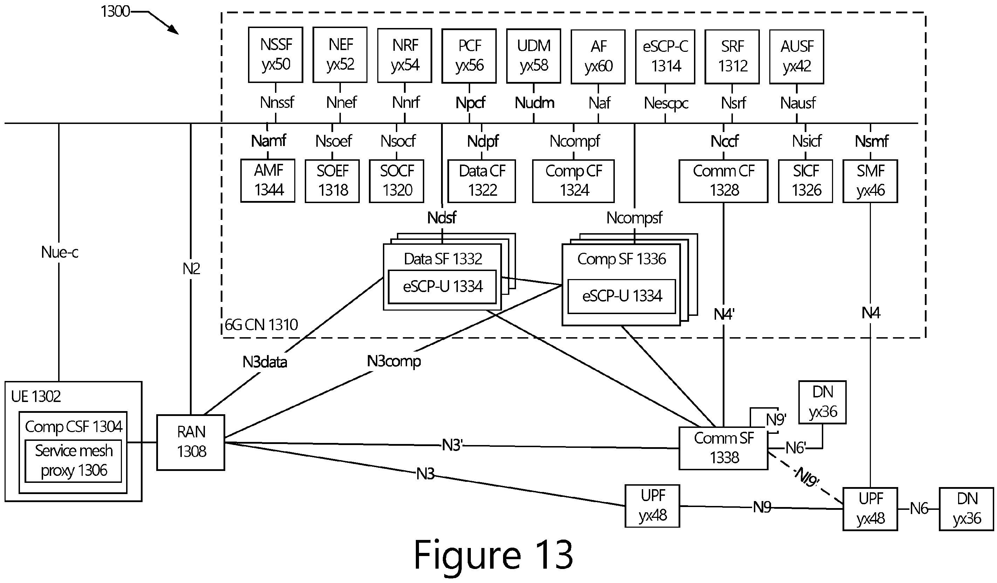

Figure 13 illustrates an example cellular network 1300. The network 1300 may operate in a matter consistent with 3GPP technical specifications or technical reports for 6G systems. In some examples, the network 1300 may operate concurrently with network 1000. For example, in some examples, the network 1300 may share one or more frequency or bandwidth resources with network 1000. As one specific example, a UE (e.g., UE 1302) may be configured to operate in both network 1300 and network 1000. Such configuration may be based on a UE including circuitry configured for communication with frequency and bandwidth resources of both networks 1000 and 1300. In general, several elements of network 1300 may share one or more characteristics with elements of network 1000. For the sake of brevity and clarity, such elements may not be repeated in the description of network 1300.

The network 1300 may include a UE 1302, which may include any mobile or non-mobile computing device designed to communicate with a RAN 1308 via an over-the-air connection. The UE 1302 may be similar to, for example, UE 1002. The UE 1302 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, and/or the like.

Although not specifically shown in Figure 13, in some examples the network 1300 may include a set of UEs coupled directly with one another via a sidelink interface. The UEs may be M2M/D2D devices that communicate using physical sidelink channels such as, but not limited to, PSBCH, PSDCH, PSSCH, PSCCH, PSFCH, and/or the like. Similarly, although not specifically shown in Figure 13, the UE 1302 may be communicatively coupled with an AP such as AP 1006 as described with respect to Figure 10. Additionally, although not specifically shown in Figure 13, in some examples the RAN 1308 may include one or more ANs such as NAN 1014 as described with respect to Figure 10. The RAN 1308 and/or the AN of the RAN 1308 may be referred to as a base station (BS), a RAN node, or using some other term or name.

The UE 1302 and the RAN 1308 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 1308 may allow for communication between the UE 1302 and a 6G core network (CN) 1310. Specifically, the RAN 1308 may facilitate the transmission and reception of data between the UE 1302 and the 6G CN 1310. The 6G CN 1310 may include various functions such as NSSF 1050, NEF 1052, NRF 1054, PCF 1056, UDM 1058, AF 1060, SMF 1046, and AUSF 1042. The 6G CN 1310 may additional include UPF 1048 and DN 1036 as shown in Figure 13.

Additionally, the RAN 1308 may include various additional functions that are in addition to, or alternative to, functions of a legacy cellular network such as a 4G or 5G network. Two such functions may include a Compute Control Function (Comp CF) 1324 and a Compute Service Function (Comp SF) 1336. The Comp CF 1324 and the Comp SF 1336 may be parts or functions of the Computing Service Plane. Comp CF 1324 may be a control plane function that provides functionalities such as management of the Comp SF 1336, computing task context generation and management (e.g., create, read, modify, delete), interaction with the underlaying computing infrastructure for computing resource management, and/or the like.. Comp SF 1336 may be a user plane function that serves as the gateway to interface computing service users (such as UE 1302) and computing nodes behind a Comp SF instance. Some functionalities of the Comp SF 1336 may include: parse computing service data received from users to compute tasks executable by computing nodes; hold service mesh ingress gateway or service API gateway; service and charging policies enforcement; performance monitoring and telemetry collection, and/or the like. In some examples, a Comp SF 1336 instance may serve as the user plane gateway for a cluster of computing nodes. A Comp CF 1324 instance may control one or more Comp SF 1336 instances.

Two other such functions may include a Communication Control Function (Comm CF) 1328 and a Communication Service Function (Comm SF) 1338, which may be parts of the Communication Service Plane. The Comm CF 1328 may be the control plane function for managing the Comm SF 1338, communication sessions creation/configuration/releasing, and managing communication session context. The Comm SF 1338 may be a user plane function for data transport. Comm CF 1328 and Comm SF 1338 may be considered as upgrades of SMF 1046 and UPF 1048, which were described with respect to a 5G system in Figure 10. The upgrades provided by the Comm CF 1328 and the Comm SF 1338 may enable service-aware transport. For legacy (e.g., 4G or 5G) data transport, SMF 1046 and UPF 1048 may still be used.

Two other such functions may include a Data Control Function (Data CF) 1322 and Data Service Function (Data SF) 1332 may be parts of the Data Service Plane. Data CF 1322 may be a control plane function and provides functionalities such as Data SF 1332 management, Data service creation/configuration/releasing, Data service context management, and/or the like. Data SF 1332 may be a user plane function and serve as the gateway between data service users (such as UE 1302 and the various functions of the 6G CN 1310) and data service endpoints behind the gateway. Specific functionalities may include include: parse data service user data and forward to corresponding data service endpoints, generate charging data, report data service status.

Another such function may be the Service Orchestration and Chaining Function (SOCF) 1320, which may discover, orchestrate and chain up communication/-computing/data services provided by functions in the network. Upon receiving service requests from users, SOCF 1320 may interact with one or more of Comp CF 1324, Comm CF 1328, and Data CF 1322 to identify Comp SF 1336, Comm SF 1338, and Data SF 1332 instances, configure service resources, and generate the service chain, which could contain multiple Comp SF 1336, Comm SF 1338, and Data SF 1332 instances and their associated computing endpoints. Workload processing and data movement may then be conducted within the generated service chain. The SOCF 1320 may also responsible for maintaining, updating, and releasing a created service chain.

Another such function may be the service registration function (SRF) 1312, which may act as a registry for system services provided in the user plane such as services provided by service endpoints behind Comp SF 1336 and Data SF 1332 gateways and services provided by the UE 1302. The SRF 1312 may be considered a counterpart of NRF 1054, which may act as the registry for network functions.

Other such functions may include an evolved service communication proxy (eSCP) and service infrastructure control function (SICF) 1326, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 1312 and eSCP-U 1334, for control plane service communication proxy and user plane service communication proxy, respectively. The SICF 1326 may control and configure eCSP instances in terms of service traffic routing policies, access rules, load balancing configurations, performance monitoring, and/or the like.

Another such function is the AMF 1344. The AMF 1344 may be similar to 1044, but with additional functionality. Specifically, the AMF 1344 may include potential functional repartition, such as move the message forwarding functionality from the AMF 1344 to the RAN 1308.

Another such function is the service orchestration exposure function (SOEF) 1318. The SOEF may be configured to expose service orchestration and chaining services to external users such as applications.

The UE 1302 may include an additional function that is referred to as a computing client service function (comp CSF) 1304. The comp CSF 1304 may have both the control plane functionalities and user plane functionalities, and may interact with corresponding network side functions such as SOCF 1320, Comp CF 1324, Comp SF 1336, Data CF 1322, and/or Data SF 1332 for service discovery, request/response, compute task workload exchange, and/or the like. The Comp CSF 1304 may also work with network side functions to decide on whether a computing task should be run on the UE 1302, the RAN 1308, and/or an element of the 6G CN 1310.

The UE 1302 and/or the Comp CSF 1304 may include a service mesh proxy 1306. The service mesh proxy 1306 may act as a proxy for service-to-service communication in the user plane. Capabilities of the service mesh proxy 1306 may include one or more of addressing, security, load balancing, and/or the like.

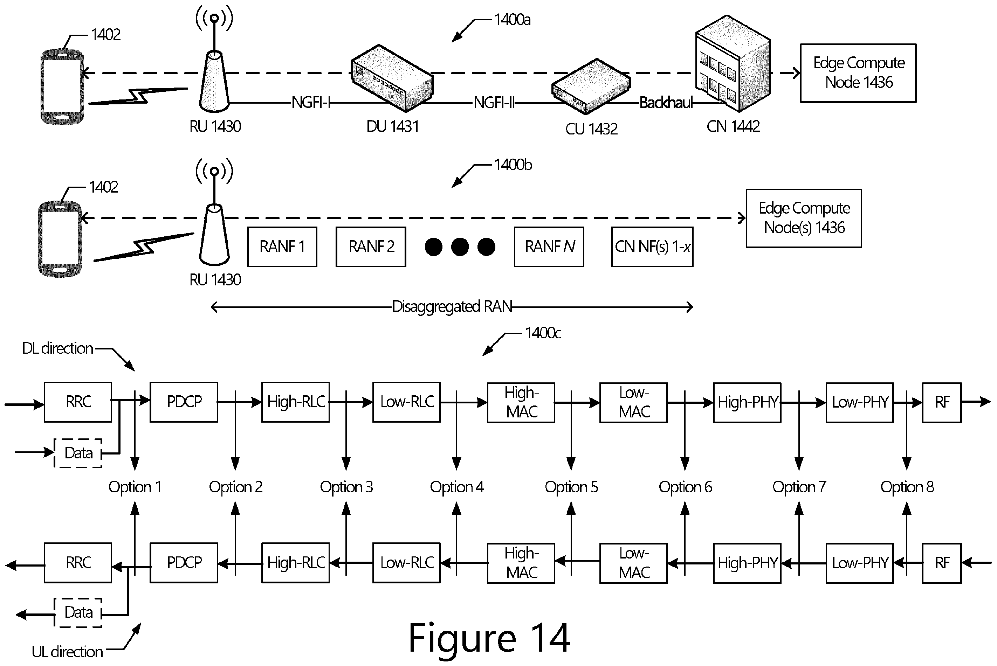

Figure 14 shows example network deployments including an example next generation fronthaul (NGF) deployment 1400a where a user equipment (UE) 1402 is connected to an RU 1430 (also referred to as a "remote radio unit 1430", "a remote radio head 1430", or " RRH 1430") via an air interface, the RU 1430 is connected to a Digital Unit (DU) 1431 via a NGF interface (NGFI)-I, the DU 1431 is connected to a Central Unit (CU) 1432 via an NGFI-II, and the CU 1432 is connected to a core network (CN) 1442 via a backhaul interface. In 3GPP NG-RAN implementations (see e.g., [TS38401]), the DU 1431 may be a distributed unit (for purposes of the present disclosure, the term "DU" may refer to a digital unit and/or a distributed unit unless the context dictates otherwise). The UEs 1402 may be the same or similar to, and/or share one or more features with UE 1002, UE 1102, hardware resources 1200, UE 1302, UE 1402, and/or any other UE described herein.

In some implementations, the NGF deployment 1400a may be arranged in a distributed RAN (D-RAN) architecture where the CU 1432, DU 1431, and RU 1430 reside at a cell site and the CN 1442 is located at a centralized site. Alternatively, the NGF deployment 1400a may be arranged in a centralized RAN (C-RAN) architecture with centralized processing of one or more baseband units (BBUs) at the centralized site. In C-RAN architectures, the radio components are split into discrete components, which can be located in different locations. In one example C-RAN implementation, only the RU 1430 is disposed at the cell site, and the DU 1431, the CU 1432, and the CN 1442 are centralized or disposed at a central location. In another example C-RAN implementation, the RU 1430 and the DU 1431 are located at the cell site and the CU 1432 and the CN 1442 are at the centralized site. In another example C-RAN implementation, only the RU 1430 is disposed at the cell site, the DU 1431 and the CU 1432 are located a RAN hub site, and the CN 1442 is at the centralized site.

The CU 1432 is a central controller that can serve or otherwise connect to one or multiple DUs 1431 and/or multiple RUs 1430. The CU 1432 is network (logical) nodes hosting higher/upper layers of a network protocol functional split. For example, in the 3GPP NG-RAN and/or O-RAN architectures, a CU 1432 hosts the radio resource control (RRC), Service Data Adaptation Protocol (SDAP), and/or Packet Data Convergence Protocol (PDCP) layers of a next generation NodeB (gNB), or hosts the RRC and PDCP protocol layers when included in or operating as an E-UTRA-NR gNB (en-gNB). The SDAP sublayer performs mapping between QoS flows and a data radio bearers (DRBs) and marking QoS flow IDs (QFI) in both DL and UL packets. The PDCP sublayer performs transfers user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery. In various implementations, a CU 1432 terminates respective F1 interfaces connected with corresponding DUs 1431 (see e.g., [TS38401]).

A CU 1432 may include a CU-control plane (CP) entity (referred to herein as "CU-CP 1432") and a CU-user plane (UP) entity (referred to herein as "CU-UP 1432"). The CU-CP 1432 is a logical node hosting the RRC layer and the control plane part of the PDCP protocol layer of the CU 1432 (e.g., a gNB-CU for an en-gNB or a gNB). The CU-CP terminates an E1 interface connected with the CU-UP and the F1-C interface connected with a DU 1431. The CU-UP 1432 is a logical node hosting the user plane part of the PDCP protocol layer (e.g., for a gNB-CU 1432 of an en-gNB), and the user plane part of the PDCP protocol layer and the SDAP protocol layer (e.g., for the gNB-CU 1432 of a gNB). The CU-UP 1432 terminates the E1 interface connected with the CU-CP 1432 and the F1-U interface connected with a DU 1431. In some examples, the CU 1432 (or the CU-CP 1432 and CU-UP 1432) is the same or similar as the O-CU-CP 1621 and/or O-CU-UP 1622 of Figure 16.

The DU 1431 controls radio resources, such as time and frequency bands, locally in real time, and allocates resources to one or more UEs. The DUs 1431 are network (logical) nodes hosting middle and/or lower layers of the network protocol functional split. For example, in the 3GPP NG-RAN and/or O-RAN architectures, a DU 1431 hosts the radio link control (RLC), medium access control (MAC), and high-physical (PHY) layers of the gNB or en-gNB, and its operation is at least partly controlled by the CU 1432. The RLC sublayer operates in one or more of a Transparent Mode (TM), Unacknowledged Mode (UM), and Acknowledged Mode (AM). The RLC sublayer performs transfer of upper layer PDUs; sequence numbering independent of the one in PDCP (UM and AM); error Correction through ARQ (AM only); segmentation (AM and UM) and re-segmentation (AM only) of RLC SDUs; reassembly of SDU (AM and UM); duplicate detection (AM only); RLC SDU discard (AM and UM); RLC re-establishment; and/or protocol error detection (AM only). The MAC sublayer performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding. In some implementations, a DU 1431 can host a Backhaul Adaptation Protocol (BAP) layer (see e.g., 3GPP TS 38.340 v17.5.0 (2023-06-30)) and/or a F1 application protocol (FLAP) (see e.g., 3GPP TS 38.470 v17.5.0 (2023-06-29)), such as when the DU 1431 is operating as an Integrated Access and Backhaul (IAB) node. One DU 1431 supports one or multiple cells, and one cell is supported by only one DU 1431. A DU 1431 terminates the F1 interface connected with a CU 1432. Additionally or alternatively, the DU 1431 may be connected to one or more RRHs/RUs 1430. In some examples, the DU 1431 is the same or similar as the O-DU 1615 of Figure 16.

The RU 1430 is a transmission/reception point (TRP) or other physical node that handles radiofrequency (RF) processing functions. The RU 1430 is a network (logical) node hosting lower layers based on a lower layer functional split. For example, in 3GPP NG-RAN and/or O-RAN architectures, the RU 1430 hosts low-PHY layer functions and RF processing of the radio interface based on a lower layer functional split. The RU 1430 may be similar to 3GPP's transmission/reception point (TRP) or RRH, but specifically includes the Low-PHY layer. Examples of the low-PHY functions include fast Fourier transform (FFT), inverse FFT (iFFT), physical random access channel (PRACH) extraction, and the like. In some examples, the RU 1430 is the same or similar as the O-RU 1516, 1616 of Figures 15 and 16.

Each of the CUs 1432, DUs 1431, and RUs 1430 are connected through respective links, which may be any suitable wireless and/or wired (e.g., fiber, copper, and the like) links. In some implementations, various combinations of the CU 1432, DU 1431, and RU 1430 may correspond to one or more of the RAN 1004, NAN 1014, AP 1006, and/or any other NAN, such as any of those discussed herein. Additional aspects of CUs 1432, DUs 1431, and RUs 1430 are discussed in [O-RAN], [TS38401], [TS38410], and [TS38300],

In some implementations, a fronthaul gateway function (FHGW) may be disposed between the DU 1431 and the RU/RRU 1430 (not shown by Figure 14), where the interface between the DU 1431 and the FHGW is an Open Fronthaul (e.g., Option 7-2x) interface, the interface between FHGW function and the RU/RRU 1430 is an Open Fronthaul (e.g., Option 7-2x) interface or any other suitable interface (e.g., option 7, option 8, or the like) including those that do not support Open Fronthaul (e.g., Option 7-2x). The FHGW may be packaged with one or more other functions (e.g., Ethernet switching and/or the like) in a physical device or appliance. In some implementations, a RAN controller may be communicatively coupled with the CU 1432 and/or the DU 1431.

The NGFI (also referred to as "xHaul" or the like) is a two-level fronthaul architecture that separates the traditional RRU 1430 to BBU connectivity in the C-RAN architecture into two levels, namely levels I and II. Level I connects the RU 1430 via the NGFI-I to the DU 1431, and level II connects the DU 1431 via the NGFI-II to the CU 1432 as shown by deployment 1400a in Figure 14. The NGFI-I and NGFI-II connections may be wired connections or wireless connections, which may utilize any suitable RAT such as any of those discussed herein. The purpose of the two-level architecture is to distribute (split) the RAN node protocol functions between CU 1432 and DU 1431 such that latencies are relaxed, giving more deployment flexibilities. In general, the NGFI-I interfaces with the lower layers of the function split which have stringent delay and data rate requirements, whereas NGFI-II interfaces with higher layers of the function split relative to the layers of the NGFI-I, relaxing the requirements for the fronthaul link. Examples of the NGFI fronthaul interfaces and functional split architectures include O-RAN 7.2x fronthaul (see e.g., [ORAN.XPSAAS] and [ORAN.CUS]), Enhanced Common Radio Interface (CPRI) based C-RAN fronthaul (see e.g., Common Public Radio Interface: eCPRI Interface Specification, eCPRI Specification v2.0 (2019-05-10), Common Public Radio Interface: Requirements for the eCPRI Transport Network, eCPRI Transport Network v1.2 (2018-06-25), and [ORAN.CUS]), Radio over Ethernet (RoE) based C-RAN fronthaul (see e.g., IEEE Standard for Radio over Ethernet Encapsulations and Mappings, IEEE Standards Association, IEEE 1914.3-2018 (05 Oct. 2018) ("[IEEE1914.3]")), and/or the like. Additional aspects of NGFI are also discussed in [ORAN.XPSAAS], [ORAN.CUS], IEEE Standard for Packet-based Fronthaul Transport Networks, IEEE Standards Association, IEEE 1914.1-2019 (21 Apr. 2020) ("[IEEE1914.1]"), [IEEE1914.3], and Nasrallah et al., Ultra-Low Latency (ULL) Networks: A Comprehensive Survey Covering the IEEE TSN Standard and Related ULL Research, arXiv:1803.07673v1 [cs.NI] (20 Mar. 2018) ("[Nasrallah]").

In one example, the deployment 1400a may implement a low level split (LLS) (also referred to as a "Lower Layer Functional Split 7-2x" or "Split Option 7-2x") that runs between the RU 1430 (e.g., an O-RU in O-RAN architectures) and the DU 1431 (e.g., an O-DU in O-RAN architectures) (see e.g., [ORAN.IPC-HRD-Opt7-2], [ORAN.OMAC-HRD], [ORAN.OMC-HRD-Opt7-2], [ORAN.OMC-HRD-Opt7-2]). In this example implementation, the NGFI-I is the Open Fronthaul interface described in the O-RAN Open Fronthaul Specification (see e.g., [ORAN.CUS]). Other LLS options may be used such as the relevant interfaces described in other standards or specifications such as, for example, the 3GPP NG-RAN functional split (see e.g., [TS38401] and 3GPP TR 38.801 v14.0.0 (2017-04-03)), the Small Cell Forum for Split Option 6 (see e.g., 5G small cell architecture and product definitions: Configurations and Specifications for companies deploying small cells 2020-2025, Small Cell Forum, document 238.10.01 (05 Jul. 2020) ("[SCF238]"), 5G NR FR1 Reference Design: The case for a common, modular architecture for 5G NR FR1 small cell distributed radio units, Small Cell Forum, document 251.10.01 (15 Dec. 2021) ("[SCF251]"), and [ORAN.IPC-HRD-Opt6], and/or in O-RAN white-box hardware Split Option 8 (e.g., [ORAN.IPC-HRD-Opt8]).

Additionally or alternatively, the CUs 1432, DUs 1431, and/or RUs 1430 may be IAB nodes. IAB enables wireless relaying in an NG-RAN where a relaying node (referred to as an "IAB-node") supports access and backhauling via 3GPP 5G/new radio (NR) links/interfaces. The terminating node of NR backhauling on the network side is referred to as an "IAB-donor", which represents a RAN node (e.g., a gNB) with additional functionality to support IAB. Backhauling can occur via a single or via multiple hops. All IAB-nodes that are connected to an IAB-donor via one or multiple hops form a directed acyclic graph (DAG) topology with the IAB-donor as its root. The IAB-donor performs centralized resource, topology and route management for the IAB topology. The IAB architecture is shown and described in [TS38300],

Although the NGF deployment 1400a shows the CU 1432, DU 1431, RRH 1430, and CN 1442 as separate entities, in other implementations some or all of these network nodes can be bundled, combined, or otherwise integrated with one another into a single device or element, including collapsing some internal interfaces (e.g., F1-C, F1-U, E1, E2, and the like). At least the following implementations are possible: (i) integrating the CU 1432 and the DU 1431 (e.g., a CU-DU), which is connected to the RRH 1430 via the NGFI-I; (ii) integrating the DU 1431 and the RRH 1430 integrated (e.g., CU-DU), which is connected to the CU 1432 via NGFI-II; (iii) integrating a RAN controller and the CU 1432, which is connected to the DU 1431 via NGFI-II; (iv) integrating the CU 1432, the DU 1431, and the RU 1430, which is connected to the CN 1442 via backhaul interface; and (v) integrating the network controller (or intelligent controller), the CU 1432, the DU 1431, and the RU 1430. Any of the aforementioned example implementations involving the CU 1432 may also include integrating the CU-CP 1432 and CP-UP 1432.

Figure 14 also shows an example RAN disaggregation deployment 1400b (also referred to as "disaggregated RAN 1400b") where the UE 1402 is connected to the RRH 1430, and the RRH 1430 is communicatively coupled with one or more of the RAN functions (RANFs) 1-$N$ (where $N$ is a number). The RANFs 1-$N$ are disaggregated and distributed geographically across several component segments and network nodes. In some implementations, each RANF 1-$N$ is a software (SW) element operated by a physical compute node and the RRH 1430 includes radiofrequency (RF) circuitry (e.g., an RF propagation module for a particular RAT and/or the like).

In this example, the RANF 1 is operated on a physical compute node that is co-located with the RRH 1430 and the other RANFs are disposed at locations further away from the RRH 1430. Additionally in this example, the CN 1442 is also disaggregated into CN NFs 1-$x$ (where $x$ is a number) in a same or similar manner as the RANFs 1-$N$, although in other implementations the CN 1442 is not disaggregated.

Network disaggregation (or disaggregated networking) involves the separation of networking equipment into functional components and allowing each component to be individually deployed. This may encompass separation of SW elements (e.g., NFs) from specific HW elements and/or using APIs to enable software defined network (SDN) and/or and NF virtualization (NFV). RAN disaggregation involves network disaggregation and virtualization of various RANFs (e.g., RANFs 1-N in Figure 14). The RANFs 1-N can be placed in different physical sites in various topologies in a RAN deployment based on the use case. This enables RANF distribution and deployment over different geographic areas and allows a breakout of RANFs to support various use cases (e.g., low latency use cases and the like) as well as flexible RAN implementations. Disaggregation offers a common or uniform RAN platform capable of assuming a distinct profile depending on where it is deployed. This allows fewer fixed-function devices, and a lower total cost of ownership, in comparison with existing RAN architectures. Example RAN disaggregation frameworks are provided by Telecom Infra Project (TIP) OpenRAN™, Cisco® Open vRAN™, [O-RAN], Open Optical & Packet Transport (OOPT), Reconfigurable Optical Add Drop Multiplexer (ROADM), and/or the like.

In a first example implementation, the RANFs 1-N disaggregate RAN HW and SW with commercial off-the-shelf (COTS) HW and open interfaces (e.g., NGFI-I and NGFI-II, and the like). In this example implementation, each RANF 1-N may be a virtual BBU or vRAN controller operating on COTS compute infrastructure with HW acceleration for BBU/vRANFs.

In a second example implementation, the RANFs 1-N disaggregate layers of one or more RAT protocol stacks. As an example of this implementation, RANF 1 is a DU 1431 operating on first COTS compute infrastructure with HW acceleration for BBU/vRANFs, and RANF 2 is a virtual CU 1432 operating on second COTS compute infrastructure.

In a third example implementation, the RANFs 1-N disaggregate control plane and user plane functions. As an example of this implementation, the RANF 1 is a DU 1431 operating on COTS compute infrastructure with HW acceleration for BBU/vRANFs, RANF 2 is a virtual CU-CP 1432 operating on COTS compute infrastructure, and a third RANF (e.g., RANF 3 (not shown by Figure 14)) is a virtual CU-UP 1432 operating on the same or different COTS compute infrastructure as the virtual CU-CP 1432. Additionally or alternatively, in this implementation, one or more CN NFs 1-x may be CN-UP functions and one or more other CN NFs 1-x may be CN-CP functions.

In a fourth example implementation, the RANFs 1-N disaggregate layers of an [IEEE802] RAT. As an example of this implementation, the RRH 1430 implements a WiFi PHY layer, RANF 1 implements a WiFi MAC sublayer, RANF 1 implements a WiFi logical link control (LLC) sublayer, RANF 2 implements one or more WiFi upper layer protocols (e.g., network layer, transport layer, session layer, presentation layer, and/or application layer), and so forth.

In a fifth example implementation, the RANFs 1-N disaggregate different O-RAN RANFs including E2SMs. As an example of this implementation, RANF 1 implements the near-RT RIC, RANF 2 implements the E2SM-KPM, RANF 3 implements the E2SM-CCC, RANF 4 implements the E2SM RAN control, RANF 5 implements the E2SM-NI, RANF 6 implements functions for providing A1 services, and so forth.

In any of the implementations discussed herein, the lower layers of the RAN protocol stack can be characterized by real-time (RT) functions and relatively complex signal processing algorithms, and the higher layers of the RAN protocol stack can be characterized by non-RT functions. In these implementations, the RT functions and signal processing algorithms can be implemented in DUs 1431 and/or RRHs 1430 either using purpose-built network elements or in COTS hardware augmented with purpose-built HW accelerators.

Figure 14 also shows various functional split options 1400c, for both DL and UL directions. The traditional RAN is an integrated network architecture based on a distributed RAN (D-RAN) model, where D-RAN integrates all RANFs into a few network elements. As alluded to previously, the disaggregated RAN architecture provides flexible function split options to overcome various drawbacks of the D-RAN model. The disaggregated RAN breaks up the integrated network system into several function components that can then be individually re-located as needed without hindering their ability to work together to provide a holistic network services. The split options 1400c are mostly split between the CU 1432 and the DU 1431, but can include a split between the CU 1432, DU 1431, and RU 1430. For each option 1400c, protocol entities on the left side of the figure are included in the RANF implementing the CU 1432 and the protocol entities on the right side of the figure are included in the RANF implementing the DU 1431. For example, the Option 2 function split includes splitting non-RT processing (e.g., RRC and PDCP layers) from RT processing (e.g., RLC, MAC, and PHY layers), where the RANF implementing the CU 1432 performs network functions of the RRC and PDCP layers, and the RANF implementing the DU 1431 performs the baseband processing functions of the RLC (including high-RLC and low-RLC), MAC (including high-MAC and low-MAC), and PHY layers. In some implementations, the PHY layer is further split between the DU 1431 and the RU 1430, where the RANF implementing the DU 1431 performs the high-PHY layer functions and the RU 1430 handles the low-PHY layer functions. In some implementations, the Low-PHY entity may be operated by the RU 1430 regardless of the selected functional split option. Under the Option 2 split, the RANF implementing the CU 1432 can connect to multiple DU 1431 (e.g., the CU 1432 is centralized), which allows RRC and PDCP anchor change to be eliminated during a handover across DUs 1431 and allows the centralized CU 1432 to pool resources across several DUs 1431. In these ways, the option 2 function split can improve resource efficiencies. The particular function split option used may vary depending on the service requirements and network deployment scenarios, and may be implementation specific. It should also be noted that in some implementations, all of the function split options can be selected where each protocol stack entity is operated by a respective RANF (e.g., a first RANF operates the RRC layer, a second RANF operates the PDCP layer, a third RANF operates the high-RLC layer, and so forth until an eighth RANF operates the low-PHY layer). Other split options are possible such as those discussed in [ORAN.IPC-HRD-Opt6], [ORAN.IPC-HRD-Opt7-2], [ORAN.IPC-HRD-Opt8], [ORAN.OMAC-HRD], and [ORAN.OMC-HRD-Opt7-2].

Figure 15 depicts an example Open RAN (O-RAN) system architecture 1500. The O-RAN architecture 1500 includes four O-RAN defined interfaces, namely, the A1 interface, the O1 interface, the O2 interface, and the Open FrontHaul (OF) Management (M)-plane interface, which connect the service management and orchestration framework (SMO) 1502 to O-RAN network functions (NFs) 1504 and the O-Cloud 1506. The non-RT RIC function 1512 resides in the SMO layer 1502 that also handles deployment and configuration, as well as data collection of RAN observables and the like. The SMO 1502 also includes functions that handle AI/ML workflow (e.g., training and update of ML models), as well as functions for deployment of ML models and other applications as described in [ORAN.AIML]. The SMO 1502 may also have access to enrichment information (e.g., data other than that available in the RAN NFs), and this enrichment information can be used to enhance the RAN guidance and optimization functions. The enrichment information may come from the data analytics based on the historical RAN data collected over O1 interface or from RAN external data sources. The SMO 1502 also includes functions to optimize the RAN performance towards fulfilment of SLAs in the RAN intent. The A1 interface enables the non-RT RIC 1512 to provide policy-based guidance (e.g., A1-P), ML model management (e.g., A1-ML), and enrichment information (e.g., A1-EI) to the near-RT RIC 1514 so that the RAN can optimize various RANFs (e.g., RRM, and the like) under certain conditions.

The O1 interface is an interface between orchestration & management entities (e.g., Orchestration/NMS) and O-RAN managed elements, for operation and management, by which FCAPS management, software management, file management and other similar functions shall be achieved (see e.g., [ORAN.OAD], [ORAN.CADS]). The O2 interface is an interface between the SMO 1502 and the O-Cloud 1506 (see e.g., [ORAN.OAD], [ORAN.CADS]). The A1 interface is an interface between the non-RT RIC 1512 and the near-RT RIC 1514 to enable policy-driven guidance of near-RT RIC apps/functions, and support AI/ML workflows. The O-Cloud 1506 can include elements such as, for example, virtual network functions (VNF), cloud network functions (CNF), physical network functions (PNF), and/or the like. Additionally, the O-Cloud 1506 includes an O-Cloud notification interface, which is available for the relevant O-RAN NFs 1504 (e.g., near-RT RIC 1514 and/or the O-CU-CP 1621, O-CU-UP 1622, and O-DU 1615 of Figure 16) to receive O-Cloud 1506 related notifications (see e.g., [ORAN.O-CloudNotificationAPI]).

The SMO 1502 also connects with an external system 1510, which provides enrighment data to the SMO 1502. Figure 15 also illustrates that the A1 interface terminates at an O-RAN Non-Real Time (RT) RAN Intelligent Controller (RIC) 1512 in or at the SMO 1502 and at the O-RAN Near-RT RIC 1514 in or at the O-RAN NFs 1504. The O-RAN NFs 1504 can be VNFs such as VMs or containers, sitting above the O-Cloud 1506 and/or Physical Network Functions (PNFs) utilizing customized hardware. All O-RAN NFs 1504 are expected to support the O1 interface when interfacing the SMO 1502. The O-RAN NFs 1504 connect to the NG-Core 1508 via the NG interface (which is a 3GPP defined interface). In some examples, the NG-Core 1508 may be the same or similar as the CN 1020 and/or the 5GC 1040 discussed previously.

The OF management plane (M-plane) interface between the SMO 1502 and the O-RAN Radio Unit (O-RU) 1516 supports the O-RU 1516 management in the O-RAN hybrid model as specified in [ORAN.MP]. The OF M-plane interface is an optional interface to the SMO 1502 that is included for backward compatibility purposes as per [ORAN.MP], and is intended for management of the O-RU 1516 in hybrid mode only. The management architecture of flat mode (see e.g., [ORAN.OAM-Arch]) and its relation to the O1 interface for the O-RU 1516 is for future study. The O-RU 1516 termination of the O1 interface towards the SMO 1502 (see e.g., [ORAN.OAM-Arch] ).

Additionally, the near-RT RIC 1514 in Figure 15 provides RAN analytics information services via the Y1 interface. Y1 consumers 1525 can consume the RAN analytics information services by subscribing to or requesting the RAN analytics information via the Y1 interface. In some examples, Y1 consumers 1525 are Application Functions (AFs) when they are in an O-RAN trusted domain. Additionally or alternatively, the RAN analytics information could be provided to AFs in a secure manner via an exposure function (see e.g., [TS23501] § 5.20).

Figure 16 illustrates a logical architecture 1600 of the O-RAN system architecture 1500 of Figure 15. In Figure 16, the SMO 1602 corresponds to the SMO 1502, O-Cloud 1606 corresponds to the O-Cloud 1506, the non-RT RIC 1612 corresponds to the non-RT RIC 1512, the near-RT RIC 1614 corresponds to the near-RT RIC 1514, the O-RU 1616 corresponds to the O-RU 1516, and the Y1 consumers 1625 corresponds to the Y1 consumers 1525 of Figure 15, respectively. The O-RAN logical architecture 1600 includes a radio portion and a management portion.

The management side of the architecture 1600 includes the SMO 1602 containing the non-RT RIC 1612, and may include the O-Cloud 1606. The O-Cloud 1606 is a cloud computing platform including a collection of physical infrastructure nodes to host relevant O-RAN functions (e.g., the near-RT RIC 1614, O-CU-CP 1621, O-CU-UP 1622, the O-DU 1615, and the like), supporting software components (e.g., OSs, VMMs, container runtime engines, ML engines, and/or the like), and appropriate management and orchestration functions. The radio side of the logical architecture 1600 includes the near-RT RIC 1614, the O-RAN Distributed Unit (O-DU) 1615, the O-RU 1616, the O-RAN Central Unit - Control Plane (O-CU-CP) 1621, and the O-RAN Central Unit - User Plane (O-CU-UP) 1622 functions. The radio portion/side of the logical architecture 1600 may also include the O-e/gNB 1610. The O-eNB supports O-DU and O-RU functions with an OF interface between them.

The O-CU-CP 1621 is a logical node that hosts the RRC and the control plane (CP) part of the PDCP protocol, and the O-CU-UP 1622 is a logical node that hosts the user plane part of the PDCP protocol and the SDAP protocol. In some examples, the O-CU-CP 1621 and/or O-CU-UP 1622 is the same or similar as the CU 1432 of Figure 14. The O-DU 1615 is a logical node that hosts RLC, MAC, and higher PHY layer entities/elements (High-PHY layers) based on a lower layer functional split. In some examples, the O-DU 1615 is the same or similar as the DU 1431 of Figure 14. The O-RU 1616 is a logical node that hosts lower PHY layer entities/elements (Low-PHY layer) (e.g., FFT/iFFT, PRACH extraction, and/or the like) and RF processing elements based on a lower layer functional split. In some examples, the O-RU 1516, 1616 is the same or similar as the RU 1430 of Figure 14.

In some implementations (e.g., ULPI implementations), an alternative Open Lower Layer Split (NG-OLLS) can be used for massive MIMO (mMIMO) O-RUs 1616 to improve the CAT-B mMIMO UL performance. In these implementations, some of the layers/functions/modules/RANFs are moved from the O-DU 1615 to the O-RU 1616 such as, for example, UL channel estimation, UL beamforming, and/or the UL equalizer. Additionally or alternatively, in some mMIMO O-RUs 1616 implementations, the UL equalizer function/RANF is hosted at the O-DU 1615 and the UL channel estimation and UL beamforming functions/modules/RANFs are implemented in/at the O-RU 1616.

An E2 interface terminates at a plurality of E2 nodes. The E2 interface connects the near-RT RIC 1614 and one or more O-CU-CPs 1621, one or more O-CU-UP 1622, one or more O-DU 1615, and one or more O-e/gNB 1610. The E2 nodes are logical nodes/entities that terminate the E2 interface. As examples, the E2 nodes can include: for NR/5G access, O-CU-CP 1621, O-CU-UP 1622, O-DU 1615, or any combination of elements as defined in [ORAN.E2GAP]; and for E-UTRA access, the E2 nodes include the O-e/gNB 1610. As shown in Figure 16, the E2 interface also connects the O-e/gNB 1610 to the Near-RT RIC 1614. The protocols over E2 interface are based exclusively on control plane (CP) protocols. The E2 functions are grouped into the following categories: (a) near-RT RIC 1614 services (REPORT, INSERT, CONTROL and POLICY, as described in [ORAN.E2GAP]); and (b) near-RT RIC 1614 support functions, which include E2 Interface Management (e.g., E2 Setup, E2 Reset, Reporting of General Error Situations, and/or the like) and Near-RT RIC service update (e.g., capability exchange related to the list of E2 node functions exposed over E2). A RIC service is a service provided by or on an E2 node to provide access to messages and measurements and/or enable control of the E2 node from the near-RT RIC 1614. Additionally, the Y1 interface allows the Y1 consumers 1625 to subscribe and/or request RAN analytics information provided by the Near-RT RIC 1614.

Figure 16 shows the Uu interface between a UE 1601 and O-e/gNB 1610 as well as between the UE 1601 and O-RAN components. The Uu interface is a 3GPP defined interface (see e.g., sections 5.2 and 5.3 of [TS38401]), which includes a complete protocol stack from L1 to L3 and terminates in the NG-RAN or E-UTRAN. The O-e/gNB 1610 is an LTE eNB (see e.g., 3GPP TS 36.401 v17.1.0 (2022-06-23) ("[TS36401]")) or a 5G gNB or ng-eNB (see e.g., [TS38300]) that supports the E2 interface.

The O-e/gNB 1610 may be the same or similar as any of the NANs discussed herein such as, for example RAN 1004, RAN 1010, RAN 1014, RAN 1308, AN 1104, AP 1006, NANs 1014, and/or the like. There may be multiple UEs 1601 and/or multiple O-e/gNB 1610, each of which may be connected to one another the via respective Uu interfaces. Although not shown in Figure 16, the O-e/gNB 1610 supports O-DU 1615 and O-RU 1616 functions with an OF interface between them.

The OF interface(s) is/are between O-DU 1615 and O-RU 1616 functions (see e.g., [ORAN.MP], [ORAN.CUS]). The OF interface(s) includes the Control User Synchronization (CUS) Plane and Management (M) Plane. Figures 15 and 16 also show that the O-RU 1616 terminates the OF M-Plane interface towards the O-DU 1615 and optionally towards the SMO 1602 as specified in [ORAN.MP]. The O-RU 1616 terminates the OF CUS-Plane interface towards the O-DU 1615 and the SMO 1602.

The F1 control plane interface (F1-C) connects the O-CU-CP 1621 with the O-DU 1615. As defined by 3GPP, the F1-C is between the gNB-CU-CP and gNB-DU nodes (see e.g., [TS38401]), 3GPP TS 38.470 v17.2.0 (2022-09-23) ("[TS38470]"). However, for purposes of O-RAN, the F1-C is adopted between the O-CU-CP 1621 with the O-DU 1615 functions while reusing the principles and protocol stack defined by 3GPP and the definition of interoperability profile specifications.

The F1 user plane interface (F1-U) connects the O-CU-UP 1622 with the O-DU 1615. As defined by 3GPP, the F1-U is between the gNB-CU-UP and gNB-DU nodes [TS38401], [TS38470]. However, for purposes of O-RAN, the F1-U is adopted between the O-CU-UP 1622 with the O-DU 1615 functions while reusing the principles and protocol stack defined by 3GPP and the definition of interoperability profile specifications.

The NG-C interface is defined by 3GPP as an interface between the gNB-CU-CP and the AMF in the 5GC, and the NG-C is also referred as the N2 interface (see e.g., [TS38300]). The NG-U interface is defined by 3GPP, as an interface between the gNB-CU-UP and the UPF in the 5GC, and the NG-u interface is referred as the N3 interface (see e.g., [TS38300]). In O-RAN, NG-C and NG-U protocol stacks defined by 3GPP are reused and may be adapted for O-RAN purposes.

The X2-C interface is defined in 3GPP for transmitting control plane information between eNBs or between eNB and en-gNB in EN-DC. The X2-U interface is defined in 3GPP for transmitting user plane information between eNBs or between eNB and en-gNB in EN-DC (see e.g., 3GPP TS 36.420 v17.0.0 (2022-04-06), [TS38300], [TS36300]). In O-RAN, X2-c and X2-u protocol stacks defined by 3GPP are reused and may be adapted for O-RAN purposes

The Xn-c interface is defined in 3GPP for transmitting control plane information between gNBs, ng-eNBs, or between an ng-eNB and gNB. The Xn-u interface is defined in 3GPP for transmitting user plane information between gNBs, ng-eNBs, or between ng-eNB and gNB (see e.g., 3GPP TS 38.420 v17.2.0 (2022-09-23), [TS38300]). In O-RAN, Xn-C and Xn-U protocol stacks defined by 3GPP are reused and may be adapted for O-RAN purposes

The E1 interface is defined by 3GPP as being an interface between the gNB-CU-CP (e.g., gNB-CU-CP 3728) and gNB-CU-UP (see e.g., [TS38300], 3GPP TS 38.460 v17.0.0 (2022-04-06)). In O-RAN, E1 protocol stacks defined by 3GPP are reused and adapted as being an interface between the O-CU-CP 1621 and the O-CU-UP 1622 functions.

The O-RAN Non-Real Time (RT) RAN Intelligent Controller (RIC) 1612 is a logical function within the SMO 1502, 1602 that enables non-real-time control and optimization of RAN elements and resources; AI/machine learning (ML) workflow(s) including model training, inferences, and updates; and policy-based guidance of applications/features in the Near-RT RIC 1614. The O-RAN near-RT RIC 1614 enables near-real-time control and optimization of RAN elements and resources via fine-grained data collection and actions over the E2 interface. The near-RT RIC 1614 may include one or more AI/ML workflows including model training, inferences, and updates.

The non-RT RIC 1612 can include and/or operate one or more non-RT RIC applications (rApps) 1611. The rApps 1611 are apps designed to run on the non-RT RIC 1612, and such modular apps leverage the functionality exposed by the non-RT RIC 1612 to provide added value services relative to intelligent RAN optimization and operation. The rApps 1611 are modular apps that leverage functionality exposed via the non-RT RIC framework's R1 interface to provide added value services relative to RAN operation, such as driving the A1 interface, recommending values and actions that may be subsequently applied over the O1/O2 interface(s), and generating "enrichment information" for the use of other rApps 1611. The rApp 1611 functionality within the non-RT RIC 1612 enables non-RT control and optimization of RAN elements (or RANFs) and resources and policy-based guidance to the applications/features in the near-RT RIC 1614. The non-RT RIC framework refers to functionality internal to the SMO 1602 that logically terminates the A1 interface to the near-RT RIC 1614 and exposes the set of internal SMO services needed for their runtime processing to rApps 1611 via its R1 interface. The non-RT RIC framework functionality within the non-RT RIC 1612 provides AI/ML workflow(s) including model training, inference, and updates needed for rApps 1611.

The non-RT RIC 1612 can be an ML training host to host the training of one or more ML models. ML training can be performed offline using data collected from the RIC, O-DU 1615 and O-RU 1616. For supervised learning, non-RT RIC 1612 is part of the SMO 1602, and the ML training host and/or ML model host/actor can be part of the non-RT RIC 1612 and/or the near-RT RIC 1614. For unsupervised learning, the ML training host and ML model host/actor can be part of the non-RT RIC 1612 and/or the near-RT RIC 1614. For reinforcement learning, the ML training host and ML model host/actor may be co-located as part of the non-RT RIC 1612 and/or the near-RT RIC 1614. In some implementations, the non-RT RIC 1612 may request or trigger ML model training in the training hosts regardless of where the model is deployed and executed. ML models may be trained and not currently deployed.

In some implementations, the non-RT RIC 1612 provides a query-able catalog for an ML designer/developer to publish/install trained ML models (e.g., executable software components). In these implementations, the non-RT RIC 1612 may provide discovery mechanism if a particular ML model can be executed in a target ML inference host (MF), and what number and type of ML models can be executed in the MF. For example, there may be three types of ML catalogs made discoverable by the non-RT RIC 1612: a design-time catalog (e.g., residing outside the non-RT RIC 1612 and hosted by some other ML platform(s)), a training/deployment-time catalog (e.g., residing inside the non-RT RIC 1612), and a run-time catalog (e.g., residing inside the non-RT RIC 1612). The non-RT RIC 1612 supports necessary capabilities for ML model inference in support of ML assisted solutions running in the non-RT RIC 1612 or some other ML inference host. These capabilities enable executable software to be installed such as VMs, containers, and/or the like. The non-RT RIC 1612 may also include and/or operate one or more AI/ML engines, which are packaged software executable libraries that provide methods, routines, data types, and/or the like, used to run ML models. The non-RT RIC 1612 may also implement policies to switch and activate AI/ML model instances under different operating conditions.

The non-RT RIC 1612 is be able to access feedback data (e.g., FM and PM statistics) over the O1 interface on ML model performance and perform necessary evaluations. If the ML model fails during runtime, an alarm can be generated as feedback to the non-RT RIC 1612. How well the ML model is performing in terms of prediction accuracy or other operating statistics it produces can also be sent to the non-RT RIC 1612 over O1. The non-RT RIC 1612 can also scale ML model instances running in a target MF over the O1 interface by observing resource utilization in MF. The environment where the ML model instance is running (e.g., the MF) monitors resource utilization of the running ML model. This can be done, for example, using an ORAN-SC component called ResourceMonitor in the near-RT RIC 1614 and/or in the non-RT RIC 1612, which continuously monitors resource utilization. If resources are low or fall below a certain threshold, the runtime environment in the near-RT RIC 1614 and/or the non-RT RIC 1612 provides a scaling mechanism to add more ML instances. The scaling mechanism may include a scaling factor such as an number, percentage, and/or other like data used to scale up/down the number of ML instances. ML model instances running in the target ML inference hosts may be automatically scaled by observing resource utilization in the MF. For example, the Kubernetes® (K8s) runtime environment typically provides an auto-scaling feature.

The A1 interface is between the non-RT RIC 1612 (within or outside the SMO 1602) and the near-RT RIC 1614. The A1 interface supports three types of services as defined in [ORAN.A1GAP], including an A1 policy management service ("A1-P"), an A1 enrichment information service ("A1-EI"), and an A1 ML model management service ("A1-ML"). A1 policies have the following characteristics compared to persistent configuration (see e.g., [ORAN.A1GAP]): A1 policies are not critical to traffic; A1 policies have temporary validity; A1 policies may handle individual UE or dynamically defined groups of UEs; A1 policies act within and take precedence over the configuration; and A1 policies are non-persistent (e.g., do not survive a restart of the near-RT RIC).

The O-RAN architecture 1600 supports various control loops including at least the following control loops involving different O-RAN functions: non-RT control loops 1632, near-RT control loops 1634, and real-time (RT) control loops 1635. The control loops 1632, 1634, 1635 are defined based on the controlling entity and the architecture shows the other logical nodes with which the control loop host interacts. Control loops 1632, 1634, 1635 exist at various levels and run simultaneously. Depending on the use case, the control loops 1632, 1634, 1635 may or may not interact with each other. Examples of the use cases for the non-RT control loop 1632 and near-RT control loop 1634 and the interaction between the RICs for these use cases are defined by the O-RAN use cases analysis report (see e.g., [ORAN.UseCases]). This use case report also defines relevant interaction for the O-CU-CP control loops (not shown) and O-DU control loops 1635, responsible for call control and mobility, radio scheduling, HARQ, BF, and the like, along with relatively slower mechanisms involving SMO management interfaces. The timing of these control loops is use case dependent. Typical execution time for use cases involving the non-RT control loops 1632 are 1s or more; near-RT control loops 1634 are in the order of 10ms or more; control loops in the E2 nodes (e.g., control loop 1635) can operate below 10ms. (e.g., O-DU radio scheduling and/or the like). For any specific use case, however, a stable solution may involve the loop time in the non-RT RIC 1612 and/or SMO 1602 management plane processes to be significantly longer than the loop time for the same use case in the control entities.

Furthermore, AI/ML related functionalities can be mapped into the control loops 1632, 1634, 1635. The location of the ML model training and the ML model inference for a use case depends on the computation complexity, on the availability and the quantity of data to be exchanged, on the response time requirements and on the type of ML model. For example, online ML model for configuring RRM algorithms operating at the TTI timescale could run in O-DU 1615, while the configuration of system parameters such as BF configurations requiring a large amount of data with no response time constraints can be performed using the combination of the non-RT RIC 1612 and SMO 1602 where intensive computation means can be made available. In some examples, ML model training can be performed by the non-RT RIC 1612 and/or the near-RT RIC 1614, and the trained ML models can be operated to generate predictions/inferences in control loops 1632, 1634, and/or 1635. The (trained) ML model runs in the near-RT RIC 1614 for control loop 1634, and the (trained) ML model runs in the O-DU 1615 for control loop 1635. In some implementations, ML models could be run in the O-RU 1616.

Figure 17 illustrates an example O-RAN Architecture 1700 including Near-RT RIC interfaces. The Near-RT RIC 1714 is connected to the Non-RT RIC 1712 through the A1 interface (see e.g., [ORAN.A1-GAP]). The Near-RT RIC 1714 is a logical network node placed between the E2 nodes and the SMO 1702, which hosts the Non-RT RIC 1712. The Near-RT RIC 1714 may be the same or similar as the near-RT RIC 1514 and near-RT RIC 1614 of Figures 15 and 16, and the non-RT RIC 1712 may be the same or similar as the non-RT RIC 1512 and/or the Non-RT RIC 1612 of Figures 15 and 16. The SMO 1702 may be the same or similar to the SMO 1502 and/or the SMO 1602 of Figures 15 and 16. In some implementations, a near-RT RIC 1714 is connected to only one non-RT RIC 1712.

As mentioned previously, E2 is a logical interface connecting the Near-RT RIC 1714 with an E2 node. The Near-RT RIC 1714 is connected to the O-CU-CP 1721, the near-RT RIC 1714 is connected to the O-CU-UP 1722, the near-RT RIC 1714 is connected to the O-DU 1715, and the near-RT RIC 1714 is connected to the O-e/gNB 1710. The O-DU 1715 is connected to the O-RU 1716. The O-CU-CP 1721, the O-CU-UP 1722, the O-DU 1715, and the O-e/gNB 1710 may be the same or similar to the O-CU-CP 1621, the O-DU 1615, and the O-e/gNB 1610 of Figure 16. The O-RU 1716 may be the same or similar to the O-RU 1516 and/or the O-RU 1616 of Figures 15 and 16.

In some implementations, an E2 node is connected to only one near-RT RIC 1714. Additionally or alternatively, a near-RT RIC 1714 can be connected to multiple E2 nodes (e.g., multiple O-CU-CPs 1721, O-CU-UPs 1722, O-DUs 1715, and O-e/gNBs 1710). F1 (e.g., F1 control plane (F1-C) and F1 user plane (F1-U)) and E1 are logical 3GPP interfaces, whose protocols, termination points and cardinalities are specified in [TS38401]. In addition, the Near-RT RIC 1714 and other RAN nodes have O1 interfaces as defined in [ORAN.OAD] and [ORAN.OAM-Arch]. Additionally, the O-CU-CP 1721 is connected to the 5G Core Network (5GC) 1742b via an N2 interface, the O-CU-UP 1722 is connected to the 5GC 1742b via an N3 interface, and the O-gNBs 1710 is connected to the O-CU-CP 1721 via an Xn control plane interface (Xn-C), and is connected to the O-CU-UP 1722 via an Xn user plane interface (Xn-U); these interfaces are defined in [TS23501], [TS38300], and other 3GPP standards. Furthermore, the O-eNBs 1710 are connected to an Evolved Packet Core (EPC) 1742a via S1 control place (S1-C) and S1 user plane (S1-U) interfaces, and the O-eNBs 1710 is connected to the O-CU-CP 1721 via an X2 control plane interface (X2-C) and/or an Xn control plane interface (Xn-C), and is connected to the O-CU-UP 1722 via an X2 user plane interface (X2-U) and/or an Xn user plane interface (Xn-U); these interfaces are discussed in 3GPP TS 36.300 v17.2.0 (2022-09-30) ("[TS36300]") and/or other other 3GPP standards.

The non-RT RIC 1712 is the functionality internal to the SMO 1702 in the O-RAN architecture that provides the A1 interface to the near-RT RIC 1714. The non-RT RIC 1712 supports intelligent RAN optimization by providing policy-based guidance, AI/ML model management and enrichment information to the near-RT RIC 1714 function so that the RAN can optimize various parameters (e.g., RRM under certain conditions and/or other parameters, functions, such as any of those discussed herein). The non-RT RIC 1712 can also perform intelligent radio resource management function in non-real-time interval (e.g., greater than 1 second). The non-RT RIC 1712 can use data analytics and AI/ML training/inference to determine the RAN optimization actions for which it can leverage SMO services such as data collection and provisioning services of the O-RAN nodes as well as the O1 and O2 interfaces. The non-RT RIC 1712 includes two sub-functions including the Non-RT RIC Framework 1713 and Non-RT RIC Applications (rApps) 1611.

The non-RT RIC Framework 1713, which includes functionality internal to the SMO framework 1702 that logically terminates the A1 interface and exposes various services to rApps 1611 through the R1 interface. The various services exposed to the rApps 1611 through the R1 interface can include a set of internal SMO services needed for their runtime processing (e.g., rApp-enablement functions 1711 in the example of Figure 17). In the example of Figure o3, the rApp-enablement functions 1711 extend outside the non-RT RIC 1712 into the SMO framework 1702 denotes that the R1 services being exposed may either come from the non-RT RIC 1712 or the SMO 1702. The non-RT RIC Framework 1713 functionality within the non-RT RIC 1712 provides AI/ML workflow functionality including, for example, model training, inference, and updates needed for rApps 1611 (see e.g., [O-RAN.Non-RT-RIC-ARCH]). The non-RT RIC Framework 1713 is responsible for exposing some or all required functionality to the rApps 1611, whether from the non-RT RIC Framework 1713 or the SMO framework 1702. The rApps 1611 are modular applications that leverage the functionality exposed by the non-RT RIC Framework 1713 to perform RAN optimization and other functions. Services exposed to rApps 1611 via the R1 interface enable individual rApps 1611 to obtain information and trigger actions (e.g., policies, reconfiguration, and/or the like) through the A1, O1, O2, and/or Open FH M-Plane related services.

The near-RT RIC 1714 hosts one or more xApps 1641 that use the E2 interface to collect near real-time information (e.g., UE basis, cell basis, and the like) and provide value added services. The near-RT RIC 1714 may receive declarative policies and obtain data enrichment information over the A1 interface (see e.g., [ORAN.A1GAP]). The protocols over E2 interface are based on control plane protocols and are defined in [ORAN.E2AP]. On E2 or near-RT RIC 1714 failure, the E2 node will be able to provide services but there may be an outage for certain value-added services that may only be provided using the near-RT RIC 1714.

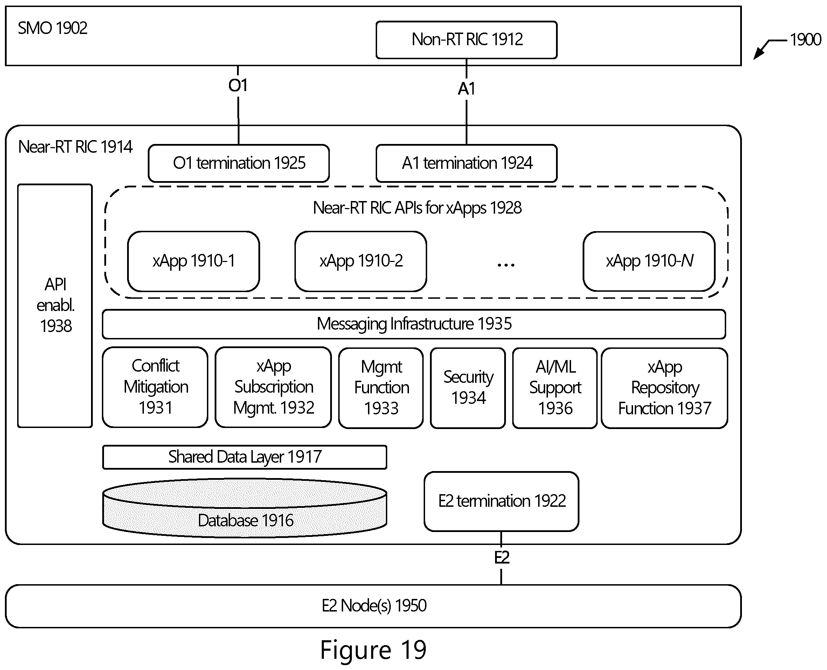

The near-RT RIC 1714 provides a database function (e.g., DB 1916 of Figure 19) that stores the configurations relating to E2 nodes, cells, bearers, flows, UEs, and the mappings between them. The near-RT RIC 1714 provides ML tools that support data pipelining (e.g., AI/ML support function 1936 of Figure 19). The near-RT RIC 1714 also provides a messaging infrastructure 1935; security functions 1934; conflict management functions security functions 1931 to resolve potential conflicts and/or overlaps that may be caused by the requests from xApps 1641; as well as functionality for logging, tracing, and metrics collection from the near-RT RIC 1714 framework and xApps 1641 to the SMO 1702. The near-RT RIC 1714 also provides an open API enabling the hosting of 3rd party xApps 1641 and xApps 1641 from the near-RT RIC 1714 platform vendor (e.g., API enablement function 1938). The near-RT RIC 1714 also provides an open API decoupled from specific implementation solutions, including a Shared Data Layer (SDL) 1917 that works as an overlay for underlying databases and enables simplified data access.

An xApp 1641 is an app designed to run on the near-RT RIC 1714. Such an app is likely to include or provide one or more services and/or microservices, and at the point of on-boarding identifies data it consumes and which data it provides. An xApp 1641 is independent of the near-RT RIC 1714 and may be provided by any third party. The E2 enables a direct association between an xApp 1641 and the RAN functionality. At least in some examples, a RANF is a specific function in an E2 node and/or a function that performs some RAN-related functions, operations, tasks, workloads, and the like. Examples of RANFs include termination of network interfaces (e.g., X2, F1, S1, Xn, NG and/or NGc, E1, A1, O1, and/or the like); RAN internal functions (e.g., paging function, multicast group paging function, UE context management function, mobility management function, PDU session management function, non-access stratum (NAS) transport function, NAS node selection function, network interface management function, warning message transmission function, configuration transfer function, trace function, AMF management function, AMF load function, AMF re-allocation function, AMF CP relocation indication function, TNL association support function, location reporting function, UE radio capability function, NRPPa signaling transport function, overload control function, remote interference management (RIM) information transfer function, UE information retreival function, RAN CP relocation indication function, suspend-resume function, connection establishment function, NR MBS session management function, QMC support function, functions related to individual RAN protocol stack layers; E2SM-KPM, E2SM-CCC, E2SM RAN control, E2SM-NI, and/or the like such as those discussed in [TS38410].

The architecture of an xApp 1641 comprises code implementing the xApp's 1641 logic and the RIC libraries that allow the xApp 1641 to, for example, send and receive messages; read from, write to, and obtain/get notifications from the SDL layer 1917; and write log messages (e.g., to the xApp 1641 itself, other xApps 1641, DB 1916, the non-RT RIC 1712, and/or the like). Additional libraries will be available in future versions including libraries for setting and resetting alarms and sending statistics. Furthermore, xApps 1641 can use access libraries to access specific name-spaces in the SDL layer. For example, the R-NIB that provides information about which E2 nodes (e.g., CU, DU, RU) the RIC is connected to and which SMs are supported by each E2 node, can be read by using the R-NIB access library.

The O-RAN standard interfaces (e.g., O1, A1, E2, and so forth) may be exposed to the xApps 1641 as follows: first, an xApp 1641 receives its configuration via a configuration (e.g., K8s ConfigMap). The configuration can be updated while the xApp 1641 is running and the xApp 1641 can be notified of this modification by using the inotify() method/function. Next, the xApp 1641 can send statistics (e.g., PM) either by sending it directly to VES collector in VES format, and/or by exposing statistics via a REST interface for Prometheus to collect. Then, the xApp 1641 receives A1 policy guidance via a RIC Message Router (RMR) message of a specific kind (e.g., policy instance creation and deletion operations). The RMR is a thin library that allows apps (e.g., xApps 1641, rApps 1611, and/or the like) to send messages to other apps (e.g., xApps 1641, rApps 1611, and/or the like). RMR provides insulation from the actual message transport system (e.g., Nanomsg, NNG, or the like), as well as providing endpoint selection based on message type. Next, the xApp 1641 can subscribe to E2 events by constructing an E2 subscription ASN.1 payload and sending it as a message (RMR). The xApp 1641 receives E2 messages (e.g., E2 INDICATION) as RMR messages with the ASN.1 payload. Additionally or alternatively, the xApp 1641 can issue E2 control messages.

In addition to A1 and E2 related messages, xApps 1641 can send messages that are processes by other xApps 1641 and can receive messages produced by other xApps 1641 via a messaging infrastructure 1935 and/or service bus. Communication inside the RIC is policy driven, that is, an xApp 1641 cannot specify the target of a message; instead, an xApp 1641 simply sends a message of a specific type and the routing policies specified for the RIC instance will determine to which destinations this message will be delivered (e.g., logical pub/sub).

Some xApps 1641 may enhance the RRM capabilities of the near-RT RIC 1714. Some xApps 1641 provide logging, tracing and metrics collection to the near-RT RIC 1714. In addition to these basic requirements, an xApp 1641 may do any of the following: read initial configuration parameters (passed in the xApp descriptor); receive updated configuration parameters; send and receive messages; read and write into a persistent shared data storage (key-value store); receive A1-P policy guidance messages (e.g., specifically operations to create or delete a policy instance (JSON payload on an RMR message)) related to a given policy type; define a new A1 policy type; make subscriptions via E2 interface to the RAN, receive E2 INDICATION messages from the RAN, and issue E2 POLICY and CONTROL messages to the RAN; and report metrics related to its own execution or observed RAN events.

The lifecycle of xApp 1641 development and deployment consists of the following states: development (e.g., design, implementation, local testing) and released (e.g., the xApp code and xApp descriptor are committed to an LF Gerrit repo and included in an O-RAN release). The xApp 1641 is packaged as a container image (e.g., Docker® container and its image released to LF Release registry); on-boarded/distributed (e.g., the xApp descriptor (and potentially helm chart) is customized for a given RIC environment and the resulting customized helm chart is stored in a local helm chart repo used by the RIC environment's xApp manager); and/or run-time parameters configuration (e.g., before the xApp 1641 can be deployed, run-time helm chart parameters will be provided by the operator to customized the xApp Kubernetes® deployment instance). This procedure is mainly used to configure run-time unique helm chart parameters such as instance UUID, liveness check, east-bound and north-bound service endpoints (e.g., DBAAS entry, VES collector endpoint) and so on); and deployed (e.g., the xApp 1641 has been deployed via the xApp manager and the xApp pod is running on a RIC instance). For xApps 1641, the deployed status may be further divided into additional states controlled via xApp configuration updates (e.g., running, stopped, terminated, and/or the like).

The general principles guiding the definition of the near-RT RIC architecture as well as the interfaces between the near-RT RIC 1714, E2 nodes 1950, and SMO 1702 can include the following: the near-RT RIC 1714 and E2 node functions are fully separated from transport functions; addressing scheme used in the near-RT RIC 1714 and the E2 nodes are not tied to the addressing schemes of transport functions; the E2 nodes support all protocol layers and interfaces defined within 3GPP RANs (e.g., eNB for E-UTRAN and gNB/ng-eNB for NG-RAN). The near-RT RIC 1714 and hosted xApp(s) 1641 use a set of services exposed by an E2 node that is/are described by a series of RANFs and/or Radio Access Technology (RAT) dependent E2SMs. Additionally, the near-RT RIC 1714 interfaces are defined along the following principles: the functional division across the interfaces have as few options as possible; interfaces are based on a logical model of the entity controlled through this interface; and one physical network element can implement multiple logical nodes.

Logically, an xApp 1641 is an entity that implements a well-defined function. Mechanically, an xApp 1641 is cluster or pod (e.g., a K8s pod) that includes one or multiple containers. Each xApp 1641 includes an xApp descriptor and xApp image. The xApp image is the software package that contains all the files needed to deploy an xApp 1641. Additionally or alternatively, the xApp image can include information the RIC platform needs to configure the RIC platform for the xApp 1641. An xApp 1641 can have multiple versions of an xApp image, which are tagged by the xApp image version number.

The xApp descriptor describes the xApp's 1641 configuration parameters, and may be in any suitable formate (e.g., JSON, XML, and/or the like). The xApp developer also provides a schema for the xApp descriptor. The xApp descriptor describes the packaging format of the corresponding xApp image. The xApp descriptor also provides the necessary data to enable management and orchestration. The xApp descriptor provides xApp management services with necessary information for the LCM of the xApp 1641, such as deployment, deletion, upgrade and/or the like. The xApp descriptor also provides extra parameters related to the health management of the xApp 1641, such as auto scaling when the load of the xApp 1641 is too heavy and auto healing when the xApp 1641 becomes unhealthy. The xApp descriptor can also provide FCAPS and control parameters to xApps 1641 when the xApp 1641 is launched. In some implementations, the definition of an xApp descriptor includes one or more of : xApp basic information, FCAPS management specifications, and control specifications. The basic information of xApp (e.g., name, version, provider, and/or the like), URL of a corresponding xApp image, virtual resource requirements (e.g., HW, SW, and/or NW resource requirements), and/or the like. The basic information of the xApp 1641 is used to support LCM of xApps and can include or indicate configuration data, metrics, and control data about the xApp 1641. The FCAPS management specifications specify the options of configuration, performance metrics collection, and/or the other parameters for the xApp 1641. The control specifications specify the data types consumed and provided by the xApp 1641 for control capabilities (e.g., performance management (PM) data that the xApp 1641 subscribes, the message type of control messages, and so forth).

Additionally or alternatively, the xApp descriptor components include xApp configuration, xApp controls specification, and xApp metrics. The xApp configuration specification includes a data dictionary for the configuration data (e.g., metadata such as a yang definition or a list of configuration parameters and their semantics). Additionally, the xApp configuration may include an initial configuration of the xApp 1641. The xApp controls specification includes the types of data it consumes and provides that enable control capabilities (e.g., xApp URL, parameters, input/output type, and the like). The xApp metrics specification shall include a list of metrics (e.g., metric name, type, unit and semantics) provided by the xApp 1641.

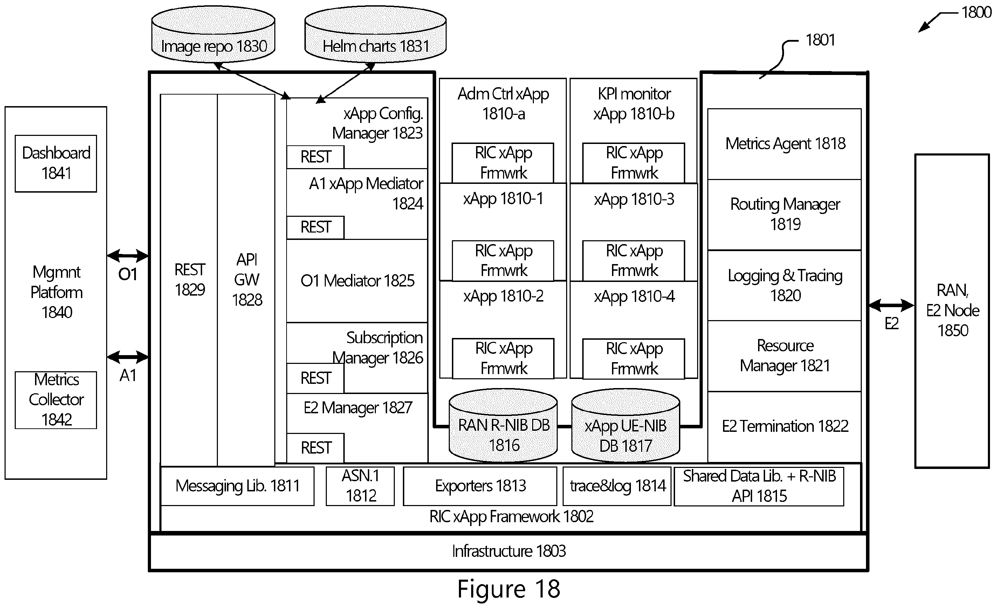

Figure 18 depicts an example O-RAN xApp architecture 1800 for adding and operating xApps 1810. The xApp architecture 1800 provides an xApp framework 1802 for 3rd parties to add xApps 1810 to NAN products, which can be assembled from components from different suppliers. In Figure 18, the O-RAN architecture 1800 includes a RIC platform 1801 on top of infrastructure 1803. The RIC platform 1801 includes a RIC xApp framework 1802, a Radio-Network Information Base (R-NIB) database (DB) 1816, an xApp UE Network Information Base (UE-NIB) DB 1817, a metrics agent 1818 (e.g., a VNF Event Stream (VES) agent, VES Prometheus Adapter (VESPA), and/or the like), a routing manager 1819 (e.g., Prometheus event monitoring and alerting system, and/or the like), a logger/tracer 1820 (e.g., OpenTracing, and/or the like), a resource manager 1821, an E2 termination function 1822, an xApp configuration manager 1823, an A1 xApp mediator 1824, an O1 mediator 1825, a subscription manager 1826, an E2 manager 1827, and API gateway (GW) 1828 (e.g., Kong and/or the like), and a REST function 1829. The xApp configuration manager 1823 communicates with an image repository 1830 and a Helm charts repository 1831 using, for example, REST APIs and/or some other APIs, WS, or other communication mechanisms (such as any of those discussed herein).

The near-RT RIC 1801 and some xApps 1810 may generate or access or access UE-related information to be stored in the UE-NIB 1817. The UE-NIB 1817 maintains a list of UEs and associated data, and maintains tracking and correlation of the UE identities associated with the connected E2 nodes 1850. The near-RT RIC 1801 and some xApps 1810 may generate or access network related information to be stored in the R-NIB 1816. The R-NIB 1816 stores the configurations and near real-time information relating to connected E2 Nodes and the mappings between them.

The RIC xApp framework 1802 includes a messaging library (lib.) 1811, an ASN.1 module 1812, one or more exporters 1813 (e.g., Prometheus exporters and/or the like), a trace and log element 1814, and a shared library with R-NIB APIs 1815, and/or the like. The RIC platform 1801 communicates with a management platform 1840 over the O1 interface and/or the A1 interface, and also communicates with a RAN and/or E2 nodes 1850 over the E2 interface. The management platform 1840 may include dashboards 1841 and/or metrics collectors 1842. Furthermore, various xApps 1810 operate on top of the RIC xApp framework 1802. The xApps 1810 can include, for example an administration control xApp 1810-a, a KPI monitor xApp 1810-b, as well as one or more other xApps 1810-1 to 1810-4, which may be developed by one or more 3rd party developers, network operators, or service providers. In some examples, the xApps 1810-a, 1810-b, 1810-1 to 1810-4 (collectively referred to as "xApps 1810") can include the collection of xApps 1641 and 1910 of Figures 16 and 19.

Figure 19 depicts an example Near-RT RIC internal architecture 1900, which includes a near-RT RIC 1914, an SMO 1902 (which includes a non-RT RIC 1912), and E2 nodes 1950. The near-RT RIC 1914 includes a DB 1916 and a shared data layer (SDL) 1917. The DB 1916 may be the same or similar as the UE-NIB 1817 and/or the R-NIB 1816. The SDL 1917 is used by xApps 1910 to subscribe to DB notification services and to read, write, and modify information stored on the DB 1916. UE-NIB 1817, R-NIB 1816, and other use case specific information may be exposed using the SDL services.

The xApp subscription management function 1932 manages subscriptions from xApps 1910 to E2 nodes 1950, enforces authorization of policies controlling xApp access to messages, and enables merging of identical subscriptions from different xApps into a single subscription toward an E2 Node.

In the context of near-RT RIC 1914, conflict mitigation function 1931 addresses conflicting interactions between different xApps 1910 such as, for example, when an application (e.g., an xApp 1910) changes (or attempts to change) one or more parameters with the objective of optimizing a specific metric. Conflict mitigation 1931 is provided because objectives of one or more xApps 1910 may be chosen/configured such that they result in conflicting actions. The control target of the RRM can be, for example, a cell, a UE, a bearer, QoS flow, and/or the like. The control contents of the RRM can cover access control, bearer control, handover control, QoS control, resource assignment and so on. The control time span indicates the valid control duration which is expected by the control request.

Conflicts of control can be direct conflicts, indirect conflicts, and/or implicit conflicts. Direct conflicts are conflicts that can be observed directly by the conflict mitigation function 1931. One example of direct conflict involves two or more xApps 1910 request different settings for the very same configuration of one or more parameters of a control target. The conflict mitigation function 1931 processes the requests and decides on a resolution. Another example of direct conflict involves a new request from an xApp 1910 conflicting with the running configuration resulting from a previous request of another or the same xApp 1910. Another example of direct conflict involves total requested resources from different xApps 1910 may exceed the limitation of the RAN system (e.g., the sum of resources required by the two different xApps 1910 may be far beyond the resource limitation of the RAN system).

Indirect conflicts are conflicts that cannot be observed directly, nevertheless, some dependence among the parameters and resources that the xApps 1910 target can be observed. The conflict mitigation function 1931 may anticipate the possible conflicts and take actions to mitigate them. For instance, differentxApps 1910 target different configuration parameters to optimize the same metric according to the respective objective. Even though this will not result in conflicting parameter settings, it may have uncontrollable or inadvertent system impacts. One example of such indirect conflicts can occur when the changes required by one xApp 1910 create a system impact which is equivalent to a parameter change targeted by another xApp 1910 (e.g., antenna tilts and measurement offsets are different control points, but they both impact the handover boundary).

Implicit conflicts are conflicts that cannot be observed directly, even the dependence between xApps 1910 are not obvious. For instance, different xApps 1910 may optimize different metrics and (re-)configure different parameters. Nonetheless, optimizing one metric may have implicit, unwanted, and maybe adversary side effects on one of the metrics optimized by another xApp 1910 (e.g., protecting throughput metrics for GBR users may degrade non-GBR metrics or even cell throughput).

For mitigating these conflicts, the conflict mitigation component 1931 can take different approaches. For example, direct conflicts may be mitigated by pre-action coordination, wherein the xApps 1910 or the conflict mitigation component 1931 needs to make the final determination on whether any specific change is made, or in which order the changes are applied. Indirect conflicts can be resolved by post-action verification. Here, the actions are executed and the effects on the target metric are observed. Based on the observations, the system has to decide on potential corrections (e.g., rolling back one of the xApp 1910 actions). Implicit conflicts are the most difficult to mitigate since these dependencies are difficult or impossible to observe and therefore hard to model in any mitigation scheme. In some cases, it may be possible to design around such conflicts by ensuring that use cases (xApps 1910) target different parameters, thus, falling back to the previous (indirect conflict) approach, but a generic approach to managing such conflicts can be established. The individual xApp 1910 goals are defined by A1 policies, but utility metrics can be defined that incorporate the relative importance of each of the metrics targeted by the xApps 1910 as well as the importance of the optimization (use case). The conflict mitigation function 1931 may also use AI/ML approaches to conflict resolution such as, for example, reinforcement learning, to a-priori assess, for each proposed change, the likely probability of degrading a metric versus the potential improvement.

The messaging infrastructure 1935 provides low-latency message delivery service(s) between internal endpoints of the near-RT RIC 1914. The messaging infrastructure 1935 supports registration (e.g., endpoints register themselves to the messaging infrastructure), discovery (e.g., endpoints are discovered by the messaging infrastructure initially and registered to the messaging infrastructure), and deletion of endpoints (e.g., endpoints are deleted once they are not used anymore). As examples, the messaging infrastructure 1935 provides the following APIs: an API for sending messages to the messaging infrastructure 1935, and an API for receiving messages from the messaging infrastructure1935. Additionally or alternatively, the messaging infrastructure 1935 supports multiple messaging modes such as, for example, point-to-point mode (e.g. message exchange among endpoints) and publish/subscribe mode (e.g., real-time data dispatching from E2 termination to multiple subscriber xApps 1935). Additionally or alternatively, the messaging infrastructure 1935 provides message routing, namely according to the message routing information, messages can be dispatched to different endpoints. Additionally or alternatively, the messaging infrastructure 1935 supports message robustness to avoid data loss during a messaging infrastructure outage/restart or to release resources from the messaging infrastructure once a message is outdated..

The security function 1934 is provided to prevent (or at least reduce the likelihood of) malicious xApps 1910 from abusing radio network information (e.g. exporting to unauthorized external systems) and/or control capabilities over RANFs. The security requirements of the X may be the same or similar as those discussed in 3GPP TS 33.401 and 3GPP TS 33.501.

The management function 1933 performs various operations and maintenance (OAM) management functions to manage aspects of the near-RT RIC 1915, which may be based on, for example, interactions with the SMO 1902. The OAM management management functions include, for example, fault, configuration, accounting, performance, file, security and other management plane services. OAM management follows O1 related management aspects defined in [ORAN.OAM-Arch] and/or the like.

To support OAM management services, the near-RT RIC 1915 provides at least some of the following capabilities: fault management, configuration management, logging, tracing, and metrics collection. For fault management, the near-RT RIC 1915 provides near-RT RIC platform fault supervision management services (MnS) over the O1 interface as defined in [ORAN.OAM-Arch]). For configuration management, the near-RT RIC 1915 provides near-RT RIC platform provisioning MnS over the O1 interface as defined in [ORAN.OAM-Arch].

The logging capability is to capture information needed to operate, troubleshoot, and report on the performance of the Near-RT RIC platform 1915 and its constituent components. Log records may be viewed and consumed directly by users and systems, indexed and loaded into a data storage, and used to compute metrics and generate reports. The near-RT RIC 1915 components may log events according to a common logging format. Additionally, different logs can be generated (e.g., audit log, metrics log, error log and debug log). The tracing capability includes tracing mechanisms used to monitor transactions and/or workflows. An example subscription workflow can be broken into two traces namely, a subscription request trace followed by a response trace. Individual traces can be analysed to understand timing latencies as the workflow traverses a particular Near-RT RIC component. The metrics collection capability includes to mechanisms to collect and report metrics. The metrics collection capability collects metrics for performance and fault management specific to each xApp logic and other internal functions are collected and published for authorized consumer (e.g., SMO 1902, xApp manager discussed previously, and/or the like).

The E2 termination 1922 terminates E2 connections (e.g., SCTP connections and/or other like connections of other access technologies and/or protocols such as any of those discussed herein) from respective E2 nodes 1950; routes messages from xApps 1910 through the E2 connections to an E2 node; decodes the payload of an incoming ASN.1 messages (or other messages) at least enough to determine message type; handles incoming E2 messages related to E2 connectivity; receives and respond to the E2 setup requests from individual E2 nodes 1950; notifies xApps 1910 of the list of RANF supported by individual E2 nodes 1950 based on information derived from the E2 setup and RIC service update procedures (see e.g., [ORAN.E2AP]); and notifies the newly connected E2 Node of the list of accepted functions.

A1 termination 1924 provides a generic API by means of which the near-RT RIC 1914 can receive and send messages via the A1 interface (see e.g., [ORAN.A1GAP]). These include, for example, A1 policies and enrichment information received from the non-RT RIC 1912, and/or A1 policy feedback sent towards the non-RT RIC 1912.

An implementation of O1 termination 1925 at the near-RT RIC 1914 depends on the deployment options described in [ORAN.OAM-Arch] such as, for example, when the near-RT RIC 1914 is modelled as a stand-alone managed element. The O1 termination 1925 communicates with the SMO 1902 via the O1 interface and exposes O1-related management services [ORAN.O1-Interface] from Near-RT RIC. For the following O1 MnS, the near-RT RIC 1914 is the MnS producer and the SMO 1902 is the MnS consumer: a first O1 MnS includes the O1 termination 1925 exposing provisioning management services from the near-RT RIC 1914 to O1 provisioning management service consumer; a second O1 MnS includes the O1 termination 1925 supporting translation of O1 management services to the near-RT RIC 1914 internal APIs; a third O1 termination 1925 exposes FM services to report faults and events from the near-RT RIC 1914 to O1 FM service consumer; a fourth O1 termination 1925 exposes PM services to report bulk and real-time PM data from the near-RT RIC 1914 to O1 PM service consumer(s); a fifth O1 MnS includes the O1 termination 1925 exposing file management services to download ML files, software files, and/or the like and upload log/trace files to/from file MnS consumer; and a sixth O1 MnS includes the O1 termination 1925 exposing communication surveillance services to O1 communication surveillance service consumer.

The AI/ML support function 1936 provides an AI/ML pipeline and training services for AI/ML models. The AI/ML data pipeline in the near-RT RIC 1914 offers data ingestion and preparation services for applications (e.g., xApps 1910, rApps, and/or the like). The input to the AI/ML data pipeline may include E2 node data collected over the E2 interface (e.g., measurement data, metrics, and/or the like), enrichment information over A1 interface, information from applications (e.g., xApps 1910, rApps, and/or the like), data retrieved from the near-RT RIC DB 1916 through the messaging infrastructure 1935, and/or data (observability insights) retrieved from the xApp manager through the messaging infrastructure 1935. Additionally or alternatively, the AI/ML pipeline may provide the various information/data to the xApp manager (or an associated AI/ML model) for training. The output of the AI/ML data pipeline may be provided to the AI/ML training capability in the near-RT RIC 1914. Additionally or alternatively, the output of the AI/ML data pipeline may be provided to the xApp manager for generating insights regarding HW, SW, and/or NW resource allocations as discussed previously. The AI/ML training in the near-RT RIC 1914 offers training of applications (e.g., xApps 1910, rApps, and/or the like) within or by the near-RT RIC 1914 (see e.g., [ORAN.RICARCH] and [ORAN.AIML]). The AI/ML training provides generic and use case-independent capabilities to AI/ML-based applications that may be useful to multiple use cases. The various AI/ML models/algorithms (before and after training) may be based on the various example AI/ML models/algorithms discussed herein.

The xApp repository function 1937 performs selection of xApps for A1 message routing based on policy type and/or operator policies; provides the policy types supported in or by the near-RT RIC 1914 to the A1 termination function 1924; and enforces xApp access control to requested A1-EI type based on operator policies. The supported policy types are based on policy types supported by the registered xApps 1910 and/or operator policies.

The API enablement (enabl.) 1938 provides near-RT RIC APIs that can be categorized based on the interaction with the near-RT RIC platform 1914, and such APIs can be related to E2-related services, A1-related services, management function 1933 services, and database 1916 services. The API enablement (enabl.) 1938 provides support for registration, discovery and consumption of the near-RT RIC 1914 APIs within the near-RT RIC 1914 scope. In particular, the API enablement 1938 services include: repository and/or registry services for the near-RT RIC APIs; services that allow discovery of registered near-RT RIC APIs; services to authenticate xApps 1910 for use of the near-RT RIC APIs; services that enable generic subscription and event notification; and means to avoid compatibility clashes between xApps 1910 and the services they access. The API enablement services 1938 can be accessed by the xApps 1910 via one or more enablement APIs. The provided enablement APIs may need to consider the level of trust related to individual xApps 1910 (e.g., 3rd party xApps 1910, RIC-owned xApps 1910, and/or the like), and as such, may provide access to the near-RT RIC platform 1914 based on permissions, authorizations, and/or the like associated with individual xApps 1910.

The near-RT RIC APIs are a collection of well-defined interfaces providing near-RT RIC platform services. These APIs need to explicitly define the possible types of information flows and data models. The near-RT RIC APIs are essential to host 3rd party xApps 1910 in an inter-operable way on different Near-RT RIC platforms. In various implementations, the near-RT RIC 1914 provides the following Near-RT RIC APIs for xApps 1910: A1 related APIs (e.g., APIs allowing to access to A1 related functionality such as A1 termination 1924); E2 related APIs (e.g., APIs allowing to access to E2 related functionality such as E2 termination 1922 and associated xApp subscription management function 1932 and the conflict mitigation function 1931); management APIs (e.g., APIs allowing to access to the management function 1933); SDL APIs (e.g., APIs allowing to access to the SDL function 1917); and enablement APIs (e.g., APIs between individual xApps 1910 and the API enablement function 1938). Additional aspects related to the near-RT RIC APIs are discussed in [ORAN.RICARCH].

The O-RAN system/architecture/framework of Figures 15-19 may provide one or more E2 service models (E2SMs) (see e.g., [ORAN.E2SM]). An E2SM is a description of the services exposed by a specific RANF within an E2 node over the E2 interface towards the Near-RT RIC 1514. A given RANF offers a set of services to be exposed over the E2 (e.g., REPORT, INSERT, CONTROL, POLICY, and/or the like) using E2AP defined procedures (see e.g., [ORAN.E2AP] § 8) and E2AP message formats and IEs (see e.g., [ORAN.E2AP] § 9).

E2SM-KPM is for the RANF handling reporting of the cell-level performance measurements for 5G networks defined in [TS28552] and for EPC networks defined in 3GPP TS 32.425 v17.1.0 (2021-06-24), and their possible adaptation of UE-level or QoS flow-level measurements. The RANF KPM is used to provide RIC service exposure of the performance measurement logical function of the E2 nodes. Based on the O-RAN deployment architecture, available measurements could be different. Figure A.1-1 in [ORAN.E2SM-KPM] shows the target deployment architecture for E2SM-KPM. Figure 17 shows another deployment architecture for E2SM-KPM, wherein the E2 nodes are connected to the EPC 1742a and the 5GC 1742b as discussed previously. For each logical function the E2 node(s) uses the RAN Function Definition IE to declare the list of available measurements and a set of supported RIC services (REPORT). The contents of RANF specific E2SM-KPM data fields and/or IEs are discussed in [ORAN.E2SM-KPM].

The E2SM-KPM supports O-CU-CP 1621, O-CU-UP 1622, and O-DU 1615 as part of NG-RAN connected to a 5GC or as part of a E-UTRAN connected to an EPC. The E2 node hosts the RANF "KPM Monitor," which performs the following functionalities: exposure of available measurements from O-DU, O-CU-CP, and/or O-CU-UP via the RAN Function Definition IE; and periodic reporting of measurements subscribed from Near-RT RIC. The E2SM-KPM also exposes a set of services described in [ORAN.E2SM-KPM] § 6.2. The E2SM-KPM set of services includes report services, which include: E2 node measurement; E2 node measurement for a single UE; condition-based UE-level E2 node measurement; common condition-based UE-level E2 node measurement; and E2 node measurements for multiple UEs. These services may be initiated according to periodical event(s). A KPM report is (or includes) the performance measurements for 4G LTE and 5G NR NFs. Additional aspects of the E2SM-KPM are discussed in [ORAN.E2SM-KPM].

For the purposes of the E2SM-NI, the E2 node terminating the E2 Interface is assumed to host one or more instances of the RANF "Network Interface," which performs the following functionalities: exposure of Network Interfaces; modification of both incoming and outgoing network interface message contents; and/or execution of policies that may result in change of network behavior. The E2SM-NI provides a set of RANF exposure services described in clause 6.2 of [ORAN.E2SM-NI] and is assumed that the same E2SM may be used to describe either a single RANF handling all network interfaces or more than one RANF with each one handling a subset of the NIs terminated on the E2 node. Additional aspects of the E2SM-NI are discussed in [ORAN.E2SM-NI].

For the purposes of the E2SM-RC, the E2 node terminating the E2 interface is assumed to host one or more instances of the RANF "RAN Control," which performs the following functionalities: E2 REPORT services used to expose RAN control and UE context related information; E2 INSERT services used to suspend RAN control related call processes; E2 CONTROL services used to resume or initiate RAN control related call processes, modify RAN configuration and/or E2 service-related UE context information; and E2 POLICY services used to modify the behaviour of RAN control related processes. The E2SM-RC also includes a set of RANF exposure services described in [ORAN.E2SM-RC] § 6.2, wherein a single RANF in the E2 node handles all RC-related call processes, or more than one RANF in the E2 node where each instance handles a subset of the RC-related call processes on the E2 node. Additional aspects of the E2SM-RC services are discussed in more detail in [ORAN.E2SM-RC].

For the purposes of the E2SM-CCC, the E2 node terminating the E2 interface is assumed to host one or more instances of the RANF "Cell Configuration and Control," which performs the following functionalities: E2 REPORT services used to expose node level and cell level configuration information; and E2 CONTROL services used to initiate control and/or configuration of node level and cell level parameters. The E2SM-CCC also includes a set of RANF exposure services described in [ORAN.E2SM-CCC] § 6.2, wherein a single RANF in the E2 node handles all RAN CCC-related processes or more than one RANF in the E2 node where each instance handles a subset of the CCC-related processes on the E2 node. Additional aspects of the E2SM-CCC services are discussed in more detail in [ORAN.E2SM-CCC].

## 3. EXAMPLE IMPLEMENTATIONS

Additional examples of the presently described methods, devices, systems, and networks discussed herein include the following, non-limiting implementations. Each of the following non-limiting examples may stand on its own or may be combined in any permutation or combination with any one or more of the other examples provided below or throughout the present disclosure.

Example 1 includes a method of alignment of channel estimation boundaries between a DU and RU based on indication from DU to RU, application of DMRS based BF according to the indicated boundaries and channel estimation of port reduced DMRS at the DU according to the indicated boundaries.

Example 2 includes the method of example 1 and/or some other example(s) herein, wherein the indication from DU to RU comprises of request from DU to RU for port reduced DMRS transfer, indication of the time frequency continuity boundary to be used at the RU based on advertisement of the time frequency continuity boundary options supported by the RU.

Example 3 includes the method of examples 1-2 and/or some other example(s) herein, wherein application of DMRS based BF according to the indicated boundaries comprises of channel estimation of non port reduced DMRS according to the indication, estimation of interference according to the indication, determination of BF weights according to the indication and application of BF weights to DMRS and PUSCH according to the indicated boundaries.

Example 4 includes the method of examples 1-3 and/or some other example(s) herein, wherein channel estimation of port reduced DMRS at the DU comprises of TO estimation, FO estimation, channel estimation (MMSE) filter application according to the indicated boundaries.

Example 5 includes a method for aligning channel estimation boundaries between a distributed unit (DU) and a remote unit (RU), comprising: receiving, by the RU, an indication of one or more processing continuity boundaries from the DU; and performing, by the RU, DMRS based BF according to the indicated processing continuity boundaries.

Example 6 includes the method of example 5 and/or some other example(s) herein, wherein the method includes: performing channel estimation of port reduced DMRS at the DU according to the indicated processing continuity boundaries.

Example 7 includes the method of example 6 and/or some other example(s) herein, wherein performing the channel estimation of port reduced DMRS at the DU includes: timing offset (TO) estimation, frequency offset (FO) estimation, and/or channel estimation (MMSE) filter application according to the indicated boundaries.

Example 8 includes the method of examples 5-7 and/or some other example(s) herein, wherein the method includes: sending, by the RU, a message to the DU, wherein the message includes one or more processing continuity boundaries capabilities supported by the RU.

Example 9 includes the method of example 8 and/or some other example(s) herein, wherein the one or more processing continuity boundaries capabilities includes one or more time frequency continuity boundary options supported by the RU.

Example 10 includes the method of example 9 and/or some other example(s) herein, wherein the indication comprises an indication of a time frequency continuity boundary to be used at the RU based on the one or more time frequency continuity boundary options supported by the RU.

Example 11 includes the method of examples 5-10 and/or some other example(s) herein, wherein the indication comprises a request for port reduced DMRS transfer.

Example 12 includes the method of examples 5-11 and/or some other example(s) herein, wherein performing the DMRS based BF includes: performing channel estimation of non-port reduced DMRS according to the indication.

Example 13 includes the method of examples 5-12 and/or some other example(s) herein, wherein performing the DMRS based BF includes: estimating interference according to the indication.

Example 14 includes the method of examples 5-13 and/or some other example(s) herein, wherein performing the DMRS based BF includes: determining BF weights according to the indication, and applying the BF weights to DMRS and PUSCH according to the indicated boundaries.

Example 15 includes one or more computer readable media comprising instructions, wherein execution of the instructions by processor circuitry of a distributed unit, DU, of a disaggregated radio access network, RAN, is to cause the processor circuitry to: determine a continuity boundary representative of a number of consecutive physical resource blocks and a number of consecutive OFDM symbols not exceeding a slot boundary; instruct the DU to send information representing the continuity boundary to a radio unit, RU, of the disaggregated RAN; perform a channel estimation based on a demodulation reference signal, DMRS, received from the RU via a fronthaul interface within the continuity boundary.

Example 16 includes the one or more computer readable media of Example 15, wherein execution of the instructions is to cause the processor circuitry to apply a filtering to the DMRS using a single set of filter coefficients within the continuity boundary and perform the channel estimation after the application of the filtering.

Example 17 includes the one or more computer readable media of Example 15 or Example 16, wherein the information representing the continuity boundary comprises a predetermined processing continuity boundary and sent to the RU via an M-plane interface.

Example 18 includes the one or more computer readable media of Example 15 or Example 16, wherein execution of the instructions is to cause the processor circuitry to instruct the DU to indicate the continuity boundary dynamically to the RU via a C-plane interface.

Example 19 includes the one or more computer readable media of any one of Examples 15 to 18, wherein execution of the instructions is to cause the processor circuitry to receive capability information from the RU representing one or more processing continuity boundaries capabilities supported by the RU, wherein the continuity boundary is determined based on the one or more processing continuity boundaries capabilities supported by the RU.

Example 20 includes the one or more computer readable media of Example 19, wherein the one or more processing continuity boundaries capabilities includes one or more time frequency continuity boundary options supported by the RU.

Example 21 includes the one or more computer readable media of Example 20, wherein the information representing the continuity boundary further comprises an indication of a request for a port reduced DMRS transfer.

Example 22 includes the one or more computer readable media of any one of Examples 15 to 21, wherein execution of the instructions is to cause the processor circuitry to apply the continuity boundary for processing of all spatial layers of received physical uplink shared channel, PUSCH, transmissions in a multiuser, MU, group.

Example 23 includes the one or more computer readable media of any one of Examples 15 to 22, wherein execution of the instructions is to cause the processor circuitry to perform at least one of: a timing offset estimation, a frequency offset estimation, or a channel estimation minimum mean square estimation, MMSE, filter application according to the continuity boundary.

Example 24 includes the one or more computer readable media of any one of Examples 15 to 23, wherein a received communication signal including the DMRS comprises a plurality of consecutive physical resource blocks and a plurality of consecutive OFDM symbols; wherein execution of the instructions is to cause the processor circuitry to apply a first single set of filter coefficients to a first set of consecutive physical blocks of the plurality of consecutive physical resource blocks and to a first set of consecutive OFDM symbols of the plurality of consecutive symbols residing within the continuity boundary and apply a second single set of filter coefficients to a second set of consecutive physical blocks of the plurality of consecutive physical resource blocks and to a second set of consecutive OFDM symbols of the plurality of consecutive symbols within the continuity boundary.

Example 25 includes the one or more computer readable media of Example 24, wherein the first set of consecutive physical blocks and the second set of consecutive physical blocks are contiguous.

Example 26 includes the one or more computer readable media of any one of Examples 15 to 25, wherein execution of the instructions is to cause the processor circuitry to: track timing offset and frequency offset on a per user equipment basis based on long-term information from multiple physical uplink shared channels; and send the tracked timing offset and frequency offset to the RU.

Example 27 includes the one or more computer readable media of any one of Examples 15 to 26, wherein execution of the instructions is to cause the processor circuitry to: determine a residual timing offset from the DMRS received from the RU; and perform the channel estimation based on the determined residual timing offset.

Example 28 includes the one or more computer readable media of Example 27, wherein execution of the instructions is to cause the processor circuitry to: determine the residual timing offset by correlating adjacent DMRS resource elements within the continuity boundary; and combine residual timing offset estimates across the continuity boundary.

Example 29 includes the one or more computer readable media of any one of Examples 15 to 28, wherein execution of the instructions is to cause the processor circuitry to: determine a residual frequency offset from the DMRS received from the RU; and perform the channel estimation based on the determined residual frequency offset.

Example 30 includes the one or more computer readable media of Example 29, wherein execution of the instructions is to cause the processor circuitry to: determine the residual frequency offset by correlating DMRS resource elements of different DMRS symbols within the continuity boundary; and combine residual frequency offset estimates across the continuity boundary.

Example 31 includes one or more computer readable media comprising instructions, wherein execution of the instructions by processor circuitry of a radio unit, RU, of a disaggregated radio access network, RAN, is to cause the processor circuitry to: determine a continuity boundary representative of a set of consecutive physical resource blocks and a set of consecutive OFDM symbols based on information received from a DU of the disaggregated radio access network; apply a demodulation reference signal, DMRS, based beamforming based on the continuity boundary to obtain a beamformed signal comprising a port reduced DMRS; instruct the RU to send the port reduced DMRS to the DU via a fronthaul interface.

Example 32 includes the one or more computer readable media of Example 31, wherein the information comprises a predetermined processing continuity boundary received from the DU via an M-plane interface.

Example 33 includes the one or more computer readable media of Example 31, wherein execution of the instructions is to cause the processor circuitry to receive the information dynamically from the DU via a C-plane interface.

Example 34 includes the one or more computer readable media of any one of Examples 31 to 33, wherein execution of the instructions is to cause the processor circuitry to send capability information representing one or more processing continuity boundaries capabilities supported by the RU to the DU.

Example 35 includes the one or more computer readable media of Example 34, wherein the one or more processing continuity boundaries capabilities includes one or more time frequency continuity boundary options supported by the RU.

Example 36 includes the one or more computer readable media of Example 35, wherein the information further comprises an indication of a request for a port reduced DMRS transfer.

Example 37 includes the one or more computer readable media of any one of Examples 31 to 36, wherein the DMRS based beamforming comprises a DMRS based beamforming with equalization or a DMRS based beamforming without equalization.

Example 38 includes the one or more computer readable media of any one of Examples 31 to 37, wherein the DMRS based beamforming comprises a channel estimation of a non-port reduced DMRS according to the information.

Example 39 includes the one or more computer readable media of any one of Examples 31 to 38, wherein execution of the instructions is to cause the processor circuitry to estimate interference according to the information.

Example 40 includes the one or more computer readable media of any one of Examples 31 to 39, wherein execution of the instructions is to cause the processor circuitry to determine beamforming weights according to the information and apply the beamforming weights to a DMRS and PUSCH according to the information.

Example Z01 includes one or more computer readable media comprising instructions, wherein execution of the instructions by processor circuitry is to cause the processor circuitry to perform the method of any one of examples 1-14.

Example Z02 includes a computer program comprising the instructions of example Z01.

Example Z03 includes an Application Programming Interface defining functions, methods, variables, data structures, and/or protocols for the computer program of example Z02.

Example Z04 includes an API or specification defining functions, methods, variables, data structures, protocols, and the like, defining or involving use of any of examples 1-14 or portions thereof, or otherwise related to any of examples 1-14 or portions thereof.

Example Z05 includes an apparatus comprising circuitry loaded with the instructions of example Z01.

Example Z06 includes an apparatus comprising circuitry operable to run the instructions of example Z01.

Example Z07 includes an integrated circuit comprising one or more of the processor circuitry of example Z01 and the one or more computer readable media of example Z01.

Example Z08 includes a computing system comprising the one or more computer readable media and the processor circuitry of example Z01.

Example Z09 includes an apparatus comprising means for executing the instructions of example Z01.

Example Z10 includes a signal generated as a result of executing the instructions of example Z01.

Example Z11 includes a data unit generated as a result of executing the instructions of example Z01.

Example Z12 includes the data unit of example Z10 and/or some other example(s) herein, wherein the data unit is a datagram, network packet, data frame, data segment, a Protocol Data Unit (PDU), a Service Data Unit (SDU), a message, or a database object.

Example Z13 includes a signal encoded with the data unit of examples Z11 and/or Z12.

Example Z14 includes an electromagnetic signal carrying the instructions of example Z01.

Example Z15 includes an apparatus comprising means for performing the method of any one of examples 1-14 and/or some other example(s) herein.

Example Z16 includes an edge compute node executing a service as part of one or more edge applications instantiated on virtualization infrastructure, the service being related to any of examples 1-14, portions thereof, and/or some other example(s) herein.

## 4. TERMINOLOGY

For the purposes of the present document, the following terms and definitions are applicable to the examples and embodiments discussed herein. As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The phrase "X(s)" means one or more X or a set of X. The description may use the phrases "in an embodiment," "In some embodiments," "in one implementation," "In some implementations," "in some examples", and the like, each of which may refer to one or more of the same or different embodiments, implementations, and/or examples. Furthermore, the terms "comprising," "including," "having," and the like, as used with respect to the present disclosure, are synonymous.

The terms "master" and "slave" at least in some examples refers to a model of asymmetric communication or control where one device, process, element, or entity (the "master") controls one or more other device, process, element, or entity (the "slaves"). The terms "master" and "slave" are used in this disclosure only for their technical meaning. The term "master" or "grandmaster" may be substituted with any of the following terms "main", "source", "primary", "initiator", "requestor", "transmitter", "host", "maestro", "controller", "provider", "producer", "client", "source", "mix", "parent", "chief", "manager", "reference" (e.g., as in "reference clock" or the like), and/or the like. Additionally, the term "slave" may be substituted with any of the following terms "receiver", "secondary", "subordinate", "replica", target", "responder", "device", "performer", "agent", "standby", "consumer", "peripheral", "follower", "server", "child", "helper", "worker", "node", and/or the like.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "establish" or "establishment" at least in some examples refers to (partial or in full) acts, tasks, operations, and the like, related to bringing or the readying the bringing of something into existence either actively or passively (e.g., exposing a device identity or entity identity). Additionally or alternatively, the term "establish" or "establishment" at least in some examples refers to (partial or in full) acts, tasks, operations, and the like, related to initiating, starting, or warming communication or initiating, starting, or warming a relationship between two entities or elements (e.g., establish a session, establish a session, and the like). Additionally or alternatively, the term "establish" or "establishment" at least in some examples refers to initiating something to a state of working readiness. The term "established" at least in some examples refers to a state of being operational or ready for use (e.g., full establishment). Furthermore, any definition for the term "establish" or "establishment" defined in any specification or standard can be used for purposes of the present disclosure and such definitions are not disavowed by any of the aforementioned definitions.

The term "obtain" at least in some examples refers to (partial or in full) acts, tasks, operations, and the like, of intercepting, movement, copying, retrieval, or acquisition (e.g., from a memory, an interface, or a buffer), on the original packet stream or on a copy (e.g., a new instance) of the packet stream. Other aspects of obtaining or receiving may involving instantiating, enabling, or controlling the ability to obtain or receive a stream of packets (or the following parameters and templates or template values).

The term "receipt" at least in some examples refers to any action (or set of actions) involved with receiving or obtaining an object, data, data unit, and the like, and/or the fact of the object, data, data unit, and the like being received. The term "receipt" at least in some examples refers to an object, data, data unit, and the like, being pushed to a device, system, element, and the like (e.g., often referred to as a push model), pulled by a device, system, element, and the like (e.g., often referred to as a pull model), and/or the like.

The term "element" at least in some examples refers to a unit that is indivisible at a given level of abstraction and has a clearly defined boundary, wherein an element may be any type of entity including, for example, one or more devices, systems, controllers, network elements, modules, engines, components, and so forth, or combinations thereof. The term "entity" at least in some examples refers to a distinct element of a component, architecture, platform, device, and/or system. Additionally or alternatively, the term "entity" at least in some examples refers to information transferred as a payload.

The term "measurement" at least in some examples refers to the observation and/or quantification of attributes of an object, event, or phenomenon. Additionally or alternatively, the term "measurement" at least in some examples refers to a set of operations having the object of determining a measured value or measurement result, and/or the actual instance or execution of operations leading to a measured value. Additionally or alternatively, the term "measurement" at least in some examples refers to data recorded during testing.

The term "metric" at least in some examples refers to a quantity produced in an assessment of a measured value. Additionally or alternatively, the term "metric" at least in some examples refers to data derived from a set of measurements. Additionally or alternatively, the term "metric" at least in some examples refers to set of events combined or otherwise grouped into one or more values. Additionally or alternatively, the term "metric" at least in some examples refers to a combination of measures or set of collected data points. Additionally or alternatively, the term "metric" at least in some examples refers to a standard definition of a quantity, produced in an assessment of performance and/or reliability of the network, which has an intended utility and is carefully specified to convey the exact meaning of a measured value.

The term "signal" at least in some examples refers to an observable change in a quality and/or quantity. Additionally or alternatively, the term "signal" at least in some examples refers to a function that conveys information about of an object, event, or phenomenon. Additionally or alternatively, the term "signal" at least in some examples refers to any time varying voltage, current, or electromagnetic wave that may or may not carry information. The term "digital signal" at least in some examples refers to a signal that is constructed from a discrete set of waveforms of a physical quantity so as to represent a sequence of discrete values.

The terms "ego" (as in, e.g., "ego device") and "subject" (as in, e.g., "data subject") at least in some examples refers to an entity, element, device, system, and the like, that is under consideration or being considered. The terms "neighbor" and "proximate" (as in, e.g., "proximate device") at least in some examples refers to an entity, element, device, system, and the like, other than an ego device or subject device.

The term "identifier" at least in some examples refers to a value, or a set of values, that uniquely identify an identity in a certain scope. Additionally or alternatively, the term "identifier" at least in some examples refers to a sequence of characters that identifies or otherwise indicates the identity of a unique object, element, or entity, or a unique class of objects, elements, or entities. Additionally or alternatively, the term "identifier" at least in some examples refers to a sequence of characters used to identify or refer to an application, program, session, object, element, entity, variable, set of data, and/or the like. The "sequence of characters" mentioned previously at least in some examples refers to one or more names, labels, words, numbers, letters, symbols, and/or any combination thereof. Additionally or alternatively, the term "identifier" at least in some examples refers to a name, address, label, distinguishing index, and/or attribute. Additionally or alternatively, the term "identifier" at least in some examples refers to an instance of identification. The term "persistent identifier" at least in some examples refers to an identifier that is reused by a device or by another device associated with the same person or group of persons for an indefinite period. The term "identification" at least in some examples refers to a process of recognizing an identity as distinct from other identities in a particular scope or context, which may involve processing identifiers to reference an identity in an identity database. The term "application identifier", "application ID", or "app ID" at least in some examples refers to an identifier that can be mapped to a specific application, application instance, or application instance. In the context of 3GPP 5G/NR, an "application identifier" at least in some examples refers to an identifier that can be mapped to a specific application traffic detection rule.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" includes, but is not limited to, memory, portable or fixed storage devices, optical storage devices, and various other mediums capable of storing, containing or carrying instructions or data.

The terms "machine-readable medium" and "computer-readable medium" refers to tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus includes but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP). A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived includes source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) includes: compiling (e.g., from source code, object code, and/or the like), interpreting, loading, organizing (e.g., dynamically or statically linking), encoding, decoding, encrypting, unencrypting, packaging, unpackaging, or otherwise manipulating the information into the instructions. In an example, the derivation of the instructions includes assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, and/or the like) on one or several remote servers. The source code packages may be encrypted when in transit over a network and decrypted, uncompressed, assembled (e.g., linked) if necessary, and compiled or interpreted (e.g., into a library, stand-alone executable, and/or the like) at a local machine, and executed by the local machine. The terms "machine-readable medium" and "computer-readable medium" may be interchangeable for purposes of the present disclosure. The term "non-transitory computer-readable medium at least in some examples refers to any type of memory, computer readable storage device, and/or storage disk and may exclude propagating signals and transmission media.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "SmartNIC" at least in some examples refers to a network interface controller (NIC), network adapter, or a programmable network adapter card with programmable hardware accelerators and network connectivity (e.g., Ethernet or the like) that can offload various tasks or workloads from other compute nodes or compute platforms such as servers, application processors, and/or the like and accelerate those tasks or workloads. A SmartNIC has similar networking and offload capabilities as an IPU, but remains under the control of the host as a peripheral device.

The term "infrastructure processing unit" or "IPU" at least in some examples refers to an advanced networking device with hardened accelerators and network connectivity (e.g., Ethernet or the like) that accelerates and manages infrastructure functions using tightly coupled, dedicated, programmable cores. In some implementations, an IPU offers full infrastructure offload and provides an extra layer of security by serving as a control point of a host for running infrastructure applications. An IPU is capable of offloading the entire infrastructure stack from the host and can control how the host attaches to this infrastructure. This gives service providers an extra layer of security and control, enforced in hardware by the IPU.

The term "device" at least in some examples refers to a physical entity embedded inside, or attached to, another physical entity in its vicinity, with capabilities to convey digital information from or to that physical entity.

The term "controller" at least in some examples refers to an element or entity that has the capability to affect a physical entity, such as by changing its state or causing the physical entity to move.

The term "scheduler" at least in some examples refers to an entity or element that assigns resources (e.g., processor time, network links, memory space, and/or the like) to perform tasks. The term "network scheduler" at least in some examples refers to a node, element, or entity that manages network packets in transmit and/or receive queues of one or more protocol stacks of network access circuitry (e.g., a network interface controller (NIC), baseband processor, and the like). The term "network scheduler" at least in some examples can be used interchangeably with the terms "packet scheduler", "queueing discipline" or "qdisc", and/or "queueing algorithm".

The term "terminal" at least in some examples refers to point at which a conductor from a component, device, or network comes to an end. Additionally or alternatively, the term "terminal" at least in some examples refers to an electrical connector acting as an interface to a conductor and creating a point where external circuits can be connected. In some examples, terminals may include electrical leads, electrical connectors, electrical connectors, solder cups or buckets, and/or the like.

The term "compute node" or "compute device" at least in some examples refers to an identifiable entity implementing an aspect of computing operations, whether part of a larger system, distributed collection of systems, or a standalone apparatus. In some examples, a compute node may be referred to as a "computing device", "computing system", or the like, whether in operation as a client, server, or intermediate entity. Specific implementations of a compute node may be incorporated into a server, base station, gateway, road side unit, on-premise unit, user equipment, end consuming device, appliance, or the like. For purposes of the present disclosure, the term "node" at least in some examples refers to and/or is interchangeable with the terms "device", "component", "sub-system", and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers includes an operating system (OS) that provides executable program instructions for the general administration and operation of the individual server computer devices, and includes a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

The term "platform" at least in some examples refers to an environment in which instructions, program code, software elements, and the like can be executed or otherwise operate, and examples of such an environment include an architecture (e.g., a motherboard, a computing system, and/or the like), one or more hardware elements (e.g., embedded systems, and the like), a cluster of compute nodes, a set of distributed compute nodes or network, an operating system, a virtual machine (VM), a virtualization container, a software framework, a client application (e.g., web browser or the like) and associated application programming interfaces, a cloud computing service (e.g., platform as a service (PaaS)), or other underlying software executed with instructions, program code, software elements, and the like.

The term "architecture" at least in some examples refers to a computer architecture or a network architecture. The term "computer architecture" at least in some examples refers to a physical and logical design or arrangement of software and/or hardware elements in a computing system or platform including technology standards for interacts therebetween. The term "network architecture" at least in some examples refers to a physical and logical design or arrangement of software and/or hardware elements in a network including communication protocols, interfaces, and media transmission.

The term "appliance," "computer appliance," and the like, at least in some examples refers to a computer device or computer system with program code (e.g., software or firmware) that is specifically designed to provide a specific computing resource. The term "virtual appliance" at least in some examples refers to a virtual machine image to be implemented by a hypervisor-equipped device that virtualizes or emulates a computer appliance or otherwise is dedicated to provide a specific computing resource. The term "security appliance", "firewall", and the like at least in some examples refers to a computer appliance designed to protect computer networks from unwanted traffic and/or malicious attacks. The term "policy appliance" at least in some examples refers to technical control and logging mechanisms to enforce or reconcile policy rules (information use rules) and to ensure accountability in information systems.

The term "gateway" at least in some examples refers to a network appliance that allows data to flow from one network to another network, or a computing system or application configured to perform such tasks. Examples of gateways include IP gateways, Internet-to-Orbit (I2O) gateways, IoT gateways, cloud storage gateways, and/or the like.

The term "user equipment" or "UE" at least in some examples refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, and the like. Furthermore, the term "user equipment" or "UE" includes any type of wireless/wired device or any computing device including a wireless communications interface. Examples of UEs, client devices, and the like, include desktop computers, workstations, laptop computers, mobile data terminals, smartphones, tablet computers, wearable devices, machine-to-machine (M2M) devices, machine-type communication (MTC) devices, Internet of Things (IoT) devices, embedded systems, sensors, autonomous vehicles, drones, robots, in-vehicle infotainment systems, instrument clusters, onboard diagnostic devices, dashtop mobile equipment, electronic engine management systems, electronic/engine control units/modules, microcontrollers, control module, server devices, network appliances, head-up display (HUD) devices, helmut-mounted display devices, augmented reality (AR) devices, virtual reality (VR) devices, mixed reality (MR) devices, and/or other like systems or devices.

The term "station" or "STA" at least in some examples refers to a logical entity that is a singly addressable instance of a medium access control (MAC) and physical layer (PHY) interface to the wireless medium (WM). The term "wireless medium" or WM" at least in some examples refers to the medium used to implement the transfer of protocol data units (PDUs) between peer physical layer (PHY) entities of a wireless local area network (LAN).

The term "network element" at least in some examples refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, network access node (NAN), base station, access point (AP), RAN device, RAN node, gateway, server, network applicance, network function (NF), virtualized NF (VNF), and/or the like.

The term "network controller" at least in some examples refers to a functional block that centralizes some or all of the control and management functionality of a network domain and may provide an abstract view of the network domain to other functional blocks via an interface.

The term "network access node" or "NAN" at least in some examples refers to a network element in a radio access network (RAN) responsible for the transmission and reception of radio signals in one or more cells or coverage areas to or from a UE or station. A "network access node" or "NAN" can have an integrated antenna or may be connected to an antenna array by feeder cables. Additionally or alternatively, a "network access node" or "NAN" includes specialized digital signal processing, network function hardware, and/or compute hardware to operate as a compute node. In some examples, a "network access node" or "NAN" may be split into multiple functional blocks operating in software for flexibility, cost, and performance. In some examples, a "network access node" or "NAN" may be a base station (e.g., an evolved Node B (eNB) or a next generation Node B (gNB)), an access point and/or wireless network access point, router, switch, hub, radio unit or remote radio head, Transmission Reception Point (TRxP), a gateway device (e.g., Residential Gateway, Wireline 5G Access Network, Wireline 5G Cable Access Network, Wireline BBF Access Network, and the like), network appliance, and/or some other network access hardware.

The term "access point" or "AP" at least in some examples refers to an entity that contains one station (STA) and provides access to the distribution services, via the wireless medium (WM) for associated STAs. An AP comprises a STA and a distribution system access function (DSAF).

The term "cell" at least in some examples refers to a radio network object that can be uniquely identified by a UE from an identifier (e.g., cell ID) that is broadcasted over a geographical area from a network access node (NAN). Additionally or alternatively, the term "cell" at least in some examples refers to a geographic area covered by a NAN. The term "handover" at least in some examples refers to the transfer of a user's connection from one radio channel to another (can be the same or different cell). Additionally or alternatively, the term "handover" at least in some examples refers to the process in which a radio access network changes the radio transmitters, radio access mode, and/or radio system used to provide the bearer services, while maintaining a defined bearer service QoS

The term "serving cell" at least in some examples refers to a primary cell (PCell) for a UE in a connected mode or state (e.g., RRC_CONNECTED) and not configured with carrier aggregation (CA) and/or dual connectivity (DC). Additionally or alternatively, the term "serving cell" at least in some examples refers to a set of cells comprising zero or more special cells and one or more secondary cells for a UE in a connected mode or state (e.g., RRC_CONNECTED) and configured with CA.

The term "primary cell" or "PCell" at least in some examples refers to a Master Cell Group (MCG) cell, operating on a primary frequency, in which a UE either performs an initial connection establishment procedure or initiates a connection re-establishment procedure. The term "Secondary Cell" or "SCell" at least in some examples refers to a cell providing additional radio resources on top of a special cell (SpCell) for a UE configured with CA. The term "special cell" or "SpCell" at least in some examples refers to a PCell for non-DC operation or refers to a PCell of an MCG or a PSCell of an SCG for DC operation.

The term "Master Cell Group" or "MCG" at least in some examples refers to a group of serving cells associated with a "Master Node" comprising a SpCell (PCell) and optionally one or more SCells. The term "Secondary Cell Group" or "SCG" at least in some examples refers to a subset of serving cells comprising a Primary SCell (PSCell) and zero or more SCells for a UE configured with DC. The term "Primary SCG Cell" refers to the SCG cell in which a UE performs random access when performing a reconfiguration with sync procedure for DC operation.

The term "Master Node" or "MN" at least in some examples refers to a NAN that provides control plane connection to a core network. The term "Secondary Node" or "SN" at least in some examples refers to a NAN providing resources to the UE in addition to the resources provided by an MN and/or a NAN with no control plane connection to a core network

The term "E-UTEAN NodeB", "eNodeB", or "eNB" at least in some examples refers to a RAN node providing E-UTRA user plane (PDCP/RLC/MAC/PHY) and control plane (RRC) protocol terminations towards a UE, and connected via an S1 interface to the Evolved Packet Core (EPC). Two or more eNBs are interconnected with each other (and/or with one or more en-gNBs) by means of an X2 interface.

The term "next generation eNB" or "ng-eNB" at least in some examples refers to a RAN node providing E-UTRA user plane and control plane protocol terminations towards a UE, and connected via the NG interface to the 5GC. Two or more ng-eNBs are interconnected with each other (and/or with one or more gNBs) by means of an Xn interface.

The term "Next Generation NodeB", "gNodeB", or "gNB" at least in some examples refers to a RAN node providing NR user plane and control plane protocol terminations towards a UE, and connected via the NG interface to the 5GC. Two or more gNBs are interconnected with each other (and/or with one or more ng-eNBs) by means of an Xn interface.

The term "E-UTRA-NR gNB" or "en-gNB" at least in some examples refers to a RAN node providing NR user plane and control plane protocol terminations towards a UE, and acting as a Secondary Node in E-UTRA-NR Dual Connectivity (EN-DC) scenarios (see e.g., 3GPP TS 37.340 ("[TS37340]")). Two or more en-gNBs are interconnected with each other (and/or with one or more eNBs) by means of an X2 interface.

The term "Next Generation RAN node" or "NG-RAN node" at least in some examples refers to either a gNB or an ng-eNB.

The term "IAB-node" at least in some examples refers to a RAN node that supports new radio (NR) access links to user equipment (UEs) and NR backhaul links to parent nodes and child nodes. The term "IAB-donor" at least in some examples refers to a RAN node (e.g., a gNB) that provides network access to UEs via a network of backhaul and access links.

The term "Transmission Reception Point" or "TRxP" at least in some examples refers to an antenna array with one or more antenna elements available to a network located at a specific geographical location for a specific area.

The term "Central Unit" or "CU" at least in some examples refers to a logical node hosting radio resource control (RRC), Service Data Adaptation Protocol (SDAP), and/or Packet Data Convergence Protocol (PDCP) protocols/layers of an NG-RAN node, or RRC and PDCP protocols of the en-gNB that controls the operation of one or more DUs; a CU terminates an F1 interface connected with a DU and may be connected with multiple DUs. The term "Distributed Unit" or "DU" at least in some examples refers to a logical node hosting Backhaul Adaptation Protocol (BAP), F1 application protocol (F1AP), radio link control (RLC), medium access control (MAC), and physical (PHY) layers of the NG-RAN node or en-gNB, and its operation is partly controlled by a CU; one DU supports one or multiple cells, and one cell is supported by only one DU; and a DU terminates the F1 interface connected with a CU. The term "Radio Unit" or "RU" at least in some examples refers to a logical node hosting PHY layer or Low-PHY layer and radiofrequency (RF) processing based on a lower layer functional split. The term "split architecture" at least in some examples refers to an architecture in which an CU, DU, and/or RU are physically separated from one another. Additionally or alternatively, the term "split architecture" at least in some examples refers to a RAN architecture such as those discussed in 3GPP TS 38.401 ("[TS38401]"), 3GPP TS 38.410 ("[TS38410]"), and/or 3GPP TS 38.473 ("[TS38473]").The term "integrated architecture at least in some examples refers to an architecture in which an RU and DU are implemented on one platform, and/or an architecture in which a DU and a CU are implemented on one platform.

The term "Residential Gateway" or "RG" at least in some examples refers to a device providing, for example, voice, data, broadcast video, video on demand, to other devices in customer premises. The term "Wireline 5G Access Network" or "W-SGAN" at least in some examples refers to a wireline AN that connects to a 5GC via N2 and N3 reference points. The W-5GAN can be either a W-5GBAN or W-5GCAN. The term "Wireline 5G Cable Access Network" or "W-5GCAN" at least in some examples refers to an Access Network defined in/by CableLabs. The term "Wireline BBF Access Network" or "W-5GBAN" at least in some examples refers to an Access Network defined in/by the Broadband Forum (BBF). The term "Wireline Access Gateway Function" or "W-AGF" at least in some examples refers to a Network function in W-5GAN that provides connectivity to a 3GPP 5G Core network (5GC) to 5G-RG and/or FN-RG. The term "5G-RG" at least in some examples refers to an RG capable of connecting to a 5GC playing the role of a user equipment with regard to the 5GC; it supports secure element and exchanges N1 signaling with 5GC. The 5G-RG can be either a 5G-BRG or 5G-CRG.

The term "SMTC" refers to an SSB-based measurement timing configuration configured by *SSB-MeasurementTimingConfiguration.* The term "SSB" refers to an SS/PBCH block.

The term "edge computing" at least in some examples refers to an implementation or arrangement of distributed computing elements that move processing activities and resources (e.g., compute, storage, acceleration, and/or network resources) towards the "edge" of the network in an effort to reduce latency and increase throughput for endpoint users (client devices, user equipment, and the like). Additionally or alternatively, term "edge computing" at least in some examples refers to a set of services hosted relatively close to a client/UE's access point of attachment to a network to achieve relatively efficient service delivery through reduced end-to-end latency and/or load on the transport network. In some examples, edge computing implementations involve the offering of services and/or resources in a cloud-like systems, functions, applications, and subsystems, from one or multiple locations accessible via wireless networks. Additionally or alternatively, term "edge computing" at least in some examples refers to the concept, as described in [TS23501], that enables operator and 3rd party services to be hosted close to a UE's access point of attachment, to achieve an efficient service delivery through the reduced end-to-end latency and load on the transport network.

The term "edge compute node" or "edge compute device" at least in some examples refers to an identifiable entity implementing an aspect of edge computing operations, whether part of a larger system, distributed collection of systems, or a standalone apparatus. In some examples, a compute node may be referred to as a "edge node", "edge device", "edge system", whether in operation as a client, server, or intermediate entity. Additionally or alternatively, the term "edge compute node" at least in some examples refers to a real-world, logical, or virtualized implementation of a compute-capable element in the form of a device, gateway, bridge, system or subsystem, component, whether operating in a server, client, endpoint, or peer mode, and whether located at an "edge" of an network or at a connected location further within the network. however, references to an "edge computing system" generally refer to a distributed architecture, organization, or collection of multiple nodes and devices, and which is organized to accomplish or offer some aspect of services or resources in an edge computing setting.

The term "edge computing platform" or "edge platform" at least in some examples refers to a collection of functionality that is used to instantiate, execute, or run edge applications on a specific edge compute node (e.g., virtualisation infrastructure and/or the like), enable such edge applications to provide and/or consume edge services, and/or otherwise provide one or more edge services.

The term "edge application" or "edge app" at least in some examples refers to an application that can be instantiated on, or executed by, an edge compute node within an edge computing network, system, or framework, and can potentially provide and/or consume edge computing services.

The term "edge service" at least in some examples refers to a service provided via an edge compute node and/or edge platform, either by the edge platform itself and/or by an edge application.

The term "colocated" or "co-located" at least in some examples refers to two or more elements being in the same place or location, or relatively close to one another (e.g., within some predetermined distance from one another). Additionally or alternatively, the term "co-located" or "co-located" atleastin some examples refers to the placement or deployment of two or more compute elements or compute nodes together in a secure dedicated storage facility, or within a same enclosure or housing.

The term "central office" or "CO" at least in some examples refers to an aggregation point for telecommunications infrastructure within an accessible or defined geographical area, often where telecommunication service providers have traditionally located switching equipment for one or multiple types of access networks. In some examples, a CO can be physically designed to house telecommunications infrastructure equipment or compute, data storage, and network resources. The CO need not, however, be a designated location by a telecommunications service provider. The CO may host any number of compute devices for edge applications and services, or even local implementations of cloud-like services.

The term "cloud computing" or "cloud" at least in some examples refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like).

The term "cluster" at least in some examples refers to a set or grouping of entities as part of a cloud computing service and/or an edge computing system (or systems), in the form of physical entities (e.g., different computing systems, network elements, networks and/or network groups), logical entities (e.g., applications, functions, security constructs, virtual machines, virtualization containers, and the like), and the like. In some examples, a "cluster" is also referred to as a "group" or a "domain". The membership of cluster may be modified or affected based on conditions, parameters, criteria, configurations, functions, and/or other aspects including from dynamic or property-based membership, from network or system management scenarios, and/or the like.

The term "compute resource" or simply "resource" at least in some examples refers to an object with a type, associated data, a set of methods that operate on it, and, if applicable, relationships to other resources. Additionally or alternatively, the term "compute resource" or "resource" at least in some examples refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, and the like), operating systems, virtual machines (VMs), software/applications, computer files, and/or the like. A "hardware resource" at least in some examples refers to compute, storage, and/or network resources provided by physical hardware element(s). A "virtualized resource" at least in some examples refers to compute, storage, and/or network resources provided by virtualization infrastructure to an application, device, system, and the like. The term "network resource" or "communication resource" at least in some examples refers to resources that are accessible by computer devices/systems via a communications network. The term "system resources" at least in some examples refers to any kind of shared entities to provide services, and includes computing and/or network resources. System resources may be considered as a set of coherent functions, network data objects or services, accessible through a server where such system resources reside on a single host or multiple hosts and are clearly identifiable.

The term "workload" at least in some examples refers to an amount of work performed by a computing system, device, entity, and the like, during a period of time or at a particular instant of time. A workload may be represented as a benchmark, such as a response time, throughput (e.g., how much work is accomplished over a period of time), and/or the like. Additionally or alternatively, the workload may be represented as a memory workload (e.g., an amount of memory space needed for program execution to store temporary or permanent data and to perform intermediate computations), processor workload (e.g., a number of instructions being executed by a processor during a given period of time or at a particular time instant), an I/O workload (e.g., a number of inputs and outputs or system accesses during a given period of time or at a particular time instant), database workloads (e.g., a number of database queries during a period of time), a network-related workload (e.g., a number of network attachments, a number of mobility updates, a number of radio link failures, a number of handovers, an amount of data to be transferred over an air interface, and the like), and/or the like. Various algorithms may be used to determine a workload and/or workload characteristics, which may be based on any of the aforementioned workload types.

The term "cloud service provider" or "CSP" at least in some examples refers to an organization that operates or otherwise provides cloud resources including, for example, centralized, regional, and/or edge data centers and/or the like. In some examples, the term "cloud computing" refers to computing resources and services offered by a CSP.

The term "data center" at least in some examples refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

The term "access edge layer" indicates the sub-layer of infrastructure edge closest to the end user or device. For example, such layer may be fulfilled by an edge data center deployed at a cellular network site. The access edge layer functions as the front line of the infrastructure Edge and may connect to an aggregation Edge layer higher in the hierarchy.

The term "aggregation edge layer" indicates the layer of infrastructure edge one hop away from the access edge layer. This layer can exist as either a medium-scale data center in a single location or may be formed from multiple interconnected micro data centers to form a hierarchical topology with the access Edge to allow for greater collaboration, workload failover, and scalability than access Edge alone.

The term "network function" or "NF" at least in some examples refers to a functional block within a network infrastructure that has one or more external interfaces and a defined functional behavior.

The term "network service" or "NS" at least in some examples refers to a composition or collection of NF(s) and/or network service(s), defined by its functional and behavioral specification(s).

The term "RAN function" or "RANF" at least in some examples refers to a functional block within a RAN architecture that has one or more external interfaces and a defined behavior related to the operation of a RAN or RAN node. Additionally or alternatively, the term "RAN function" or "RANF" at least in some examples refers to a set of functions and/or NFs that are part of a RAN.

The term "Application Function" or "AF" at least in some examples refers to an element or entity that interacts with a 3GPP core network in order to provide services. Additionally or alternatively, the term "Application Function" or "AF" at least in some examples refers to an edge compute node or ECT framework from the perspective of a 5G core network. The term "edge compute function" or "ECF" at least in some examples refers to an element or entity that performs an aspect of an edge computing technology (ECT), an aspect of edge networking technology (ENT), or performs an aspect of one or more edge computing services running over the ECT or ENT. The term "management function" at least in some examples refers to a logical entity playing the roles of a service consumer and/or a service producer. The term "management service" at least in some examples refers to a set of offered management capabilities. The term "network function virtualization" or "NFV" at least in some examples refers to the principle of separating network functions from the hardware they run on by using virtualisation techniques and/or virtualization technologies.

The term "virtualized network function" or "VNF" at least in some examples refers to an implementation of an NF that can be deployed on a Network Function Virtualisation Infrastructure (NFVI). The term "Network Functions Virtualisation Infrastructure Manager" or "NFVI" at least in some examples refers to a totality of all hardware and software components that build up the environment in which VNFs are deployed.

The term "slice" at least in some examples refers to a set of characteristics and behaviors that separate one instance, traffic, data flow, application, application instance, link or connection, RAT, device, system, entity, element, and the like from another instance, traffic, data flow, application, application instance, link or connection, RAT, device, system, entity, element, and the like, or separate one type of instance, and the like, from another instance, and the like.

The term "network slice" at least in some examples refers to a logical network that provides specific network capabilities and network characteristics and/or supports various service properties for network slice service consumers. Additionally or alternatively, the term "network slice" at least in some examples refers to a logical network topology connecting a number of endpoints using a set of shared or dedicated network resources that are used to satisfy specific service level objectives(SLOs) and/or service level agreements (SLAs).

The term "network slicing" at least in some examples refers to methods, processes, techniques, and technologies used to create one or multiple unique logical and virtualized networks over a common multi-domain infrastructure. The term "access network slice", "radio access network slice", or "RAN slice" at least in some examples refers to a part of a network slice that provides resources in a RAN to fulfill one or more application and/or service requirements (e.g., SLAs, and the like). The term "network slice instance" at least in some examples refers to a set of Network Function instances and the required resources (e.g., compute, storage and networking resources) which form a deployed network slice. Additionally or alternatively, the term "network slice instance" at least in some examples refers to a representation of a service view of a network slice. The term "network instance" at least in some examples refers to information identifying a domain.

The term "service consumer" at least in some examples refers to an entity that consumes one or more services. The term "service producer" at least in some examples refers to an entity that offers, serves, or otherwise provides one or more services. The term "service provider" at least in some examples refers to an organization or entity that provides one or more services to at least one service consumer. For purposes of the present disclosure, the terms "service provider" and "service producer" may be used interchangeably even though these terms may refer to difference concepts. Examples of service providers include cloud service provider (CSP), network service provider (NSP), application service provider (ASP) (e.g., Application software service provider in a service-oriented architecture (ASSP)), internet service provider (ISP), telecommunications service provider (TSP), online service provider (OSP), payment service provider (PSP), managed service provider (MSP), storage service providers (SSPs), SAML service provider, and/or the like. At least in some examples, SLAs may specify, for example, particular aspects of the service to be provided including quality, availability, responsibilities, metrics by which service is measured, as well as remedies or penalties should agreed-on service levels not be achieved. The term "SAML service provider" at least in some examples refers to a system and/or entity that receives and accepts authentication assertions in conjunction with a single sign-on (SSO) profile of the Security Assertion Markup Language (SAML) and/or some other security mechanism(s).

The term "Virtualized Infrastructure Manager" or "VIM" at least in some examples refers to a functional block that is responsible for controlling and managing the NFVI compute, storage and network resources, usually within one operator's infrastructure domain.

The term "virtualization container", "execution container", or "container" at least in some examples refers to a partition of a compute node that provides an isolated virtualized computation environment. The term "OS container" at least in some examples refers to a virtualization container utilizing a shared Operating System (OS) kernel of its host, where the host providing the shared OS kernel can be a physical compute node or another virtualization container. Additionally or alternatively, the term "container" at least in some examples refers to a standard unit of software (or a package) including code and its relevant dependencies, and/or an abstraction at the application layer that packages code and dependencies together. Additionally or alternatively, the term "container" or "container image" at least in some examples refers to a lightweight, standalone, executable software package that includes everything needed to run an application such as, for example, code, runtime environment, system tools, system libraries, and settings.

The term "virtual machine" or "VM" at least in some examples refers to a virtualized computation environment that behaves in a same or similar manner as a physical computer and/or a server. The term "hypervisor" at least in some examples refers to a software element that partitions the underlying physical resources of a compute node, creates VMs, manages resources for VMs, and isolates individual VMs from each other.

The term "Data Network" or "DN" at least in some examples refers to a network hosting data-centric services such as, for example, operator services, the internet, third-party services, or enterprise networks. Additionally or alternatively, a DN at least in some examples refers to service networks that belong to an operator or third party, which are offered as a service to a client or user equipment (UE). DNs are sometimes referred to as "Packet Data Networks" or "PDNs". The term "Local Area Data Network" or "LADN" at least in some examples refers to a DN that is accessible by the UE only in specific locations, that provides connectivity to a specific DNN, and whose availability is provided to the UE.

The term "Internet of Things" or "IoT" at least in some examples refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. The term "edge IoT devices" at least in some examples refers to any kind of IoT devices deployed at a network's edge.

The term "application context" at at least in some examples refers to a set of data about an application client that resides in an edge application server (EAS). The term "application context relocation" or "ACR" at least in some examples refers to an end-to-end service continuity procedure described in [TS23558] § 8.8. The term "application context transfer" or "ACT" at least in some examples refers to the transfer of an application context between a source edge application server (EAS) and a target EAS, which is a part of the service continuity procedure described in [TS23558] § 8.8. The term "application server" at least in some examples refers to an application or other software element resident in the cloud and/or edge compute network/system/server performing one or more server functions. The term "edge application server" or "EAS" at least in some examples refers to an application server resident in an edge hosting environment. The term "edge computing service provider" or "ECSP" at least in some examples refers to a mobile network operator or a 3rd party service provider offering edge computing services. The term "ECSP management system" at least in some examples refers to a part of 3GPP management system that utilizes 3GPP defined management services to enable consumers (e.g., ASP. ECSP) to orchestrate and manage the EDN. The term "PLMN Management System" at least in some examples refers to a part of 3GPP Management System that utilizes 3GPP defined management services to enable consumers (e.g., PLMN operator) to orchestrate and manage the mobile networks. The term "Availability Zone" at least in some examples refers to GSMA Operator Platform Telco Edge Requirements (see e.g., Operator Platform Telco Edge Requirements, version 2.0, GSM ASSOCIATION (GSMA), Official Document OPG.02 (14 Apr. 2022)). The term "edge data network" or "EDN" at least in some examples refers to a local data network that supports the architecture for enabling edge applications. The term "edge enabler client context" or "EEC context" at least in some examples refers to a set of data about the Edge Enabler Client that resides in the edge enabler server (EES). The term "edge enabler layer" at least in some examples refers to the overall functionality provided by the entities, such as edge enabler client (EEC), edge enabler server (EES), and/or edge configuration server (ECS), in support of applications as per the architecture (see e.g., [TS23558] § 6). The term "edge hosting environment" at least in some examples refers to an environment providing support required for an edge application server's execution. The term "cloud data network" at least in some examples refers to a data network having a set of servers deployed in a central place and capable of serving UEs from wider coverage area, as opposed to the edge data network (EDN). The term "primary ECS" at least in some examples refers to an ECS whose address information is configured with the EEC. EEC is authorized to communicate with the Primary ECS directly. Additionally or alternatively, the term "primary ECS" can also be referred to as a "configured ECS" during the normative phase. The term "primary ECSP" at least in some examples refers to an ECSP for which a UE has authorization to obtain service. The term "partner ECS" at least in some examples refers to a federation partner of a primary ECS; in some examples, an EEC is not configured with the address information of partner ECSs. The term "partner ECSP" at least in some examples refers to an ECSP with whom a primary ECSP has a service level agreement (SLA) for resource sharing, for example, a federation partner of the primary ECSP.

The term "protocol" at least in some examples refers to a predefined procedure or method of performing one or more operations. Additionally or alternatively, the term "protocol" at least in some examples refers to a common means for unrelated objects to communicate with each other (sometimes also called interfaces). The term "communication protocol" at least in some examples refers to a set of standardized rules or instructions implemented by a communication device and/or system to communicate with other devices and/or systems, including instructions for packetizing/depacketizing data, modulating/demodulating signals, implementation of protocols stacks, and/or the like. In various implementations, a "protocol" and/or a "communication protocol" may be represented using a protocol stack, a finite state machine (FSM), and/or any other suitable data structure. The term "standard protocol" at least in some examples refers to a protocol whose specification is published and known to the public and is controlled by a standards body. The term "protocol stack" or "network stack" at least in some examples refers to an implementation of a protocol suite or protocol family. In various implementations, a protocol stack includes a set of protocol layers, where the lowest protocol deals with low-level interaction with hardware and/or communications interfaces and each higher layer adds additional capabilities. Additionally or alternatively, the term "protocol" at least in some examples refers to a formal set of procedures that are adopted to ensure communication between two or more functions within the within the same layer of a hierarchy of functions.

The term "application layer" at least in some examples refers to an abstraction layer that specifies shared communications protocols and interfaces used by hosts in a communications network. Additionally or alternatively, the term "application layer" at least in some examples refers to an abstraction layer that interacts with software applications that implement a communicating component, and includes identifying communication partners, determining resource availability, and synchronizing communication. Examples of application layer protocols include HTTP, HTTPs, File Transfer Protocol (FTP), Dynamic Host Configuration Protocol (DHCP), Internet Message Access Protocol (IMAP), Lightweight Directory Access Protocol (LDAP), MQTT (MQ Telemetry Transport), Remote Authentication Dial-In User Service (RADIUS), Diameter protocol, Extensible Authentication Protocol (EAP), RDMA over Converged Ethernet version 2 (RoCEv2), Real-time Transport Protocol (RTP), RTP Control Protocol (RTCP), Real Time Streaming Protocol (RTSP), SBMV Protocol, Skinny Client Control Protocol (SCCP), Session Initiation Protocol (SIP), Session Description Protocol (SDP), Simple Mail Transfer Protocol (SMTP), Simple Network Management Protocol (SNMP), Simple Service Discovery Protocol (SSDP), Small Computer System Interface (SCSI), Internet SCSI (iSCSI), iSCSI Extensions for RDMA (iSER), Transport Layer Security (TLS), voice over IP (VoIP), Virtual Private Network (VPN), Extensible Messaging and Presence Protocol (XMPP), and/or the like.

The term "session layer" at least in some examples refers to an abstraction layer that controls dialogues and/or connections between entities or elements, and may include establishing, managing and terminating the connections between the entities or elements.

The term "transport layer" at least in some examples refers to a protocol layer that provides end-to-end (e2e) communication services such as, for example, connection-oriented communication, reliability, flow control, and multiplexing. Examples of transport layer protocols include datagram congestion control protocol (DCCP), fibre channel protocol (FBC), Generic Routing Encapsulation (GRE), GPRS Tunneling (GTP), Micro Transport Protocol ($\mu$TP), Multipath TCP (MPTCP), MultiPath QUIC (MPQUIC), Multipath UDP (MPUDP), Quick UDP Internet Connections (QUIC), Remote Direct Memory Access (RDMA), Resource Reservation Protocol (RSVP), Stream Control Transmission Protocol (SCTP), transmission control protocol (TCP), user datagram protocol (UDP), and/or the like.

The term "network layer" at least in some examples refers to a protocol layer that includes means for transferring network packets from a source to a destination via one or more networks. Additionally or alternatively, the term "network layer" at least in some examples refers to a protocol layer that is responsible for packet forwarding and/or routing through intermediary nodes. Additionally or alternatively, theterm "network layer" or "internet layer" at least in some examples refers to a protocol layer that includes interworking methods, protocols, and specifications that are used to transport network packets across a network. As examples, the network layer protocols include internet protocol (IP), IP security (IPsec), Internet Control Message Protocol (ICMP), Internet Group Management Protocol (IGMP), Open Shortest Path First protocol (OSPF), Routing Information Protocol (RIP), RDMA over Converged Ethernet version 2 (RoCEv2), Subnetwork Access Protocol (SNAP), and/or some other internet or network protocol layer.

The term "link layer" or "data link layer" at least in some examples refers to a protocol layer that transfers data between nodes on a network segment across a physical layer. Examples of link layer protocols include logical link control (LLC), medium access control (MAC), Ethernet, RDMA over Converged Ethernet version 1 (RoCEv1), and/or the like.

The term "radio resource control", "RRC layer", or "RRC" at least in some examples refers to a protocol layer or sublayer that performs system information handling; paging; establishment, maintenance, and release of RRC connections; security functions; establishment, configuration, maintenance and release of Signalling Radio Bearers (SRBs) and Data Radio Bearers (DRBs); mobility functions/services; QoS management; and some sidelink specific services and functions over the Uu interface (see e.g., 3GPP TS 36.331 ("[TS36331]") and/or 3GPP TS 38.331 ("[TS38331]")).

The term "Service Data Adaptation Protocol", "SDAP layer", or "SDAP" at least in some examples refers to a protocol layer or sublayer that performs mapping between QoS flows and a data radio bearers (DRBs) and marking QoS flow IDs (QFI) in both DL and UL packets (see e.g., 3GPP TS 37.324 ("[TS37324]").

The term "Packet Data Convergence Protocol", "PDCP layer", or "PDCP" at least in some examples refers to a protocol layer or sublayer that performs transfer user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery (see e.g., 3GPP TS 36.323 and/or 3GPP TS 38.323 ("[TS38323]")).

The term "radio link control layer", "RLC layer", or "RLC" at least in some examples refers to a protocol layer or sublayer that performs transfer of upper layer PDUs; sequence numbering independent of the one in PDCP; error Correction through ARQ; segmentation and/or re-segmentation of RLC SDUs; reassembly of SDUs; duplicate detection; RLC SDU discarding; RLC re-establishment; and/or protocol error detection (see e.g., 3GPP TS 36.322 and 3GPP TS 38.322 ("[TS38322]")).

The term "medium access control protocol", "MAC protocol", or "MAC" at least in some examples refers to a protocol that governs access to the transmission medium in a network, to enable the exchange of data between stations in a network. Additionally or alternatively, the term "medium access control layer", "MAC layer", or "MAC" at least in some examples refers to a protocol layer or sublayer that performs functions to provide frame-based, connectionless-mode (e.g., datagram style) data transfer between stations or devices. Additionally or alternatively, the term "medium access control layer", "MAC layer", or "MAC" at least in some examples refers to a protocol layer or sublayer that performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding (see e.g., [IEEE802], 3GPP TS 36.321, and 3GPP TS 38.321 ("[TS38321]").

The term "physical layer", "PHY layer", or "PHY" at least in some examples refers to a protocol layer or sublayer that includes capabilities to transmit and receive modulated signals for communicating in a communications network (see e.g., [IEEE802], 3GPP TS 36.201, and 3GPP TS 38.201 ("[TS38201]").

The term "access technology" at least in some examples refers to the technology used for the underlying physical connection to a communication network. The term "radio access technology" or "RAT" at least in some examples refers to the technology used for the underlying physical connection to a radio based communication network. The term "radio technology" at least in some examples refers to technology for wireless transmission and/or reception of electromagnetic radiation for information transfer. The term "RAT type" at least in some examples may identify a transmission technology and/or communication protocol used in an access network. Examples of access technologies include wireless access technologies/RATs, wireline, wireline-cable, wireline broadband forum (wireline-BBF), Ethernet (see e.g., IEEE Standardfor Ethernet, IEEE Std 802.3-2018 (31 Aug. 2018) ("[IEEE8023]")) and variants thereof, fiber optics networks (e.g., ITU-T G.651, ITU-T G.652, Optical Transport Network (OTN), Synchronous optical networking (SONET) and synchronous digital hierarchy (SDH), and the like), digital subscriber line (DSL) and variants thereof, Data Over Cable Service Interface Specification (DOCSIS) technologies, hybrid fiber-coaxial (HFC) technologies, and/or the like. Examples of RATs (or RAT types) and/or communications protocols include Advanced Mobile Phone System (AMPS) technologies (e.g., Digital AMPS (D-AMPS), Total Access Communication System (TACS) and variants thereof, such as Extended TACS (ETACS), and the like); Global System for Mobile Communications (GSM) technologies (e.g., Circuit Switched Data (CSD), High-Speed CSD (HSCSD), General Packet Radio Service (GPRS), and Enhanced Data Rates for GSM Evolution (EDGE)); Third Generation Partnership Project (3GPP) technologies (e.g., Universal Mobile Telecommunications System (UMTS) and variants thereof (e.g., UMTS Terrestrial Radio Access (UTRA), Wideband Code Division Multiple Access (W-CDMA), Freedom of Multimedia Access (FOMA), Time Division-Code Division Multiple Access (TD-CDMA), Time Division-Synchronous Code Division Multiple Access (TD-SCDMA), and the like), Generic Access Network (GAN) / Unlicensed Mobile Access (UMA), High Speed Packet Access (HSPA) and variants thereof (e.g., HSPA Plus (HSPA+)), Long Term Evolution (LTE) and variants thereof (e.g., LTE-Advanced (LTE-A), Evolved UTRA (E-UTRA), LTE Extra, LTE-A Pro, LTE LAA, MuLTEfire, and the like), Fifth Generation (5G) or New Radio (NR), narrowband IoT (NB-IOT), 3GPP Proximity Services (ProSe), and/or the like); ETSI RATs (e.g., High Performance Radio Metropolitan Area Network (HiperMAN), Intelligent Transport Systems (ITS) (e.g., ITS-G5, ITS-G5B, ITS-G5C, and the like), and the like); Institute of Electrical and Electronics Engineers (IEEE) technologies and/or WiFi (e.g., IEEE Standard for Local and Metropolitan Area Networks: Overview and Architecture, IEEE Std 802-2014, pp.1-74 (30 Jun. 2014) ("[IEEE802]"), IEEE Standard for Information Technology--Telecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), IEEE 802.15 technologies (e.g., IEEE Standard for Low-Rate Wireless Networks, IEEE Std 802.15.4-2020, pp.1-800 (23 July 2020) ("[IEEE802154]") and variants thereof (e.g., ZigBee, WirelessHART, MiWi, ISA100.11a, Thread, IPv6 over Low power WPAN (6LoWPAN), and the like), IEEE Standardfor Local and metropolitan area networks - Part 15.6: Wireless Body Area Networks, IEEE Std 802.15.6-2012, pp. 1-271 (29 Feb. 2012), and the like), WLAN V2X RATs (e.g., IEEE Standard for Information technology-- Local and metropolitan area networks-- Specific requirements-- Part 11: Wireless LAN Medium Access Control (MAC) and Physical Layer (PHY) Specifications Amendment 6: Wireless Access in Vehicular Environments, IEEE Std 802.11p-2010, pp.1-51 (15 July 2010) ("[IEEE80211p]") (which is now part of [IEEE80211]), IEEE Guide for Wireless Access in Vehicular Environments (WAVE) Architecture, IEEE STANDARDS ASSOCIATION, IEEE 1609.0-2019 (10 Apr. 2019) ("[IEEE16090]"), IEEE 802.11bd, Dedicated Short Range Communications (DSRC), and/or the like), Worldwide Interoperability for Microwave Access (WiMAX) (e.g., IEEE Standardfor Air Interface for Broadband Wireless Access Systems, IEEE Std 802.16-2017, pp.1-2726 (02 Mar. 2018) ("[WiMAX]")), Mobile Broadband Wireless Access (MBWA)/iBurst (e.g., IEEE 802.20 and variants thereof), Wireless Gigabit Alliance (WiGig) standards (e.g., IEEE 802.11ad, IEEE 802.11ay, and the like), and so forth); Integrated Digital Enhanced Network (iDEN) and variants thereof (e.g., Wideband Integrated Digital Enhanced Network (WiDEN)); millimeter wave (mmWave) technologies/standards (e.g., wireless systems operating at 10-300 GHz and above 3GPP 5G); short-range and/or wireless personal area network (WPAN) technologies/standards (e.g., IEEE 802.15 technologies (e.g., as mentioned previously); Bluetooth and variants thereof (e.g., Bluetooth 5.3, Bluetooth Low Energy (BLE), and the like), WiFi-direct, Miracast, ANT/ANT+, Z-Wave, Universal Plug and Play (UPnP), low power Wide Area Networks (LPWANs), Long Range Wide Area Network (LoRa or LoRaWAN™), and the like); optical and/or visible light communication (VLC) technologies/standards (e.g., IEEE Standardfor Local and metropolitan area networks--Part 15.7: Short-Range Optical Wireless Communications, IEEE Std 802.15.7-2018, pp.1-407 (23 Apr. 2019), and the like); Sigfox; Mobitex; 3GPP2 technologies (e.g., cdmaOne (2G), Code Division Multiple Access 2000 (CDMA 2000), and Evolution-Data Optimized or Evolution-Data Only (EV-DO); Push-to-talk (PTT), Mobile Telephone System (MTS) and variants thereof (e.g., Improved MTS (IMTS), Advanced MTS (AMTS), and the like); Personal Digital Cellular (PDC); Personal Handy-phone System (PHS), Cellular Digital Packet Data (CDPD); Cellular Digital Packet Data (CDPD); DataTAC; Digital Enhanced Cordless Telecommunications (DECT) and variants thereof (e.g., DECT Ultra Low Energy (DECT ULE), DECT-2020, DECT-5G, and the like); Ultra High Frequency (UHF) communication; Very High Frequency (VHF) communication; and/or any other suitable RAT or protocol. In addition to the aforementioned RATs/standards, any number of satellite uplink technologies may be used for purposes of the present disclosure including, for example, radios compliant with standards issued by the International Telecommunication Union (ITU), or the ETSI, among others. The examples provided herein are thus understood as being applicable to various other communication technologies, both existing and not yet formulated. The term "Ethernet" at least in some examples refers to a term that is used to refer either to the IEEE 802.3 media access method or to the frame format discussed in [IEEE8023].

The term "channel" at least in some examples refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" at least in some examples refers to a connection between two devices through a RAT for the purpose of transmitting and receiving information.

The term "carrier" at least in some examples refers to a modulated waveform conveying one or more physical channels (e.g., 5G/NR, E-UTRA, UTRA, and/or GSM/EDGE physical channels). The term "carrier frequency" at least in some examples refers to the center frequency of a cell.

The term "bearer" at least in some examples refers to a information transmission path of defined capacity, delay, bit error rate, and/or the like. The term "radio bearer" at least in some examples refers to the service provided by Layer 2 (L2) for transfer of user data between user equipment (UE) and a radio access network (RAN). The term "radio access bearer" at least in some examples refers to the service that the access stratum provides to the non-access stratum for transfer of user data between a UE and a CN.

The term "beamforming" or "BF" at least in some examples refer to a spatial filtering mechanism used at a transmitter (Tx) to improve the received signal power, signal-to-noise ratio (SNR), or some other signalling metric at an intended receiver (Rx). The term "beamformer" at least in some examples refers to a STA that transmits a physical layer PDU (PPDU) using a beamforming steering matrix. The term "beamforming steering matrix" at least in some examples refers to a matrix determined using knowledge of the channel between a Tx and an intended Rx that maps from space-time streams to transmit antennas with the goal of improving the signal power, SNR, and/or some other signalling metric at the intended Rx.

The term "subframe" at least in some examples at least in some examples refers to a time interval during which a signal is signaled. In some implementations, a subframe is equal to 1 millisecond (ms). The term "time slot" at least in some examples at least in some examples refers to an integer multiple of consecutive subframes. The term "superframe" at least in some examples at least in some examples refers to a time interval comprising two time slots.

The term "interoperability" at least in some examples refers to the ability of STAs utilizing one communication system or RAT to communicate with other STAs utilizing another communication system or RAT. The term "Coexistence" at least in some examples refers to sharing or allocating radiofrequency resources among STAs using either communication system or RAT.

The term "reliability" at least in some examples refers to the ability of a computer-related component (e.g., software, hardware, or network element/entity) to consistently perform a desired function and/or operate according to a specification. Reliability in the context of network communications (e.g., "network reliability") at least in some examples refers to the ability of a network to carry out communication. The term "network reliability" at least in some examples refers to a probability or measure of delivering a specified amount of data from a source to a destination (or sink).

The term "local area network" or "LAN" at least in some examples refers to a network of devices, whether indoors or outdoors, covering a limited area or a relatively small geographic area (e.g., within a building or a campus). The term "wireless local area network", "wireless LAN", or "WLAN" at least in some examples refers to a LAN that involves wireless communications. The term "wide area network" or "WAN" at least in some examples refers to a network of devices that extends over a relatively large geographic area (e.g., a telecommunications network). Additionally or alternatively, the term "wide area network" or "WAN" at least in some examples refers to a computer network spanning regions, countries, or even an entire planet. The term "backbone network", "backbone", or "core network" at least in some examples refers to a computer network which interconnects networks, providing a path for the exchange of information between different subnetworks such as LANs or WANs.

The term "interworking" at least in some examples refers to the use of interconnected stations in a network for the exchange of data, by means of protocols operating over one or more underlying data transmission paths.

The term "flow" at least in some examples refers to a sequence of data and/or data units (e.g., datagrams, packets, or the like) from a source entity/element to a destination entity/element. Additionally or alternatively, the terms "flow" or "traffic flow" at least in some examples refer to an artificial and/or logical equivalent to a call, connection, or link. Additionally or alternatively, the terms "flow" or "traffic flow" at least in some examples refer to a sequence of packets sent from a particular source to a particular unicast, anycast, or multicast destination that the source desires to label as a flow; from an upper-layer viewpoint, a flow may include of all packets in a specific transport connection or a media stream, however, a flow is not necessarily 1:1 mapped to a transport connection. Additionally or alternatively, the terms "flow" or "traffic flow" at least in some examples refer to a set of data and/or data units (e.g., datagrams, packets, or the like) passing an observation point in a network during a certain time interval. Additionally or alternatively, the term "flow" at least in some examples refers to a user plane data link that is attached to an association. Examples are circuit switched phone call, voice over IP call, reception of an SMS, sending of a contact card, PDP context for internet access, demultiplexing a TV channel from a channel multiplex, calculation of position coordinates from geopositioning satellite signals, and the like. For purposes of the present disclosure, the terms "traffic flow", "data flow", "dataflow", "packet flow", "network flow", and/or "flow" may be used interchangeably even though these terms at least in some examples refers to different concepts.

The term "dataflow" or "data flow" at least in some examples refers to the movement of data through a system including software elements, hardware elements, or a combination of both software and hardware elements. Additionally or alternatively, the term "dataflow" or "data flow" at least in some examples refers to a path taken by a set of data from an origination or source to destination that includes all nodes through which the set of data travels.

The term "stream" or "data stream" at least in some examples refers to a sequence of data elements made available over time. Additionally or alternatively, the term "stream", "data stream", or "streaming" refers to a unidirectional flow of data. Additionally or alternatively, the term "stream", "data stream", or "streaming" refers to a manner of processing in which an object is not represented by a complete data structure of nodes occupying memory proportional to a size of that object, but are processed "on the fly" as a sequence of events. At least in some examples, functions that operate on a stream, which may produce another stream, are referred to as "filters," and can be connected in pipelines, analogously to function composition; filters may operate on one item of a stream at a time, or may base an item of output on multiple input items, such as a moving average or the like.

The term "distributed computing" at least in some examples refers to computation resources that are geographically distributed within the vicinity of one or more localized networks' terminations. The term "distributed computations" at least in some examples refers to a model in which components located on networked computers communicate and coordinate their actions by passing messages interacting with each other in order to achieve a common goal.

The term "service" at least in some examples refers to the provision of a discrete function within a system and/or environment. Additionally or alternatively, the term "service" at least in some examples refers to a functionality or a set of functionalities that can be reused. The term "microservice" at least in some examples refers to one or more processes that communicate over a network to fulfil a goal using technology-agnostic protocols (e.g., HTTP or the like). Additionally or alternatively, the term "microservice" at least in some examples refers to services that are relatively small in size, messaging-enabled, bounded by contexts, autonomously developed, independently deployable, decentralized, and/or built and released with automated processes. Additionally or alternatively, the term "microservice" at least in some examples refers to a self-contained piece of functionality with clear interfaces, and may implement a layered architecture through its own internal components. Additionally or alternatively, the term "microservice architecture" at least in some examples refers to a variant of the service-oriented architecture (SOA) structural style wherein applications are arranged as a collection of loosely-coupled services (e.g., fine-grained services) and may use lightweight protocols. The term "network service" at least in some examples refers to a composition of Network Function(s) and/or Network Service(s), defined by its functional and behavioural specification.

The term "session" at least in some examples refers to a temporary and interactive information interchange between two or more communicating devices, two or more application instances, between a computer and user, and/or between any two or more entities or elements. Additionally or alternatively, the term "session" at least in some examples refers to a connectivity service or other service that provides or enables the exchange of data between two entities or elements. The term "network session" at least in some examples refers to a session between two or more communicating devices over a network. The term "web session" at least in some examples refers to session between two or more communicating devices over the Internet or some other network. The term "session identifier," "session ID," or "session token" at least in some examples refers to a piece of data that is used in network communications to identify a session and/or a series of message exchanges.

The term "quality" at least in some examples refers to a property, character, attribute, or feature of something as being affirmative or negative, and/or a degree of excellence of something. Additionally or alternatively, the term "quality" at least in some examples, in the context of data processing, refers to a state of qualitative and/or quantitative aspects of data, processes, and/or some other aspects of data processing systems.

The term "Quality of Service" or "QoS' at least in some examples refers to a description or measurement of the overall performance of a service (e.g., telephony and/or cellular service, network service, wireless communication/connectivity service, cloud computing service, and the like). In some cases, the QoS may be described or measured from the perspective of the users of that service, and as such, QoS may be the collective effect of service performance that determine the degree of satisfaction of a user of that service. In other cases, QoS at least in some examples refers to traffic prioritization and resource reservation control mechanisms rather than the achieved perception of service quality. In these cases, QoS is the ability to provide different priorities to different applications, users, or flows, or to guarantee a certain level of performance to a flow. In either case, QoS is characterized by the combined aspects of performance factors applicable to one or more services such as, for example, service operability performance, service accessibility performance; service retain ability performance; service reliability performance, service integrity performance, and other factors specific to each service. Several related aspects of the service may be considered when quantifying the QoS, including packet loss rates, bit rates, throughput, transmission delay, availability, reliability, jitter, signal strength and/or quality measurements, and/or other measurements such as those discussed herein. Additionally or alternatively, the term "Quality of Service" or "QoS' at least in some examples refers to mechanisms that provide traffic-forwarding treatment based on flow-specific traffic classification. In some examples, Additionally or alternatively, the term "Quality of Service" or "QoS' at least in some examples is based on the definitions provided by *SERIES E: OVERALL NETWORK OPERATION, TELEPHONE SERVICE, SERVICE OPERATION AND HUMAN FACTORS Quality of telecommunication services: concepts, models, objectives and dependability planning - Terms and definitions related to the quality of telecommunication services, Definitions of terms related to quality of service,* ITU-T Recommendation E.800 (09/2008) ("[ITUE800]"). Additionally or alternatively, the term "Quality of Service" or "QoS' at least in some examples refers to the collective effect of service performances which determine the degree of satisfaction of a user of a service. In some examples, QoS is characterised by the combined aspects of performance factors applicable to all services, such as service operability performance; service accessibility performance; service retainability performance; service integrity performance; and/or other factors specific to each service. In some implementations, the term "Quality of Service" or "QoS" can be used interchangeably with the term "Class of Service" or "CoS". The term "Class of Service" or "CoS' at least in some examples refers to mechanisms that provide traffic-forwarding treatment based on non-flow-specific traffic classification. In some implementations, the term "Class of Service" or "CoS" can be used interchangeably with the term "Quality of Service" or "QoS".

The term "QoS flow" at least in some examples refers to the finest granularity for QoS forwarding treatment in a network. The term "5G QoS flow' at least in some examples refers to the finest granularity for QoS forwarding treatment in a 5G System (5GS). Traffic mapped to the same QoS flow (or 5G QoS flow) receive the same forwarding treatment. The term "QoS Identifier" at least in some examples refers to a scalar that is used as a reference to a specific QoS forwarding behavior (e.g., packet loss rate, packet delay budget, and the like) to be provided to a QoS flow. This may be implemented in an access network by referencing node specific parameters that control the QoS forwarding treatment (e.g., scheduling weights, admission thresholds, queue management thresholds, link layer protocol configuration, and the like). The term "QoS profile" at least in some examples refers to a QoS profile comprises a number of QoS parameters. A QoS profile is associated with each QoS session. The QoS profile defines the performance expectations placed on the bearer network. The term "QoS session" at least in some examples refers to a lifetime of PDP context. Additionally or alternatively, the term "QoS session" at least in some examples refers to a period between the opening and closing of a network connection whose characteristics are defined by a QoS profile. In some examples, multiple QoS sessions may exist, each with a different QoS profile.

The term "data buffer" or "buffer" at least in some examples refers to a region of a physical or virtual memory used to temporarily store data, for example, when data is being moved from one storage location or memory space to another storage location or memory space, data being moved between processes within a computer, allowing for timing corrections made to a data stream, reordering received data packets, delaying the transmission of data packets, and the like. At least in some examples, a "data buffer" or "buffer" may implement a queue. The term "circular buffer", "circular queue", "cyclic buffer", or "ring buffer" at least in some examples refers to a data structure that uses a single fixed-size buffer or other area of memory as if it were connected end-to-end or as if it has a circular or elliptical shape.

The term "piggyback" or "piggybacking", in the context of computer communications and/or networking, refers to attaching, appending, or hooking a first data unit to a second data unit that is to be transmitted next or sometime before the first data unit; in this way, the first data unit gets a "free ride" in the data packet or frame carrying the second data unit.

The term "channel coding" at least in some examples refers to processes and/or techniques to add redundancy to messages or packets in order to make those messages or packets more robust against noise, channel interference, limited channel bandwidth, and/or other errors. For purposes of the present disclosure, the term "channel coding" can be used interchangeably with the terms "forward error correction" or "FEC"; "error correction coding", "error correction code", or "ECC"; and/or "network coding" or "NC". The term "network coding" at least in some examples refers to processes and/or techniques in which transmitted data is encoded and decoded to improve network performance. The term "code rate" at least in some examples refers to the proportion of a data stream or flow that is useful or non-redundant (e.g., for a code rate of k/n, for every k bits of useful information, the (en)coder generates a total of n bits of data, of which n - k are redundant). The term "systematic code" at least in some examples refers to any error correction code in which the input data is embedded in the encoded output. The term "non-systematic code" at least in some examples refers to any error correction code in which the input data is not embedded in the encoded output. The term "interleaving" at least in some examples refers to a process to rearrange code symbols so as to spread bursts of errors over multiple codewords that can be corrected by ECCs. The term "code word" or "codeword" at least in some examples refers to an element of a code or protocol, which is assembled in accordance with specific rules of the code or protocol.

The term "network path" or "path" at least in some examples refers to a data communications feature of a communication system describing the sequence and identity of system components visited by one or more packets, where the components of the path may be either logical or physical. The term "network forwarding path" at least in some examples refers to an ordered list of connection points forming a chain of NFs and/or nodes, along with policies associated to the list.

The term "PDU Connectivity Service" at least in some examples refers to a service that provides exchange of protocol data units (PDUs) between a UE and a data network (DN). The term "PDU Session" at least in some examples refers to an association between a UE and a DN that provides a PDU connectivity service (see e.g., 3GPP TS 38.415 ("[TS38415]") and 3GPP TS 38.413 ("[TS38413]")); a PDU Session type can be IPv4, IPv6, IPv4v6, Ethernet), Unstructured, or any other network/connection type, such as those discussed herein. The term "PDU Session Resource" at least in some examples refers to an NG-RAN interface (e.g., NG, Xn, and/or E1 interfaces) and radio resources provided to support a PDU Session. The term "multi-access PDU session" or "MA PDU Session" at least in some examples refers to a PDU Session that provides a PDU connectivity service, which can use one access network at a time or multiple access networks simultaneously.

The term "traffic shaping" at least in some examples refers to a bandwidth management technique that manages data transmission to comply with a desired traffic profile or class of service. Traffic shaping ensures sufficient network bandwidth for time-sensitive, critical applications using policy rules, data classification, queuing, QoS, and other techniques. The term "throttling" at least in some examples refers to the regulation of flows into or out of a network, or into or out of a specific device or element. The term "access traffic steering" or "traffic steering" at least in some examples refers to a procedure that selects an access network for a new data flow and transfers the traffic of one or more data flows over the selected access network. Access traffic steering is applicable between one 3GPP access and one non-3GPP access. The term "access traffic switching" or "traffic switching" at least in some examples refers to a procedure that moves some or all traffic of an ongoing data flow from at least one access network to at least one other access network in a way that maintains the continuity of the data flow. The term "access traffic splitting" or "traffic splitting" at least in some examples refers to a procedure that splits the traffic of at least one data flow across multiple access networks. When traffic splitting is applied to a data flow, some traffic of the data flow is transferred via at least one access channel, link, or path, and some other traffic of the same data flow is transferred via another access channel, link, or path.

The term "address" or "network address" at least in some examples refers to an identifier for a node or host in a computer network, and may be a unique identifier across a network and/or may be unique to a locally administered portion of the network. Examples of identifiers and/or (network) addresses can include am application identifier, Bluetooth hardware device address (BD_ADDR), a cellular network address (e.g., Absolute Radio-Frequency Channel Number (ARFCN), Access Point Name (APN), AMF name and/or AMF identifier (ID), AF-Service-Identifier, Cell Global Identifier (CGI) (e.g., NR CGI (NCGI), CGI NG-RAN, CGI EUTRA, and/or the like), Closed Access Group Identifier (CAG-ID), Edge Application Server (EAS) ID, Data Network Access Identifier (DNAI), Data Network Name (DNN), Evolved Cell Global Identifier (ECGI), EPS Bearer Identity (EBI), Equipment Identity Register (EIR) and/or 5G-EIR, Extended Unique Identifier (EUI), Group ID for Network Selection (GIN), Generic Public Subscription Identifier (GPSI), Globally Unique AMF Identifier (GUAMI), Globally Unique Temporary Identifier (GUTI) and/or 5G-GUTI, gNB Identifier (gNB ID), Global gNB ID, International Mobile Equipment Identity (IMEI), IMEI Type Allocation Code (IMEA/TAC), International Mobile Subscriber Identity (IMSI), IMSI software version (IMSISV), permanent equipment identifier (PEI), Local Area Data Network (LADN) DNN, Local NG-RAN Node Identifier, Mobile Subscriber Identification Number (MSIN), Mobile Subscriber/Station ISDN Number (MSISDN), Network identifier (NID), Network Slice Instance (NSI) ID, Network Slice AS Group (NSAG), Permanent Equipment Identifier (PEI), Public Land Mobile Network (PLMN) identity (ID), Physical Cell Identifier (PCI), QoS Flow ID (QFI) and/or 5G QoS Identifier (5QI), RAN ID, Routing Indicator, Radio Network Temporary Identifier (RNTI) and variants thereof (e.g., any of those discussed in clause 8 of 3GPP TS 38.300 ("[TS38300]")), SMS Function (SMSF) ID, Standalone Non-Public Network (SNPN) ID, Single Network Slice Selection Assistance information (S-NSSAI), sidelink identities (e.g., Source Layer-2 ID, Destination Layer-2 ID, PC5 Link Identifier, and the like), Subscription Concealed Identifier (SUCI), Subscription Permanent Identifier (SUPI), Temporary Mobile Subscriber Identity (TMSI) and variants thereof, Tracking Area identity (TAI), UE Access Category and Identity, and/or other cellular network related identifiers), CAG-ID, drivers license number, Global Trade Item Number (GTIN) (e.g., Australian Product Number (APN), EPC, European Article Number (EAN), Universal Product Code (UPC), and the like), email address, Enterprise Application Server (EAS) ID, an endpoint address, an Electronic Product Code (EPC) as defined by the EPCglobal Tag Data Standard, Fully Qualified Domain Name (FQDN), flow ID and/or flow hash, hash value, index, internet protocol (IP) address in an IP network (e.g., IP version 4 (IPv4), IP version 6 (IPv6), and the like), an internet packet exchange (IPX) address, LAN ID, a MAC address, personal area network (PAN) ID, port number (e.g., TCP port number, UDP port number, and the like), price lookup code (PLC), product key, QUIC connection ID, RFID tag, sequence number, service set identifier (SSID) and variants thereof, screen name, serial number, stock keeping unit (SKU), socket address, social security number (SSN), telephone number (e.g., in a public switched telephone network (PTSN)), unique identifier (UID) (e.g., including globally UID, universally unique identifier (UUID) (e.g., as specified in ISO/IEC 11578:1996), and the like), a Universal Resource Locator (URL) and/or Universal Resource Identifier (URI), user name (e.g., ID for logging into a service provider platform, such as a social network and/or some other service), vehicle identification number (VIN), Virtual LAN (VLAN) ID, X.21 address, an X.25 address, Zigbee® ID, Zigbee® Device Network ID, and/or any other suitable network address and components thereof.

The term "port" in the context of computer networks, at least in some examples refers to a communication endpoint, a virtual data connection between two or more entities, and/or a virtual point where network connections start and end. Additionally or alternatively, a "port" at least in some examples is associated with a specific process or service. Additionally or alternatively, the term "port" at least in some examples refers to a particular interface of the specified equipment (apparatus) with an electromagnetic environment (e.g., any connection point on an equipment intended for connection of cables to or from that equipment is considered as a port).

The term "subnetwork" or "subnet" at least in some examples refers to a logical subdivision of a network, such as an IP network. The practice of dividing a network into two or more networks is called "subnetting."

The term "delay" at least in some examples refers to a time interval between two events. Additionally or alternatively, the term "delay" at least in some examples refers to a time interval between the propagation of a signal and its reception. The term "delay bound" at least in some examples refers to a predetermined or configured amount of acceptable delay. The term "per-packet delay bound" at least in some examples refers to a predetermined or configured amount of acceptable packet delay where packets that are not processed and/or transmitted within the delay bound are considered to be delivery failures and are discarded or dropped. The term "goodput" at least in some examples refers to a number of useful information bits delivered by the network to a certain destination per unit of time. The term "jitter" at least in some examples refers to a deviation from a predefined ("true") periodicity of a presumably periodic signal in relation to a reference clock signal. The term "latency" at least in some examples refers to the amount of time it takes to transfer a first/initial data unit in a data burst from one point to another. Additionally or alternatively, the term "latency" at least in some examples refers to the delay experienced by a data unit (e.g., frame) in the course of its propagation between two points in a network, measured from the time that a known reference point in the frame passes the first point to the time that the reference point in the data unit passes the second point. The term "network delay" at least in some examples refers to the delay of an a data unit within a network (e.g., an IP packet within an IP network). The term "packet delay" at least in some examples refers to the time it takes to transfer any packet from one point to another. Additionally or alternatively, the term "packet delay" or "per packet delay" at least in some examples refers to the difference between a packet reception time and packet transmission time. Additionally or alternatively, the "packet delay" or "per packet delay" can be measured by subtracting the packet sending time from the packet receiving time where the transmitter and receiver are at least somewhat synchronized. The term "packet drop rate" at least in some examples refers to a share of packets that were not sent to the target due to high traffic load or traffic management and should be seen as a part of the packet loss rate. The term "packet loss rate" at least in some examples refers to a share of packets that could not be received by the target, including packets droped, packets lost in transmission and packets received in wrong format. The term "performance indicator" at least in some examples refers to performance data aggregated over a group of network functions (NFs), which is derived from performance measurements collected at the NFs that belong to the group, according to the aggregation method identified in a Performance Indicator definition. The term "physical rate" or "PHY rate" at least in some examples refers to a speed at which one or more bits are actually sent over a transmission medium. Additionally or alternatively, the term "physical rate" or "PHY rate" at least in some examples refers to a speed at which data can move across a wireless link between a transmitter and a receiver. The term "processing delay" at least in some examples refers to an amount of time taken to process a packet in a network node. The term "propagation delay" at least in some examples refers to amount of time it takes a signal's header to travel from a sender to a receiver. The term "queuing delay" at least in some examples refers to an amount of time a job waits in a queue until that job can be executed. Additionally or alternatively, the term "queuing delay" at least in some examples refers to an amount of time a packet waits in a queue until it can be processed and/or transmitted. The term "throughput" or "network throughput" at least in some examples refers to a rate of production or the rate at which something is processed. Additionally or alternatively, the term "throughput" or "network throughput" at least in some examples refers to a rate of successful message (date) delivery over a communication channel. The term "transmission delay" at least in some examples refers to an amount of time needed (or necessary) to push a packet (or all bits of a packet) into a transmission medium.

The term "application" or "app" at least in some examples refers to a computer program designed to carry out a specific task other than one relating to the operation of the computer itself. Additionally or alternatively, term "application" or "app" at least in some examples refers to a complete and deployable package, environment to achieve a certain function in an operational environment.

The term "process" at least in some examples refers to an instance of a computer program that is being executed by one or more threads. In some implementations, a process may be made up of multiple threads of execution that execute instructions concurrently.

The term "algorithm" at least in some examples refers to an unambiguous specification of how to solve a problem or a class of problems by performing calculations, input/output operations, data processing, automated reasoning tasks, and/or the like.

The term "analytics" at least in some examples refers to the discovery, interpretation, and communication of meaningful patterns in data.

The term "application programming interface" or "API" at least in some examples refers to a set of subroutine definitions, communication protocols, and tools for building software. Additionally or alternatively, the term "application programming interface" or "API" at least in some examples refers to a set of clearly defined methods of communication among various components. In some examples, an API may be defined or otherwise used for a web-based system, operating system, database system, computer hardware, software library, and/or the like.

The terms "instantiate," "instantiation," and the like at least in some examples refers to the creation of an instance. In some examples, an "instance" also at least in some examples refers to a concrete occurrence of an object, which may occur, for example, during execution of program code.

The term "reference point" at least in some examples refers to a conceptual point at the conjunction of two non-overlapping functional groups, elements, or entities.

The term "reference" at least in some examples refers to data useable to locate other data and may be implemented a variety of ways (e.g., a pointer, an index, a handle, a key, an identifier, a hyperlink, and/or the like).

The term "use case" at least in some examples refers to a description of a system from a user's perspective. Use cases sometimes treat a system as a black box, and the interactions with the system, including system responses, are perceived as from outside the system. In some examples, use cases avoid technical jargon, preferring instead the language of the end user or domain expert. The term "user" at least in some examples refers to an abstract representation of any entity issuing commands, requests, and/or data to a compute node or system, and/or otherwise consumes or uses services. Additionally or alternative, the term "user" at least in some examples refers to an entity, not part of a 3GPP system, which uses 3GPP system services (e.g., a person using a 3GPP system mobile station as a portable telephone). The term "user profile" at least in some examples refers to a set of information used to provide a user with a consistent, personalised service environment, irrespective of the user's location or the terminal used (within the limitations of the terminal and the serving network).

The terms "configuration", "policy", "ruleset", and/or "operational parameters", at least in some examples refer to a machine-readable information object that contains instructions, conditions, parameters, and/or criteria that are relevant to a device, system, or other element/entity.

The term "data set" or "dataset" at least in some examples refers to a collection of data; a "data set" or "dataset" may be formed or arranged in any type of data structure. In some examples, one or more characteristics can define or influence the structure and/or properties of a dataset such as the number and types of attributes and/or variables, and various statistical measures (e.g., standard deviation, kurtosis, and/or the like). The term "data structure" at least in some examples refers to a data organization, management, and/or storage format. Additionally or alternatively, the term "data structure" at least in some examples refers to a collection of data values, the relationships among those data values, and/or the functions, operations, tasks, and the like, that can be applied to the data. Examples of data structures include primitives (e.g., Boolean, character, floating-point numbers, fixed-point numbers, integers, reference or pointers, enumerated type, and/or the like), composites (e.g., arrays, records, strings, union, tagged union, and/or the like), abstract data types (e.g., data container, list, tuple, associative array, map, dictionary, set (or dataset), multiset or bag, stack, queue, graph (e.g., tree, heap, and the like), and/or the like), routing table, symbol table, quadedge, blockchain, purely-functional data structures (e.g., stack, queue, (multi)set, random access list, hash consing, zipper data structure, and/or the like).

The term "association" at least in some examples refers to a model of relationships between Managed Objects. Associations can be implemented in several ways, such as: (1) name bindings, (2) reference attributes, and (3) association objects.

The term "information element" or "IE" at least in some examples refers to a structural element containing one or more fields. Additionally or alternatively, the term "information element" or "IE" at least in some examples refers to a field or set of fields defined in a standard or specification that is used to convey data and/or protocol information.

The term "field" at least in some examples refers to individual contents of an information element, or a data element that contains content. The term "data frame", "data field", or "DF" at least in some examples refers to a data type that contains more than one data element in a predefined order.

The term "data element" or "DE" at least in some examples refers to a data type that contains one single data. Additionally or alternatively, the term "data element" at least in some examples refers to an atomic state of a particular object with at least one specific property at a certain point in time, and may include one or more of a data element name or identifier, a data element definition, one or more representation terms, enumerated values or codes (e.g., metadata), and/or a list of synonyms to data elements in other metadata registries. Additionally or alternatively, a "data element" at least in some examples refers to a data type that contains one single data. Data elements may store data, which may be referred to as the data element's content (or "content items"). In some examples, content items may include text content, attributes, properties, and/or other elements referred to as "child elements." Additionally or alternatively, data elements may include zero or more properties and/or zero or more attributes, each of which may be defined as database objects (e.g., fields, records, and the like), object instances, and/or other data elements.

The term "attribute" at least in some examples refers to a markup construct including a name-value pair that exists within a start tag or empty element tag. Attributes contain data related to its element and/or control the element's behavior.

The term "Information Object Class" or "IOC" at least in some examples refers to a representation of the management aspect of a network resource. Additionally or alternatively, the term "Information Object Class" or "IOC" at least in some examples refers to a description of the information that can be passed/used in management interfaces. Their representations are technology agnostic software objects. IOC has attributes that represents the various properties of the class of objects. Furthermore, IOC can support operations providing network management services invocable on demand for that class of objects. An IOC may support notifications that report event occurrences relevant for that class of objects. It is modelled using the stereotype "Class" in the UML meta-model.

The term "Managed Object" or "MO" at least in some examples refers to an instance of a Managed Object Class (MOC) representing the management aspects of a network resource. Its representation is a technology specific software object. In some examples, an MO is called an "MO instance" or "MOI". Additionally or alternatively, the term "Managed Object" or "MO" at least in some examples refers to a class of technology specific software objects. In some examples, an MOC is the same as an IOC except that the former is defined in technology specific terms and the latter is defined in technology agnostic terms. MOCs are used/defined in SS level specifications. In some examples, IOCs are used/defined in IS level specifications.

The term "Management Information Base" or "MIB" at least in some examples refers to an instance of an NRM and has some values on the defined attributes and associations specific for that instance. In some examples, an MIB includes a name space (describing the MO containment hierarchy in the MIB through Distinguished Names), a number of MOs with their attributes, and a number of associations between the MOs.

The term "name space" at least in some examples refers to a collection of names. In some examples, a name space is restricted to a hierarchical containment structure, including its simplest form - the one-level, flat name space. In some examples, all MOs in an MIB are included in the corresponding name space and the MIB/name space shall only support a strict hierarchical containment structure (with one root object). An MO that contains another is said to be the superior (parent); the contained MO is referred to as the subordinate (child). The parent of all MOs in a single name space is called a Local Root. The ultimate parent of all MOs of all managed systems is called the Global Root.

The term "network resource" at least in some examples refers to a discrete entity represented by an IOC for the purpose of network and service management. In some examples, a network resource may represent intelligence, information, hardware and/or software of a telecommunication network.

The term "Network Resource Model" or "NRM" at least in some examples refers to a collection of IOCs, inclusive of their associations, attributes and operations, representing a set of network resources under management.

The term "self-organizing network" or "SON" at least in some examples refers to a type of network architecture or system that is designed to automate the planning, configuration, optimization, and/or healing processes of a wireless network with little or no direct human intervention (see e.g., 3GPP TS 28.313 v18.2.0 (2023-06-22), 3GPP TS 28.627 v17.0.0 (2022-03-31), 3GPP TS 28.628 v17.0.0 (2022-03-31), 3GPP TS 32.500 v17.0.0 (2022-04-04), 3GPP TS 32.522 v11.7.0 (2013-09-20), 3GPP TS 32.541 v17.0.0 (2022-04-05), and 3GPP TS 32.551 v17.0.0 (2022-04-05)).

The term "performance indicator" at least in some examples refers to performance data aggregated over a group of NFs that is derived from performance measurements collected at the NFs that belong to the group. In some examples, performance indicators are derived, collected or aggregated according to an aggregation method identified in a performance indicator definition.

The term "datagram" at least in some examples at least in some examples refers to a basic transfer unit associated with a packet-switched network; a datagram may be structured to have header and payload sections. The term "datagram" at least in some examples may be synonymous with any of the following terms, even though they may refer to different aspects: "data unit", a "protocol data unit" or "PDU", a "service data unit" or "SDU", "frame", "packet", a "network packet", "segment", "block", "cell", "chunk", "Type Length Value" or "TLV", and/or the like. Examples of datagrams, network packets, and the like, include internet protocol (IP) packet, Internet Control Message Protocol (ICMP) packet, UDP packet, TCP packet, SCTP packet, ICMP packet, Ethernet frame, RRC messages/packets, SDAP PDU, SDAP SDU, PDCP PDU, PDCP SDU, MAC PDU, MAC SDU, BAP PDU. BAP SDU, RLC PDU, RLC SDU, WiFi frames as discussed in a [IEEE802] protocol/standard (e.g., [IEEE80211] or the like), Type Length Value (TLV), and/or other like data structures. The term "packet" at least in some examples refers to an information unit identified by a label at layer 3 of the OSI reference model. In some examples, a "packet" may also be referred to as a "network protocol data unit" or "NPDU".The term "protocol data unit" at least in some examples refers to a unit of data specified in an (N)-protocol layer and consisting of (N)-protocol control information and possibly (N)-user data.

The term "type length value", "tag length value", or "TLV" at least in some examples refers to an encoding scheme used for informational elements in a protocol; TLVs are sometimes used to encode additional or optional information elements in a protocol. In some examples, a TLV-encoded data stream contains code related to the type of value, the length of the value, and the value itself. In some examples, the type in a TLV includes a binary and/or alphanumeric code, which indicates the kind of field that this part of the message represents; the length in a TLV includes a size of the value field (e.g., in bytes); and the value in a TLV includes a variable-sized series of bytes which contains data for this part of the message.

The term "authorization" at least in some examples refers to a prescription that a particular behavior shall not be prevented.

The term "authentication" at least in some embodiments refers to a process of proving or verifying an identity. Additionally or alternatively, the term "authentication" at least in some embodiments refers to a mechanism by which a computer system checks or verifies that a user or entity is really the user or entity being claimed. Examples of the authentication and/or authorization techniques include using API keys, basic access authentication ("Basic Auth"), Open Authorization (OAuth), hash-based message authentication codes (HMAC), Kerberos protocol, OpenID, WebID, and/or other authentication and/or authorization techniques.

The term "cryptographic mechanism" at least in some examples refers to any cryptographic protocol and/or cryptographic algorithm. Examples of cryptographic mechanisms include a cryptographic hash algorithm, such as a function in the Secure Hash Algorithm (SHA) 2 set of cryptographic hash algorithms (e.g., SHA-226, SHA-256, SHA-512, and the like), SHA 3, and so forth, or any type of keyed or unkeyed cryptographic hash function and/or any other function discussed herein; an elliptic curve cryptographic (ECC) algorithm (e.g., Elliptic Curve cryptography Key Agreement algorithm (ECKA) algorithm,Elliptic Curve cryptography Digital Signature Algorithm (ECDSA), Lenstra elliptic-curve factorization or elliptic-curve factorization method (ECM), Menezes-Qu-Vanstone (MQV) or elliptic curve MQV (ECMQV), Elliptic Curve Diffie-Hellman (ECDH) key agreement, Elliptic Curve Integrated Encryption Scheme (ECIES) or Elliptic Curve Augmented Encryption Scheme, Edwards-curve Digital Signature Algorithm (EdDSA), and/or the like); Rivest-Shamir-Adleman (RSA) cryptography; Merkle signature scheme, advanced encryption system (AES) algorithm; a triple data encryption algorithm (3DES); Quantum cryptography algorithms; and/or the like. Additionally or alternatively, the term "cryptographic protocol" at least in some examples refers to a sequence of steps precisely specifying the actions required of two or more entities to achieve specific security objectives (e.g., cryptographic protocol for key agreement). Additionally or alternatively, the term "cryptographic algorithm" at least in some examples refers to an algorithm specifying the steps followed by a single entity to achieve specific security objectives (e.g., cryptographic algorithm for symmetric key encryption).

The term "cryptographic hash function", "hash function", or "hash") at least in some examples refers to a mathematical algorithm that maps data of arbitrary size (sometimes referred to as a "message") to a bit array of a fixed size (sometimes referred to as a "hash value", "hash", or "message digest"). A cryptographic hash function is usually a one-way function, which is a function that is practically infeasible to invert.

The term "cryptographic key" or "key"in cryptography at least in some examples refers to a piece of information, usually a string of numbers or letters that are stored in a file, which, when processed through a cryptographic algorithm can encode or decode cryptographic data. The term "symmetric-key algorithm" at least in some examples refers to a cryptographic algorithm that uses the same cryptographic key for both the encryption of plaintext and the decryption of ciphertext; the keys may be identical, or there may be a simple transformation to go between the two keys.

The term "encryption" at least in some examples refers to a process of encoding information wherein the original representation of information (referred to as "plaintext") into an alternative form (referred to as "ciphertext"). In some examples, an encryption scheme includes use of a pseudo-random encryption key generated by a cryptographic mechanism or some other algorithm to generate an encryption key, which can be used to encrypt and/or decrypt the plaintext.

The term "artificial intelligence" or "AI" at least in some examples refers to any intelligence demonstrated by machines, in contrast to the natural intelligence displayed by humans and other animals. Additionally or alternatively, the term "artificial intelligence" or "AI" at least in some examples refers to the study of "intelligent agents" and/or any device that perceives its environment and takes actions that maximize its chance of successfully achieving a goal.

The terms "artificial neural network", "neural network", or "NN" refer to an ML technique comprising a collection of connected artificial neurons or nodes that (loosely) model neurons in a biological brain that can transmit signals to other arterial neurons or nodes, where connections (or edges) between the artificial neurons or nodes are (loosely) modeled on synapses of a biological brain. The artificial neurons and edges typically have a weight that adjusts as learning proceeds. The weight increases or decreases the strength of the signal at a connection. Neurons may have a threshold such that a signal is sent only if the aggregate signal crosses that threshold. The artificial neurons can be aggregated or grouped into one or more layers where different layers may perform different transformations on their inputs. Signals travel from the first layer (the input layer), to the last layer (the output layer), possibly after traversing the layers multiple times. NNs are usually used for supervised learning, but can be used for unsupervised learning as well. Examples of NNs include deep NN (DNN), feed forward NN (FFN), deep FNN (DFF), convolutional NN (CNN), deep CNN (DCN), deconvolutional NN (DNN), a deep belief NN, a perception NN, recurrent NN (RNN) (e.g., including Long Short Term Memory (LSTM) algorithm, gated recurrent unit (GRU), echo state network (ESN), and the like), spiking NN (SNN), deep stacking network (DSN), Markov chain, perception NN, generative adversarial network (GAN), transformers, stochastic NNs (e.g., Bayesian Network (BN), Bayesian belief network (BBN), a Bayesian NN (BNN), Deep BNN (DBNN), Dynamic BN (DBN), probabilistic graphical model (PGM), Boltzmann machine, restricted Boltzmann machine (RBM), Hopfield network or Hopfield NN, convolutional deep belief network (CDBN), and the like), Linear Dynamical System (LDS), Switching LDS (SLDS), Optical NNs (ONNs), an NN for reinforcement learning (RL) and/or deep RL (DRL), and/or the like.

The term "machine learning" or "ML" at least in some examples refers to the use of computer systems to optimize a performance criterion using example (training) data and/or past experience. ML involves using algorithms to perform specific task(s) without using explicit instructions to perform the specific task(s), and/or relying on patterns, predictions, and/or inferences. ML uses statistics to build ML model(s) (also referred to as "models") in order to make predictions or decisions based on sample data (e.g., training data).

The term "machine learning model" or "ML model" at least in some examples refers to an application, program, process, algorithm, and/or function that is capable of making predictions, inferences, or decisions based on an input data set and/or is capable of detecting patterns based on an input data set. In some examples, a "machine learning model" or "ML model" is trained on a training data to detect patterns and/or make predictions, inferences, and/or decisions. In some examples, a "machine learning model" or "ML model" is based on a mathematical and/or statistical model. For purposes of the present disclosure, the terms "ML model", "AI model", "AI/ML model", and the like may be used interchangeably. The term "mathematical model" at least in some examples refer to a system of postulates, data, and inferences presented as a mathematical description of an entity or state of affairs including governing equations, assumptions, and constraints. The term "statistical model" at least in some examples refers to a mathematical model that embodies a set of statistical assumptions concerning the generation of sample data and/or similar data from a population; in some examples, a "statistical model" represents a data-generating process.

Although many of the previous examples are provided with use of specific cellular / mobile network terminology, including with the use of 4G/5G 3GPP network components (or expected terahertz-based 6G/6G+ technologies), it will be understood these examples may be applied to many other deployments of wide area and local wireless networks, as well as the integration of wired networks (including optical networks and associated fibers, transceivers, and/or the like). Furthermore, various standards (e.g, 3GPP, ETSI, and/or the like) may define various message formats, PDUs, containers, frames, and/or the like, as comprising a sequence of optional or mandatory data elements (DEs), data frames (DFs), information elements (IEs), and/or the like. However, it should be understood that the requirements of any particular standard should not limit the examples discussed herein, and as such, any combination of containers, frames, DFs, DEs, IEs, values, actions, and/or features are possible in various examples, including any combination of containers, DFs, DEs, values, actions, and/or features that are strictly required to be followed in order to conform to such standards or any combination of containers, frames, DFs, DEs, IEs, values, actions, and/or features strongly recommended and/or used with or in the presence/absence of optional elements.

Aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

## Claims

1. One or more computer readable media comprising instructions, wherein execution of the instructions by processor circuitry of a distributed unit, DU, of a disaggregated radio access network, RAN, is to cause the processor circuitry to:

determine a continuity boundary representative of a number of consecutive physical resource blocks and a number of consecutive OFDM symbols not exceeding a slot boundary;
instruct the DU to send information representing the continuity boundary to a radio unit, RU, of the disaggregated RAN;
perform a channel estimation based on a demodulation reference signal, DMRS, received from the RU via a fronthaul interface within the continuity boundary.

2. The one or more computer readable media of claim 1, wherein execution of the instructions is to cause the processor circuitry to apply a filtering to the DMRS using a single set of filter coefficients within the continuity boundary and perform the channel estimation after the application of the filtering.

3. The one or more computer readable media of claim 1 or claim 2, wherein the information representing the continuity boundary comprises a predetermined processing continuity boundary and sent to the RU via an M-plane interface.

4. The one or more computer readable media of claim 1 or claim 2, wherein execution of the instructions is to cause the processor circuitry to instruct the DU to indicate the continuity boundary dynamically to the RU via a C-plane interface.

5. The one or more computer readable media of any one of claims 1 to 4, wherein execution of the instructions is to cause the processor circuitry to receive capability information from the RU representing one or more processing continuity boundaries capabilities supported by the RU, wherein the continuity boundary is determined based on the one or more processing continuity boundaries capabilities supported by the RU.

6. The one or more computer readable media of any one of claims 5, wherein the one or more processing continuity boundaries capabilities includes one or more time frequency continuity boundary options supported by the RU.

7. The one or more computer readable media of claim 6, wherein the information representing the continuity boundary further comprises an indication of a request for a port reduced DMRS transfer.

8. The one or more computer readable media of any one of claims 1 to 7, wherein a received communication signal including the DMRS comprises a plurality of consecutive physical resource blocks and a plurality of consecutive OFDM symbols; wherein execution of the instructions is to cause the processor circuitry to apply a first single set of filter coefficients to a first set of consecutive physical blocks of the plurality of consecutive physical resource blocks and to a first set of consecutive OFDM symbols of the plurality of consecutive symbols residing within the continuity boundary and apply a second single set of filter coefficients to a second set of consecutive physical blocks of the plurality of consecutive physical resource blocks and to a second set of consecutive OFDM symbols of the plurality of consecutive symbols within the continuity boundary.

9. The one or more computer readable media of any one of claims 1 to 8, wherein execution of the instructions is to cause the processor circuitry to: determine a residual timing offset from the DMRS received from the RU; and perform the channel estimation based on the determined residual timing offset.

10. The one or more computer readable media of any one of claims 1 to 9, wherein execution of the instructions is to cause the processor circuitry to: determine a residual frequency offset from the DMRS received from the RU; and perform the channel estimation based on the determined residual frequency offset.

11. One or more computer readable media comprising instructions, wherein execution of the instructions by processor circuitry of a radio unit, RU, of a disaggregated radio access network, RAN, is to cause the processor circuitry to:

determine a continuity boundary representative of a set of consecutive physical resource blocks and a set of consecutive OFDM symbols based on information received from a DU of the disaggregated radio access network;
apply a demodulation reference signal, DMRS, based beamforming based on the continuity boundary to obtain a beamformed signal comprising a port reduced DMRS;
instruct the RU to send the port reduced DMRS to the DU via a fronthaul interface.

12. The one or more computer readable media of claim 11, wherein execution of the instructions is to cause the processor circuitry to send capability information representing one or more processing continuity boundaries capabilities supported by the RU to the DU.

13. The one or more computer readable media of any one of claims 12, wherein the one or more processing continuity boundaries capabilities includes one or more time frequency continuity boundary options supported by the RU.

**14.** The one or more computer readable media of any one of claims 11 to 13, wherein the DMRS based beamforming comprises a DMRS based beamforming with equalization or a DMRS based beamforming without equalization.

**15.** The one or more computer readable media of any one of claims 11 to 14, wherein execution of the instructions is to cause the processor circuitry to determine beamforming weights according to the information and apply the beamforming weights to a DMRS and PUSCH according to the information.

Figure 1

Figure 2

Figure 3

Figure 4

TO/FO tracking/UE

TO/FO per UE (optional)

apriori- TO/FO per UE

DMRS channel estimation

TO/FO estimation

SRS (non port reduced)
PUSCH DMRS (port reduced)

DMRS-BF-NEQ

SRS extraction

$\longleftarrow$ O-DU $\longrightarrow$ $\longleftarrow$ FH $\longrightarrow$ $\longleftarrow$ O-RU $\longrightarrow$

## Figure 5

$\longleftarrow$ O-RU $\longrightarrow$ $\longleftarrow$ O-DU $\longrightarrow$

FFT 64Rx

BFW calc:

$W_{8\times64} = HR_{64x64}^{-1}$

$R_{64x64} = E\{nn^H\}$

Apply BF

8 streams

8 Rx CE

$R'_{I+N}$

MIMO detection

## Figure 6

Figure 7

|  | RB0 | RB1 | RB2 | RB3 | RB4 | RB5 | RB6 | RB7 |  |
|---|---|---|---|---|---|---|---|---|---|
| symbol 0 | Data |  |  |  |  |  |  |  |  |
| symbol 1 |  |  |  |  |  |  |  |  |  |
| symbol 2 |  |  |  |  |  |  |  |  |  |
| symbol 3 | DMRS1 |  |  |  |  |  |  |  | DMRS1: data symbol scope |
| symbol 4 |  |  |  |  |  |  |  |  |  |
| symbol 5 |  |  |  |  |  |  |  |  |  |
| symbol 6 |  |  |  |  |  |  |  |  |  |
| symbol 7 |  |  |  |  |  |  |  |  |  |
| symbol 8 |  |  |  |  |  |  |  |  |  |
| symbol 9 |  |  |  |  |  |  |  |  |  |
| symbol 10 | DMRS2 |  |  |  |  |  |  |  | DMRS2: data symbol scope |
| symbol 11 |  |  |  |  |  |  |  |  |  |
| symbol 12 |  |  |  |  |  |  |  |  |  |
| symbol 13 |  |  |  |  |  |  |  |  |  |
| | R0 | | R1 | | R2 | | R3 | | R at 2RB granularity (2 RB continuity) |
| | H(0:11) | H(12:23) | H(24:35) | H(36:47) | H(48:59) | H(60:71) | H(72:83) | H(84:95) | CE at SC granularity (8 RB continuity) |
| | W0(0:23) | | W1(0:23) | | W2(0:23) | | W3(0:23) | | BF weights SC granularity (2 RB continuity) |

EP 4 554 131 A1

70

Figure 8

Figure 9

Figure 10

Figure 11

Figure 12

Figure 13

EP 4 554 131 A1

1402

1400a

Edge Compute
Node 1436

RU 1430   NGFI-I   DU 1431   NGFI-II   CU 1432   Backhaul   CN 1442

1402

1400b

Edge Compute
Node(s) 1436

RU 1430

| RANF 1 | RANF 2 | ● ● ● | RANF N | CN NF(s) 1-x |

Disaggregated RAN

1400c

DL direction

RRC → PDCP → High-RLC → Low-RLC → High-MAC → Low-MAC → High-PHY → Low-PHY → RF

Data

Option 1   Option 2   Option 3   Option 4   Option 5   Option 6   Option 7   Option 8

RRC ← PDCP ← High-RLC ← Low-RLC ← High-MAC ← Low-MAC ← High-PHY ← Low-PHY ← RF

Data

UL direction

Figure 14

Figure 15

Figure 16

Figure 17

EP 4 554 131 A1

Figure 18

EP 4 554 131 A1

Figure 19

EP 4 554 131 A1

**EUROPEAN SEARCH REPORT**

Europäisches Patentamt
European Patent Office
Office européen des brevets

| | | Application Number |
|---|---|---|
| | | EP 24 21 1777 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/275784 A1 (SAYED HASSAN MOHAMAD [FR] ET AL) 31 August 2023 (2023-08-31) <br> * abstract * <br> * paragraphs [0006] - [0014] * <br> * paragraphs [0102] - [0215] * <br> * paragraphs [0217], [0235], [0258] - [0259] * <br> * paragraphs [0263], [0264] * <br> * figures 6-13 * | 1-15 | INV. <br> H04L5/00 <br> H04L27/26 |
| X | WO 2023/211323 A1 (ERICSSON TELEFON AB L M [SE]) 2 November 2023 (2023-11-02) <br> * abstract * <br> * paragraphs [0051] - [0079] * <br> * figures 5-10 * | 1-15 | |
| A | US 2023/155864 A1 (ABDOLI JAVAD [US] ET AL) 18 May 2023 (2023-05-18) <br> * abstract * <br> * paragraphs [0143] - [0280] * <br> * figures 3A-8C * | 1-15 | |
| | | | **TECHNICAL FIELDS SEARCHED (IPC)** <br><br> H04L |

The present search report has been drawn up for all claims

| Place of search | Date of completion of the search | Examiner |
|---|---|---|
| The Hague | 18 March 2025 | Tromparent, Marie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 1777

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2025

| Patent document cited in search report | Publication date | Patent family member(s) | Publication date |
|---|---|---|---|
| US 2023275784 A1 | 31-08-2023 | NONE | |
| WO 2023211323 A1 | 02-11-2023 | EP 4515723 A1 | 05-03-2025 |
| | | WO 2023211323 A1 | 02-11-2023 |
| US 2023155864 A1 | 18-05-2023 | EP 4152639 A1 | 22-03-2023 |
| | | US 2023155864 A1 | 18-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- OSM Release FIVE Technical Overview. **ISRAEL et al.** ETSI OPEN SOURCE MANO, OSM White Paper. January 2019
- E2E Network Slicing Architecture. *GSMA, Official Doc. NG.127*, 03 June 2021, vol. 1.0, https://www. gsma.com/newsroom/wp-content/uploads//NG.127-v1.0-2.pdf
- Open Network Automation Platform (ONAP) documentation. *Release Istanbul*, 17 February 2022, vol. 9.0.1, https://docs.onap.org/en/latest/index.html ("[ONAP)
- O-RAN Working Group 1 (Use Cases and Overall Architecture): O-RAN Architecture Description. *O-RAN ALLIANCE WG1, O-RAN Architecture Description v10.00, R003*, October 2023
- O-RAN Working Group 1 Slicing Architecture. *O-RAN ALLIANCE WG1, Slicing Architecture Technical Specification v11.00, R003*, October 2023
- O-RAN Working Group 1 Use Cases Detailed Specification Architecture. *v12.00, R003*, October 2023
- O-RAN Working Group 2 (Non-RT RIC and A1 interface WG) A1 interface: Application Protocol,. *v04.00, R003*, March 2023
- O-RAN Working Group 2 (Non-RT RIC and A1 interface WG) A1 interface: General Aspects and Principles,. *v03.01, R003*, March 2023
- O-RAN Working Group 2 (Non-RT RIC and A1 interface WG) A1 interface: Type Definitions. *v06.00, R003*, October 2023
- O-RAN Working Group 2 (Non-RT RIC and A1 interface WG) A1 interface: Transport Protocol. *v03.0, R003*, October 2023
- O-RAN Working Group 2 AI/ML workflow description and requirements. *v01.03 O-RAN ALLIANCE WG2*, October 2021
- ; O-RAN Working Group 2 (Non-RT RIC and A1 interface WG): R1 interface: General Aspects and Principles. *v06.00, R003*, October 2023
- O-RAN Working Group 2 (Non-RT RIC and A1 interface WG): R1 interface: Use Cases and Requirements,. *v05.00, R003*, October 2023
- O-RAN Working Group 2 (Non-RT RIC and A1 interface WG) Non-RT RIC Architecture. *v04.00, R003*, October 2023
- O-RAN Working Group 2 (Non-RT RIC and A1 interface WG): Use Cases and Requirements,. *v08.00, R003*, October 2023
- O-RAN Working Group 3 Near-Real-time RAN Intelligent Controller Architecture & E2 General Aspects and Principles. *v04.01, R003*, October 2023
- O-RAN Working Group 3, Near-Real-time Intelligent Controller, E2 Application Protocol (E2AP). *v04.00, R003*, October 2023
- O-RAN Working Group 3 Near-Real-time Intelligent Controller E2 Service Model (E2SM). *v04.00, R003*, October 2023
- O-RAN Working Group 3 Near-Real-time Intelligent Controller E2 Service Model (E2SM) KPM. *v04.00, R003*, October 2023
- O-RAN Working Group 3 Near-Real-time Intelligent Controller E2 Service Model (E2SM). *Cell Configuration and Control, v02.00, R003*, October 2023
- O-RAN Working Group 3 Near-Real-time Intelligent Controller E2 Service Model (E2SM) RAN Function Network Interface (NI). *v01.00*, February 2020
- O-RAN Working Group 3 Near-Real-time Intelligent Controller E2 Service Model (E2SM) RAN Control. *v04.00, R003*, October 2023
- O-RAN Working Group 3 (Near-Real-time RAN Intelligent Controller and E2 Interface Working Group): Near-RT RIC Architecture. *v05.00, R003*, October 2023
- O-RAN Working Group 4 (Open Fronthaul Interfaces WG) Control, User and Synchronization Plane Specification. *v13.00, R003*, October 2023
- O-RAN Fronthaul Working Group 4 Cooperative Transport Interface Transport Control Plane Specification,. *v04.00, R003*, June 2023
- O-RAN Fronthaul Working Group 4 Cooperative Transport Interface Transport Management Procedures Specification,. *v04.00, R003*, June 2023
- O-RAN Working Group 4 (Open Fronthaul Interfaces WG) Management Plane Specification. *v13.00, R003*, October 2023
- O-RAN Alliance Working Group 5 (Open F1/W1/E1/X2/Xn interface Workgroup): O1 Interface specification for O-CU-UP and O-CU-CP. *v06.00, R003*, October 2023
- O-RAN Alliance Working Group 5 (Open F1/W1/E1/X2/Xn interface Workgroup): O1 Interface specification for O-DU. *v08.00, R003*, October 2023

- O-RAN Working Group 6, O2 Interface General Aspects and Principles. *v05.00, R003*, October 2023
- O-RAN Working Group 6 (Cloudification and Orchestration) Cloud Architecture and Deployment Scenarios for O-RAN Virtualized RAN. *v05.00*, October 2023
- O-RAN Working Group 6 (Cloudification and Orchestration Work Group): O-RAN Acceleration Abstraction Layer General Aspects and Principles,. *v07.00, R003*, October 2023
- O-RAN Working Group 6: O-Cloud Notification API Specification for Event Consumers,. *v03.00*, October 2022
- O-RAN White Box Hardware Working Group Hardware Reference Design Specification for Indoor Pico Cell with Fronthaul Split Option 6 v02.00. *O-RAN ALLIANCE WG7*, October 2021
- O-RAN WG7 Hardware Reference Design Specification for Indoor Picocell (FR1) with Split Architecture Option. *7-2 v03.00, O-RAN ALLIANCE WG7*, October 2021
- O-RAN WG7 Hardware Reference Design Specification for Indoor Picocell (FR1) with Split Architecture Option 8. *v03.00*, October 2021
- O-RAN White Box Hardware Working Group Hardware Reference Design Specification for Outdoor Micro Cell with Split Architecture Option 7.2 v04.00. *O-RAN ALLIANCE WG7*, June 2023
- O-RAN White Box Hardware Working Group Hardware Reference Design Specification for Outdoor Macrocell with Split Architecture Option 7.2,. *v03.00, R003*, June 2023
- O-RAN Open X-haul Transport Working Group Management interfaces for Transport Network Elements. *v07.00, R003*, October 2023
- O-RAN Open Transport Working Group 9 Xhaul Packet Switched Architectures and Solutions,. *v06.00, R003*, October 2023
- O-RAN Open X-haul Transport Working Group Synchronization Architecture and Solution Specification. *v04.00*, October 2023
- O-RAN Open Xhaul Transport WG9 WDM-based Fronthaul Transport,. *v03.00, R003*, March 2023
- O-RAN Operations and Maintenance Architecture. *v10.00, R003*, October 2023
- O-RAN Work Group 10 Topology Exposure and Inventory Management Services Use Cases and Requirement Specification. *v1.00, R003*, June 2023
- O-RAN Work Group 10 (OAM for O-RAN): O-RAN Operations and Maintenance Interface Specification,. *v11.00, R003*, October 2023
- O-RAN Work Group 10 (DAM for O-RAN): O-RAN Information Model and Data Models Specification v06.00. *R003*, October 2023

- **KANUGOVI et al.** Multi-Access Management Services (MAMS),. *INTERNET ENGINEERING TasK FORCE (IETF), Request for Comments (RFC) 8743*, March 2020
- **FORD et al.** TCP Extensions for Multipath Operation with Multiple Addresses,. *IETF RFC 8684*, March 2020
- **DE CONINCK et al.** Multipath Extensions for QUIC (MP-QUIC). *IETF DRAFT-DECONINCK-QUIC-MULTIPATH-07, IETA, QUIC Working Group*, 03 May 2021
- **ZHU et al.** User-Plane Protocols for Multiple Access Management Service,. *IETF DRAFT-ZHU-INTAREA-MAMS-USER-PROTOCOL-09, IETA, INTAREA*, 04 March 2020
- **ZHU et al.** Generic Multi-Access (GMA) Convergence Encapsulation Protocols,. *IETF RFC 9188*, February 2022
- **ZHU et al.** UDP-based Generic Multi-Access (GMA) Control Protocol,. *IETF DRAFT-ZHU-INTAREA-GMA-CONTROL-04*, 24 August 2023
- IEEE Standard for Radio over Ethernet Encapsulations and Mappings. *IEEE Standards Association, IEEE 1914.3-2018*, 05 October 2018
- **NASRALLAH et al.** Ultra-Low Latency (ULL) Networks: A Comprehensive Survey Covering the IEEE TSN Standard and Related ULL Research. *arXiv:1803.07673v1 [cs.NI*, 20 March 2018
- Operator Platform Telco Edge Requirements. Official Document OPG.02. GSM ASSOCIATION (GSMA), 14 April 2022
- IEEE Standardfor Ethernet,. *IEEE Std 802.3-2018*, 31 August 2018
- IEEE Standard for Local and Metropolitan Area Networks: Overview and Architecture. *IEEE Std 802-2014*, 30 June 2014, 1-74
- IEEE Standard for Information Technology--Telecommunications and Information Exchange between Systems - Local and Metropolitan Area Networks-- Specific Requirements - Part 11: Wireless LAN Medium Access Control (MAC) and Physical Layer (PHY) Specifications. *IEEE Std 802.11-2020*, 26 February 2021, 1-4379
- IEEE Standard for Low-Rate Wireless Networks,. *IEEE Std 802.15.4-2020*, 23 July 2020, 1-800
- IEEE Standardfor Local and metropolitan area networks - Part 15.6: Wireless Body Area Networks,. *IEEE Std 802.15.6-2012*, 29 February 2012, 1-271
- IEEE Standard for Information technology-- Local and metropolitan area networks-- Specific requirements-- Part 11: Wireless LAN Medium Access Control (MAC) and Physical Layer (PHY) Specifications Amendment 6: Wireless Access in Vehicular Environments,. *IEEE Std 802.11p-2010*, 15 July 2010, 1-51

- IEEE Guide for Wireless Access in Vehicular Environments (WAVE) Architecture. *, IEEE STANDARDS ASSOCIATION, IEEE 1609.0-2019*, 10 April 2019
- IEEE Standardfor Air Interface for Broadband Wireless Access Systems,. *IEEE Std 802.16-2017*, 02 March 2018, 1-2726
- IEEE Standardfor Local and metropolitan area networks--Part 15.7: Short-Range Optical Wireless Communications,. *IEEE Std 802.15.7-2018*, 23 April 2019, 1-407

- *3GPP TS 28.313 v18.2.0*, 22 June 2023
- *3GPP TS 28.627 v17.0.0*, 31 March 2022
- *3GPP TS 28.628 v17.0.0*, 31 March 2022
- *3GPP TS 32.500 v17.0.0*, 04 April 2022
- *3GPP TS 32.522 v11.7.0*, 20 September 2013
- *3GPP TS 32.541 v17.0.0*, 05 April 2022
- *3GPP TS 32.551 v17.0.0*, 05 April 2022